(19) **Europäisches Patentamt / European Patent Office / Office européen des brevets**

(11) **EP 4 273 760 A1**

(12) **EUROPEAN PATENT APPLICATION**

(43) Date of publication:
**08.11.2023 Bulletin 2023/45**

(51) International Patent Classification (IPC):
***G06N 10/60*** *(2022.01)*

(21) Application number: **22175562.2**

(52) Cooperative Patent Classification (CPC):
**G06N 10/60**

(22) Date of filing: **25.05.2022**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **03.05.2022 EP 22171491**

(71) Applicant: **Qu&CO R&D B.V.**
**1071 LE Amsterdam (NL)**

(72) Inventors:
• **Elfving, Vincent Emanuel**
  **1071 LE Amsterdam (NL)**
• **Varsamopoulos, Savvas**
  **1071 LE Amsterdam (NL)**
• **Philip, Evan**
  **1071 LE Amsterdam (NL)**

(74) Representative: **De Vries & Metman**
**Overschiestraat 180**
**1062 XK Amsterdam (NL)**

(54) **QUANTUM EXTREMAL LEARNING**

(57) Methods and systems are disclosed for determining a solution for an optimisation problem using a hybrid computer system, the hybrid computer system comprising a quantum computer system and a classical computer system, the method comprising: receiving or determining, by the classical computer system, a description of the optimisation problem, the description comprising a set of training data or enabling the classical computer system to determine the set of training data, the set of training data comprising input variables in an input space and associated observables; receiving or determining, by the classical computer system, one or more quantum circuits, the one or more quantum circuits defining gate operations to be executed by the quantum computer system, the one or more quantum circuits comprising a quantum feature map for encoding a value in the input space to a Hilbert space associated with the quantum computer system and a first parametric quantum circuit parametrised by a set of first parameters; determining, by the classical computer system, an optimised first parametric quantum circuit, the determination comprising execution, by the quantum computer system, of the gate operations defined by the one or more quantum circuits, acquisition of measurement data associated with an output state of the quantum computer system, and variation of at least one of the set of first parameters based on the measurement data and the set of training data; determining, using the quantum computer system, an optimised input value in the input space, the determination comprising execution, by the quantum computer system, of gate operations defined by the optimised first parametric quantum circuit or a derivative thereof and acquisition of measurement data associated with an output state of the quantum computer system; and determining, by the classical computer system, the solution to the optimisation problem based on the optimised input value and/or an output value corresponding to that optimised input value.

Fig. 3

302 — Input data
pairs input-output values $\{(x_i, f(x_i))\}$

304 — Train cost circuit $\hat{U}_\theta$
- apply feature map $\hat{U}_x$ encoded by input variables to register
- apply cost circuit $\hat{U}_\theta$ to output of feature map
- measure observable, e.g., expectation value or overlap
- compare observable with output value via loss function
- use classical optimiser to optimise $\theta \to \theta_{opt}$

306 — Freeze cost circuit: $\hat{U}_\theta = \hat{U}_{\theta_{opt}}$

308 — Replace feature map $\hat{U}_x$ by extremiser circuit $\hat{U}_\varphi$

310 — Train extremiser circuit $\hat{U}_\varphi$
- apply extremiser circuit to initialised register
- apply optimised cost circuit $\hat{U}_{\theta_{opt}}$
- measure observable, e.g., expectation value or overlap
- use classical optimiser to optimise $\varphi \to \varphi_{opt}$

316 — Optimise input $x$
- apply circuit differentiation with respect to input variable: $\frac{d}{dx}\hat{U}_{\theta_{opt}}(\hat{U}_x(x))$
- measure observable, e.g., expectation value or overlap
- extremise input using classical extremiser $x \to x_{opt}$

312 — Freeze extremiser circuit: $\hat{U}_\varphi = \hat{U}_{\varphi_{opt}}$

314 — Sample extremiser circuit $\hat{U}_{\varphi_{opt}}$
- measure output in appropriate basis
- map result to input space

EP 4 273 760 A1

**Description**

Technical field

The disclosure relates to estimating a solution to an optimisation problem, and in particular, though not exclusively, to methods and systems for estimating a solution to an optimisation problem using a hybrid computer system, and to a computer program product enabling a hybrid computer system to perform such methods.

Background

Quantum computing is fundamentally different than classical computing. The quantum computer's structure gives access to quantum-mechanical properties such as superposition and entanglement which are not available to classical computers. For certain problems, quantum computers offer drastic computational speed-up, ranging from quadratic acceleration of searching unstructured data, to exponential improvements for factoring large numbers used in encryption applications. Using qubits and coherent superpositions of binary strings, quantum computers utilize quantum interference effects to amplify the correct solution, reached in fewer steps than classical computers ever can. Another promising application is machine learning, where a quantum computer benefits from access to an exponentially large feature space, enabling efficient modelling of highly complex problems.

However, many of these quantum computer algorithms have requirements that are not met by current and near-term device limitations, and therefore, their practical implementation is only a long-term goal. Current and near-term quantum computers are often referred to as Noisy, Intermediate-Scale Quantum computers (NISQ). This is due to the limitation in number of qubits in these devices and the lack of error correction to deal with noise. As the noise scales with the depth of quantum circuits, this, in turn, limits the effectively available depth of quantum circuits. Finding useful applications for such devices is an area of active research so that the advantages of quantum computation can be utilised now or near-term, rather than waiting for hardware developments.

Algorithms for NISQ devices are designed with these limitations in mind, and typically seek to avoid and/or mitigate them. Often, these algorithms make use of a hybrid structure, i.e., splitting computation between classical and quantum systems. This way, the part that is hard for classical computers can be computed with the quantum computer, gaining access to the benefits of quantum computations, whilst the remaining computations are executed by a classical device. This restricts the work implemented on the quantum computer and therefore poses lower requirements on the quantum computer.

One class of algorithms that are often implemented on these hybrid computers are variational methods. For these methods, the problem to be solved is typically formulated as an optimisation problem. The solution of the problem requires optimising a trial function, which in these methods includes measurements of parametrised quantum circuits (i.e., circuits which include quantum gates with adjustable parameters). A classical optimiser is used to optimise the parameters of these circuits for the problem considered, but quantum computations are required for each optimisation step. An example of a hybrid variational algorithm is quantum circuit learning, as described in US 2020/0394550 A1.

Optimisation problems are ubiquitous in engineering, science and mathematics. In its simplest form, an optimisation problem searches for the best element according to some criterion among many candidates, possibly in the presence of some constraints. Typically, the optimisation occurs by extremizing (i.e., minimizing or maximizing) a real-valued function (the cost function) by selecting elements from an available set of inputs and computing the value of the function for the selected combination of elements.

Optimisation problems can be divided into different categories based on the type of input data, which in this disclosure will be referred to as combinatorial optimisation, regression, and mixed-type optimisation. Combinatorial optimisation problems typically deal with input that can be categorical or non-numerical, for example types of food such as apples or oranges. On the other hand, regression problems typically deal with numerical input, for example an amount such as 20 grams or 50 grams. These data types are sometimes referred to as discrete and continuous, respectively. Mixed-type optimisation problems combine different input data types.

Different methods may be used to solve these different kinds of problems. Numerical optimisation problems such as most regression problems can often be solved in an efficient manner using gradient-based methods. For non-numerical optimisation problems, including many combinatorial optimisation problems, a gradient cannot be meaningfully defined, and therefore other approaches are required. In principle, non-numerical (or discrete) variables can be converted to numerical (or continuous) variables, and vice versa, but this often leads to an unfeasibly large increase in the number of independent variables.

It is usually not feasible to test all possible input values or combinations thereof (a 'brute force' approach). This is particularly true for combinatorial optimisation problems. Typically, however, it is not required to find a global optimum, but it is sufficient to find a solution that with a high probability is a good approximation of a global optimum. That is, it is sufficient that the solution is 'good enough', and/or that the input space is reduced to such an extent that a brute force comparison of the remaining combinations becomes feasible.

In many cases, optimisation problems have aspects of both types, i.e., combinatorial optimisation and regression. For example, a problem may relate to optimising the nutritional value of a meal. The ingredients themselves are non-numerical, while the quantity of each ingredient is numerical. The constraints can be similarly mixed; for example, a non-numerical constraint can be the prohibition to combine more than one dairy-based ingredient, while a numerical constraint can be that the meal can be arranged for a maximum monetary cost.

In examples like this one, a machine learning method, e.g., a neural network, may be used to find a functional relationship between meal composition and net nutritional value based on a database of meals and nutritional values. Typically, the composition of the optimal meal (or at least a good meal) is more interesting than the functional relationship itself, but this information cannot be easily extracted from the neural network. In other words, it is non-trivial to optimise (extremise) the trained neural network.

One challenge of modelling optimisation is that it can be exponentially expensive in the number of variables of the system, if each can be adjusted independently. Furthermore, having only a small amount of elements (e.g., input-output pairs) of the system available during training can lead to sub-optimal training and poor model convergence. Although various modelling and optimisation schemes exist, especially on classical computers, such methods suffer from large computational overhead. Quantum computers, on the other hand, can potentially offer ways to speed up such calculations and various schemes have already been proposed.

In general, machine learning methods allow to obtain a prediction function of the form $y = f(\theta; x)$ that models the relationship between an independent variable (input) $x_i$ and a dependent variable (output) $y_i$, by optimising model parameters $\theta$. In the setting of optimisation, it is desirable to not only find this function $f$ that models data, but also the value of the independent variable $x$ that extremizes (maximizes/minimizes) the value of this function and hence the dependent variable. However, this information cannot be easily extracted from the neural network. If $f(\theta; x)$ were a well-behaved function (e.g., a very smooth invertible function defined on a convex domain), there are many known methods to find a solution. However, conventional techniques for finding the extrema of a function are not suitable for finding extrema in these cases, since machine learning is usually used in complex cases where the resulting function $f(\theta; x)$ does not meet the assumptions of the optimisation algorithms.

Patel et al., 'Extremal learning: extremizing the output of a neural network in regression problems', arXiv:2102.03626v1 describes a process of extremal learning in the context of classical neural network regression problems. Given a trained neural network $f(\theta, x)$, finding an extremizing input $x_{\text{ext}}$ is formulated as training of the neural network with respect to the input variable x. The parameters $\theta$ of the neural network are frozen while the input vector $x$ is promoted to a trainable variable. This method relies on the continuity of $f(\theta, x)$ as a function of $x$ and is hence unsuitable when $x$ is non-numerical, or otherwise noncontinuous. Moreover, being a fully classical algorithm, this algorithm is limited in the number of variables it can feasible handle.

Kitai et al., Designing metamaterials with quantum annealing and factorization machines', Physical Review Research 2 (2020), 013319 describe a method for selecting a metamaterial. A (classical) Factorization Machine is used to model a so-called acquisition function describing a figure-of-merit for the metamaterial. Subsequently, selection of a new material is formulated as a quadratic unconstrained binary optimisation (QUBO) problem, for which a solution is obtained using quantum annealing (QA). However, this method is only applicable to a limited set of problems. For example, quantum annealing is not programmable, and hence in practice very inflexible. Moreover, quantum annealing requires explicit knowledge of a specific problem Hamiltonian, and is therefore not suitable for problems where the model function is not known.

Hence, from the above, it follows that there is a need in the art for systems and methods that can solve both discrete and continuous extremal learning problems, preferably systems and methods employing the high-dimensional feature space of a quantum computer yet minimise the computations performed by the quantum computer.

Summary

It is an aim of embodiments in this disclosure to provide a system and method for estimating an extremal value of a quantum neural network that avoids, or at least reduces the drawbacks of the prior art. Embodiments are disclosed that estimate an extremal value of a discrete or continuous quantum circuit, for example a parametric quantum circuit such as a quantum neural network or a quantum kernel circuit.

In a first aspect, this disclosure relates to a method for determining a solution for an optimisation problem using a hybrid computer system. The hybrid computer system comprises a quantum computer system and a classical computer system. The method comprises receiving or determining a description of the optimisation problem. The description may comprise a set of training data or may enable the classical computer system to determine the set of training data. The set of training data may comprise input variables in an input space, e.g. a set $\{x_i \in \mathcal{X}\}$, and associated observables. The method further comprises receiving or determining one or more quantum circuits. The one or more quantum circuits may define gate operations which may be executed by the quantum computer system. The one or more quantum circuits comprise a quantum feature map for encoding a value in the input space to a Hilbert space associated with the quantum computer system and a first parametric quantum circuit parametrised by a set of first parameters, e.g. a set of parameters $\theta$. The method further comprises determining optimised first parameters, e.g. parameter values $\theta_{opt}$, for the first parametric quantum circuit. The determination of the optimised first parameter values may comprise execution of the gate operations defined by the one or more quantum circuits, acquisition of measurement data associated with an output state of the quantum computer system, and variation of at least one of the set of first parameters based on the measurement data and the set of training data. The method further comprises determining an optimised input value in the input space, e.g. a value $x_{opt} \in X$. The determination may comprise execution of gate operations defined by the first parametric quantum circuit using the optimised first parameters or a derivative thereof and acquisition of measurement data associated with an output state of the quantum computer system. The method further comprises determining the solution to the optimisation problem based on the optimised input value and/or an output value corresponding to that optimised input value.

Generally, the determination of a set of optimal first parameter values $\theta_{opt}$ can be considered a part of or equivalent to determining an optimised first parametric quantum circuit. As used herein, a parametric quantum circuit may refer to a quantum circuit whose gate operations depend on one or more parameter values, and/or to a quantum circuit that is associated with a parametrised loss or cost function. An example of the former is a quantum neural network, an example of the latter is a quantum kernel (where a plurality of kernel values is determined for each input value, and the weight of each kernel value is parametrised). The one or more quantum circuits may comprise a single quantum circuit, both encoding input variables into the Hilbert space and being parametrised by the set of first parameters $\theta = \{\theta_1, ..., \theta_k\}$. As the optimised input value typically corresponds to an extremum of the model function, the algorithms described in this disclosure may be referred to as Quantum Extremal Learning (QEL) algorithms.

This disclosure describes a method in which an (unknown) function $f$ is modelled by optimising (e.g., variationally optimising) model parameters $\theta$, after which a value of $x$ is determined that extremizes (i.e., maximizes or minimizes) $y = f(\theta; x)$ at least approximately once the optimised parameters $\theta$ have been fixed. Regression and optimization is performed without a classical intermediate state, in contrast to the various classical, quantum, and hybrid methods that are known to perform either (combinatorial) optimisation or regression. The known methods typically require at least a classical intermediate state, e.g., in the form of a classically formulated Hamiltonian. Furthermore, in contrast to known quantum algorithms that accept (exclusively) continuous or discrete variables as input, the present algorithm unifies these two types of input data using purely quantum steps.

An advantage of this method is that it is hardware agnostic (contrary to, e.g., quantum annealing methods), and may thus be implemented on any suitable (hybrid) quantum computer. Furthermore, there is no need to explicitly define or encode a problem Hamiltonian.

The present method comprises a Quantum Machine Learning (QML) method that is (variationally) trained to model data input-output relationships, wherein the input data is encoded using a quantum feature map. The algorithm is able to accept as input both discrete and continuous variables. In the case of continuous variables, the quantum feature map may be differentiable. The quantum feature map encoding the input data can then be (analytically) differentiated in order to find a coordinate that at least approximately extremizes the trained model. In the case of discrete variables, a second machine learning method, e.g., an optimiser Quantum Neural Network (QNN), is used to determine input that extremises the trained model; this can be interpreted as analogous to differentiating the quantum feature map. This optimiser QNN is placed in front of the original machine learning model, which now has finished its optimisation and keeps its optimised parameters $\theta_{opt}$ fixed during the optimisation of the optimiser QNN.

Thus, the present algorithm is a 'purely' quantum algorithm as opposed to a hybrid classical/quantum framework in the sense that each computation/optimisation step is purely quantum. Although a classical optimizer is used to find the optimal parameters for the parametrised quantum circuits, each step mapping an input to an output is completely quantum. In particular, there are no intermediate classical measurements between encoding of the input and cost function, which means that the quantum state is not collapsed until the final measurement of the qubits that are being sent to the classical computer. Moreover, it is an advantage of the described methods that modelling (regression) and optimisation is "bridged" without losing the ability to leverage quantum superposition.

Furthermore, a previously trained model is not required to determine the extremizing input. Using only quantum modules allows to speed up the training and computation, but also allows to solve problems that are considered intractable with classical frameworks. This results in a large freedom to model the problem. Moreover, the possibility to first train more general models for subsequent optimisation result in a more flexible algorithm than existing methods which assume certain model structures (such as the paper by Kitai *et al.*), and not be completely reliant to the input data that have been provided. Different limitations are present in the Quantum Circuit Learning (QCL) algorithm proposed in US 2020/0394550 A1, which can only handle continuous variables. Additionally, while modelling generalization is discussed from the perspective of using quantum feature map circuits, US 2020/0394550 A1 does not relate to determination of extremizing input.

In brief, the described quantum algorithm for extremal learning comprises a combination of quantum modules coupled, in various combinations, with no intermediate classical state. This way quantum superposition may be leveraged that cannot be obtained by separated modules (i.e., modules separated by a classical state). Furthermore, the method can be applied to both continuous and discrete input variables. Additionally, a pre-trained model is not required, as the algorithm learns a model based on the available data. Consequently, there is no need to translate a classical model to quantum Hamiltonian first. Finally, the measurement typically rely on the expectation value of observables rather than on quantum state tomography, which is important for NISQ applications.

The described method may thus be applied in a wide variety of optimisation problems, such as occur in computational chemistry and material science. Using the described methods, these optimisation problems can be solved with higher performance and higher speed compared to currently known methods.

In computational chemistry, ab-initio calculations on anything but the smallest molecules can be extremely computation-intensive. In addition, laboratory experiments take time and are costly. The chemical structure combinatorial space for a given molecule or material is exponentially large, even with constraints. Therefore, designing drugs through finding optimal structures cannot be done by an exhaustive search. With the methods described in this disclosure, a model can be constructed based on a limited training dataset of known structure-feature pairs, which can subsequently be searched to suggest optimal solutions.

In material science, structure exploration has been aided by recent classical computational techniques that provide a vast selection of candidates to explore. Based on the desired properties of the materials, the numbers of candidate solutions can be decreased and through an iterative process an optimal solution can be selected (automated materials discovery). However, this process is hindered by the difficulty of predicting the properties of materials with a limited number of training data and by the hardness of the global optimization problem of going from large amounts of candidate solutions to a few. With the methods described in this disclosure, a model can be constructed based on a limited training dataset and a few optimal candidate solutions can be provided, from which one can then search for the optimal one.

As was explained above, the present algorithm is a 'purely quantum' algorithm that can performs extremal learning with both continuous and discrete input variables. Extremal learning in the classical setting has only recently been proposed and no quantum implementation algorithm has been proposed in the art. Having an algorithm that comprises only quantum modules allows to leverage the speedup offered by quantum superposition. In addition, embodiments relying exclusively on expectation value measurements or wave function overlap measurements open up the possibility of applications during the NISQ-era, with current hardware limitations.

Furthermore, the present algorithms are able to find optimal solutions even in cases where the training dataset size is very small. This increases the number of potential applications, and/or offers a significant advantage by restricting the pool of candidates for an optimal solution. The general framework of quantum extremal learning allows for it to be applied to a wide variety of applications, like the computational chemistry and material science problems described above, and is robust enough to be used on NISQ devices.

In an embodiment, the input space comprises a continuous subspace. In such an embodiment, the quantum feature map may be differentiable with respect to the input variable. If that is the case, determining the optimised input value may comprise analytically differentiating the quantum feature map with respect to the input variable and execution, by the quantum computer system, of gate operations defined by the differentiated quantum feature map. This way, gradient-based methods, e.g. gradient-ascent or gradient-descent methods, may be used to efficiently determine the extremising input value. Nevertheless, in some cases, other options to determine the extremising input value may also be used.

In an embodiment, the input space comprises is not fully path-connected, e.g., comprises a discrete subspace. In such an embodiment, determining the optimised input value may comprise the classical computer system receiving or determining a second parametric quantum circuit parametrised by a set of second parameters, determining an optimised second parametric quantum circuit, and determining the optimised input value based on the optimised second parametric quantum circuit. The determination of the optimised second parametric quantum circuit may comprise execution, by the quantum computer system, of the gate operations defined by the second parametric quantum circuit and the optimised first parametric quantum circuit, acquisition of measurement data associated with an output state of the quantum computer system, and variation of at least one of the set of second parameters based on the measurement data and a loss function.

This way, an optimised input value, e.g., an extremal value, may be determined for an optimisation problem with a non-path-connected input space, e.g. a completely or partially discrete space. This may be used to solve, e.g., combinatorial optimisation problems where the model of the problem is unknown and determined as described above. These steps may also be used when the problem space comprises a discrete subspace.

The first parametric quantum circuit may comprise a variational circuit, e.g. a quantum neural network. In that case, determining optimised first parameters for the first parametric quantum circuit (optimising the first parametric quantum circuit) may comprise optimising the variational circuit, e.g. training the quantum neural network. Additionally or alternatively, the first parametric quantum circuit may comprise a quantum kernel circuit. In that case, determining optimised first parameters for the first parametric quantum circuit may comprise optimising kernel coefficients associated with the quantum kernel circuit.

In general, a parametric quantum circuit $f(\boldsymbol{x}; \theta)$, parametrised by a set of parameters $\theta$ typically maps an input variable $x \in X$ from an input space $X$ to the complex plane or a subspace thereof (often, the real numbers): $f : X \to \mathbb{C}$. The parametric quantum circuit may be referred to as a variational quantum circuit if its output is based on an expectation value of a quantum state, e.g., $f(\boldsymbol{x}; \theta) = \langle \psi_\theta(x) | \hat{\mathcal{M}} | \psi_\theta(x) \rangle$ for some observable $\hat{M}$, and may be referred to as a quantum kernel circuit if its output is based on an overlap of two quantum states, e.g. $f(\boldsymbol{x}; \boldsymbol{\theta}) = \theta_0 + \sum_i \theta_i \langle \psi(x) | \psi(x_i') \rangle$ for some set of fixed values $\{x_i' \in \mathcal{X}\}$.

A variational quantum circuit is typically optimised by varying the parameter $\theta$ and using gradient-based methods to determine optimal parameter values $\theta_{\text{opt}}$. A quantum kernel circuit may be similarly optimised using variational methods, or may be optimised by solving a system of linear equations. Both kinds of circuits can be combined, e.g., as a variational quantum kernel $f(\boldsymbol{x}; \boldsymbol{\theta}; \boldsymbol{a}) = a_0 + \sum_i a_i \langle \psi_\theta(x) | \psi_\theta(x_i') \rangle$. Here, for the sake of clarity, two distinct labels are used for two parts of the set of parameters $\{\theta, \alpha\}$, but these can, in general, be considered a single set of parameters.

In an embodiment, the optimisation problem comprises a differential equation, optionally a parametric differential equation. In such an embodiment, the determination of an optimised first parametric quantum circuit comprises determining a solution to the differential equation. Generally, the determination of the optimised first parametric quantum circuit comprises determining a set of optimal first parameter values $\{\theta_{\text{opt}}\}$. The solution to the differential equation is then represented by the one or more quantum circuits when parametrised by the set of optimal first parameter values $\{\theta_{\text{opt}}\}$.

Finding an extremal solution of a differential equation is not always straightforward, for example when the solution is strongly oscillatory. In such cases, quantum optimisation methods may be more efficient in finding an extremal solution than classical gradient-based methods, in particular for discrete variables. For example, in the case of parametric differential equations, finding an extremal solution may require combined optimisation of the (discrete) equation parameters and the (continuous) input values. The discrete optimisation can then be done using quantum optimisation. Furthermore, quantum algorithms can employ the large expressive power of quantum feature maps and parametrised quantum circuits that is unavailable to classical algorithms.

The determination of the optimised first parametric quantum circuit may comprise determining a respective output value for each of plurality of input values. This determination may comprise performing, by the classical computer system, the steps of translating the one or more quantum circuits into first control signals for controlling quantum elements of the quantum computer system, determining second control signals for readout of the quantum elements to obtain the measurement data, controlling the quantum computer system based on the first and second control signals, receiving, in response to the execution of the one or more quantum circuits, the measurement data, and processing the measurement data into the respective output value.

In an embodiment, the first control signals include a sequence of pulses and the second control signals include applying a read-out pulse to the quantum elements of the quantum computer system.

In an embodiment, the quantum computer system includes a gate-based qubit device, a digital/analog quantum device, a neutral-atom-based quantum device, an optical-qubit device and/or a gaussian-boson-sampling device.

In a further aspect, this disclosure relates to a hybrid computer system for determining a solution for an optimisation problem. The hybrid computer system comprises a quantum computer system and a classical computer system. The hybrid computer system is configured to perform executable operations, the executable operations comprising the steps of receiving or determining, by the classical computer system, a description of the optimisation problem, the description comprising a set of training data or enabling the classical computer system to determine the set of training data, the set of training data comprising input variables in an input space and associated observables; receiving or determining, by the classical computer system, one or more quantum circuits, the one or more quantum circuits defining gate operations to be executed by the quantum computer system, the one or more quantum circuits comprising a quantum feature map for encoding a value in the input space to a Hilbert space associated with the quantum computer system and a first parametric quantum circuit parametrised by a set of first parameters; determining, by the classical computer system, an optimised first parametric quantum circuit, the determination comprising execution, by the quantum computer system, of the gate operations defined by the one or more quantum circuits, acquisition of measurement data associated with an output state of the quantum computer system, and variation of at least one of the set of first parameters based on the measurement data and the set of training data; determining, using the quantum computer system, an optimised input value in the input space, the determination comprising execution, by the quantum computer system, of gate operations defined by the optimised first parametric quantum circuit or a derivative thereof and acquisition of measurement data associated with an output state of the quantum computer system; and determining, by the classical computer system, the solution to the optimisation problem based on the optimised input value and/or an output value corresponding to that optimised input value.

In further embodiments, the hybrid system may be configured to perform any of the method steps defined above. In particular, the executable operations may comprise any of the method steps defined above.

One aspect of this disclosure relates to a computer comprising a computer readable storage medium having computer readable program code embodied therewith, and a processor, for example a microprocessor, coupled to the computer readable storage medium, wherein responsive to executing the computer readable program code, the processor is configured to perform any of the methods described herein.

One aspect of this disclosure relates to a computer program or suite of computer programs comprising at least one software code portion or a computer program product storing at least one software code portion, the software code portion, when run on a computer system, being configured for executing any of the methods described herein.

One aspect of this disclosure relates to a non-transitory computer-readable storage medium storing at least one software code portion, the software code portion, when executed or processed by a computer, is configured to perform any of the methods described herein.

As will be appreciated by one skilled in the art, aspects of the present disclosure may be embodied as a system, method or computer program product. Accordingly, aspects of the present disclosure may take the form of an entirely hardware embodiment, an entirely software embodiment (including firmware, resident software, microcode, etc.) or an embodiment combining software and hardware aspects that may all generally be referred to herein as a "circuit," "module" or "system". Functions described in this disclosure may be implemented as an algorithm executed by a microprocessor of a computer. Furthermore, aspects of the present disclosure may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fibre, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fibre, cable, RF, etc., or any suitable combination of the foregoing. Computer program code for carrying out operations for aspects of the present embodiments may be written in any combination of one or more programming languages, including a functional or an object oriented programming language such as Java(TM), Scala, C++, Python or the like and conventional procedural programming languages, such as the "C" programming language or similar programming languages. The program code may execute entirely on the user's computer, partly on the user's computer, as a stand-alone software package, partly on the user's computer and partly on a remote computer, or entirely on the remote computer, server or virtualized server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present embodiments are described below with reference to flowchart illustrations and/or block diagrams of methods, apparatus (systems), and computer program products according to embodiments. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or central processing unit (CPU), or graphics processing unit (GPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of systems, methods and computer program products according to various embodiments. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

The embodiments will be further illustrated with reference to the attached schematic drawings. It will be understood that the disclosure is not in any way restricted to these specific embodiments. Identical reference signs refer to identical, or at least similar elements.

Brief description of the drawings

Fig. 1A and 1B illustrate different types of optimisation problems that can be solved using embodiments in this application;

Fig. 2 schematically depicts a flow diagram of a method determining a solution for an optimisation problem according to an embodiment;

Fig. 3 schematically depicts a flow diagram of a method determining a solution for an optimisation problem according to an embodiment;

Fig. 4 schematically depicts a flow diagram of a method determining a solution for an optimisation problem according to an embodiment;

Fig. 5A-H schematically depict quantum circuits for determining a solution for an optimisation problem according various embodiments.

Fig. 6A-6E depict quantum circuits according various embodiments;

Fig. 7A and 7B schematically depict a method for solving an optimisation problem using a quantum kernel according to an embodiment;

Fig. 8A-E schematically depict hardware-level schematics illustrating the application of logical operations to qubits using a quantum circuit;

Fig. 9 depicts an example of application of a method according to an embodiment to a continuous-variable case;

Fig. 10 depicts an example of application of a method according to an embodiment to a differential equation;

Fig. 11A-D depict examples of application of a method according to an embodiment to a discrete-variable case;

Fig. 12A-D depict further examples of application of a method according to an embodiment to a discrete-variable case; and

Fig. 13A and 13B are block diagrams illustrating, respectively, an exemplary hybrid data processing system and an exemplary classical data processing system that may be used for executing methods and software products described in this disclosure.

Detailed description

A method is presented to solve an optimisation problem, more in particular a so-called extremal learning problem. The present method assumes an unknown function $f:X \to \mathbb{R}$ that maps a discrete or continuous independent variable (input) $x \in X$ to an associated dependent variable (output) $y = f(x) \in \mathbb{R}$. Furthermore, one or more constraints on the unknown function are known, for example in the form of input-output pairs $\{x_i, y_i\}$, (differential) equations describing

the function, et cetera. These constraints, or data derived thereof, are used as training data for the algorithm. The goal of the method is to find $x_{opt} \in X$ such that $f(x_{opt})$ is an extremal value (a maximum or minimum) of $f(x)$. Depending on the problem, the solution can be the value $x_{opt}$, the value $f(x_{opt})$, or the combination of $x_{opt}$ and $f(x_{opt})$.

*Combinatorial Optimisation*

Combinatorial Optimisation (CO) refers to a set of problems where one is interested in finding an extremum of an objective function whose set of feasible solutions is extremely large, and whose input data are discrete or can be reduced to discrete data, often binary data. Typically, in combinatorial optimisation problems, a model of the data already exists and an evaluation of the objective function is inexpensive. However, exhaustively evaluating all possible inputs is usually a prohibitively time consuming process.

A generic formulation of combinatorial optimisation problems, known as Quadratic Unconstrained Binary Optimisation (QUBO), has been shown to be highly effective in modelling various combinatorial optimisation problems. Due to the structure of QUBO, there is no need for complicated penalty functions and approximate model representations. Furthermore, the QUBO model has been found to be equivalent to the physical Ising model, describing (binary) spin systems. This combines the good modelling of the classical data with the domain of problems typically found in physics applications, and provides an obvious translation to quantum systems.

In the classical realm, various methods to solve combinatorial optimisation problems are known. For example, greedy algorithms can heuristically make a locally optimal choice, which does not necessarily produce an optimal solution, but can provide an approximation of a globally optimal solution in a reasonable amount of time. In addition, several heuristic algorithms are known that are faster and more efficient compared to traditional methods, in expense of accuracy. These methods typically provide a good but not necessarily optimal solution. Furthermore, in some cases the problem may be relaxed from a non-convex to a convex problem that can typically be solved in polynomial time with many well-known algorithms, again at the cost of reduced accuracy.

Quantum speedups in discrete optimisation algorithms have been proven to exist on fault-tolerant implementations of quantum computers, which are not feasible using current technology. However, many experts believe that a quantum advantage over classical computing might also be achieved through variational quantum algorithms (VQAs) running on near-term quantum computers (NISQ). Variational quantum algorithms have already been applied in solving combinatorial optimisation problems with comparable performance to classical algorithms, making them a good target for near term quantum computing. When trying to solve combinatorial optimisation problems with quantum or quantum enhanced algorithms, the most common solutions involve Quantum Annealing (QA) methods or variational quantum algorithms like the Quantum Approximate Optimisation Algorithm (QAOA), as discussed below. In order to use such methods, the data should be described in the above-mentioned Quadratic Unconstraint Binary Optimisation (QUBO) format.

Quantum annealing is a model of quantum computation that is, in principle, well suited for discrete optimisation problems. It is based on finding a global minimum of a given objective function over a given set of candidate solutions, by a process using quantum fluctuations. Quantum annealing starts from a quantum-mechanical superposition of all possible states with equal weights, which can be easily prepared, for example, by the application of an Hadamard gate to all qubits. Then, the system is allowed to evolve following a time-dependent Schrödinger equation, which describes the quantum-mechanical evolution of physical systems. The amplitudes of all candidate states keep changing simultaneously, realizing a quantum parallelism. Due to the fact that the amplitude of any state can be enhanced at any moment, effects like quantum tunnelling between states can occur. The system evolves to a minimum energy state of an applied Hamiltonian, which corresponds to the optimal solution.

Another form of computation that is similar to quantum annealing is adiabatic quantum computing (AQC). In adiabatic quantum computing, the system is prepared in a ground state of an initial interaction Hamiltonian. This interaction Hamiltonian is slowly varied into a problem Hamiltonian encoding the optimisation problem. If the rate of change of the variation of the Hamiltonian is slow enough, the system will stay close to the ground state of the varying Hamiltonian, and end in the ground state of the problem Hamiltonian, which corresponds to the optimal solution of the problem. The problem Hamiltonian can correspond to an Ising model, for example. However, adiabatic quantum computing is sensitive to coherence decay and requires long computations times if the energy level of the ground state is close to that of one or more excited states.

Certain Variational Quantum Algorithms (VQAs), like the Quantum Approximate Optimisation Algorithm, are similarly inspired by quantum annealing methods. More accurately, the Quantum Approximate Optimisation Algorithm is a heuristic hybrid quantum/classical algorithm, that is specifically developed for approximately solving combinatorial optimisation problems. The Quantum Approximate Optimisation Algorithm requires a given number of repetitions (p) of different Ansätze that are applied during a classical optimisation process that determines the best parameters of the variational circuit. This results in a locally optimal solution. If a suitable Ansatz is chosen, the locally optimal solution is close to the global optimal solution with a known probability. When this value $p$ approaches infinity ($p \to \infty$), the Quantum Approximate Optimisation Algorithm is mathematically equivalent to Quantum Annealing, and a global optimum is obtained.

However, variational quantum algorithms are based on the so-called the gate-based model of quantum computation, which is a fundamentally different model of quantum computation than quantum annealing and adiabatic quantum computing, and uses different hardware. In the gate-based model, quantum circuits comprising quantum gates are used to perform the computation. This computational model is highly resilient to noise, and in particular substantially less sensitive to noise than quantum annealing and quantum adiabatic computing. As in the current Noisy intermediate-scale quantum (NISQ) era of quantum technology, noise is a major limitation to performing quantum computation, this is a major advantage.

The inputs to a variational quantum algorithm are:

  i) a cost function $C(\theta)$ with $\theta$ a set of parameters encoding the solution to the problem,
  ii) an Ansatz whose parameters are trained to minimize the cost function, and
  iii) (possibly) a set of training data $\rho_k$ used during the optimisation.

The Ansatz is a parametrised quantum circuit, which is analogous to a neural network (see below). At each iteration of the loop, a quantum computer is used to efficiently estimate the cost (or its gradients). This information is fed into a classical computer that leverages the power of (conventional) optimizers to navigate the cost landscape $C(\theta)$ and identify optimal parameters $\theta_{\mathbf{opt}}$ that will lead to finding an optimal solution. Once a termination condition is met, the VQA outputs an estimate of the solution to the problem].

As mentioned above, the Quantum Approximate Optimisation Algorithm (QAOA) is developed for use on a gate model quantum computer. In order to manipulate states on a gate model quantum computer, the Ising Hamiltonian of the optimisation problem, must be described by an operator. Since the measurement results of the operator (eigenvalues) correspond to the cost of the optimisation problem, the Pauli Z-operator $\sigma_z$ with $\sigma_Z = \begin{pmatrix} 1 & 0 \\ 0 & -1 \end{pmatrix}$ is typically used, whose eigenvalues ($\pm 1$) correspond to the positive and negative spin values of the Ising Hamiltonian. By replacing the spin variables with $\sigma_z$ and each higher order correlation term by $\sigma_z \otimes \sigma_z \otimes \dots \otimes \sigma_z$, the desired cost Hamiltonian $\hat{H}_c$ is obtained.

The variational form of QAOA first starts from a uniform superposition state of every possible solution. A trial state is prepared by evolving the system under the cost and an additional driver Hamiltonian. The driver Hamiltonian is used to explore the solution landscape. One possible implementation for the driver Hamiltonian is given by

$$\widehat{\mathcal{H}}_D = \frac{1}{2} \sum_{i=1}^{N} \sigma_X^i \tag{1}$$

where $\sigma_X = \begin{pmatrix} 0 & 1 \\ 1 & 0 \end{pmatrix}$ is the Pauli-X operator applied to each qubit $i$ in a register with $N$ qubits. Since this evolution is usually difficult to implement, it is approximated using the Trotter-Suzuki expansion. This approximation is achieved by repeated applications of the Trotterized cost and driver propagator:

$$|\beta, \gamma\rangle = V_P U_P \dots V_2 U_2 V_1 U_1 |\Psi\rangle \tag{2}$$

where $V_P = \exp(-i\gamma_p \hat{H}_c)$ is the cost propagator and $U_p = \exp(-i\beta_p \hat{H}_D)$ is the driver propagator. The cost Hamiltonian $\hat{H}c$ is evolved for some time $\gamma_p$, while the driver Hamiltonian $\hat{H}_D$ is evolved for some time $\beta_p$. The length $p$ of the alternating sequence determines the degree of approximation.

Within QAOA, the variational parameters $(\beta, \gamma)$ of the gates are used to prepare the trial state $|\Psi(\beta, \gamma)\rangle$ on the quantum processor by applying the alternating sequence of propagators. The state is then measured, and the result is used by a classical optimizer to find new parameters $(\beta, \gamma)$, with the goal of finding the ground-state energy of the cost Hamiltonian:

$$\min\langle \Psi(\beta, \gamma) | \widehat{\mathcal{H}}_C | \Psi(\beta, \gamma)\rangle \tag{3}$$

The ground state corresponds to the global optimum of the classical optimisation problem. This iterative process continues until the classical optimizer converges or a solution of acceptable quality is found.

For comparison, the same driver and cost Hamiltonians could be used in an adiabatic quantum annealing approach, for example applying a time-varying Hamiltonian $\hat{H}(t)$ of the form:

$$\hat{\mathcal{H}}(t) = \frac{t}{T}\,\hat{\mathcal{H}}_C + \left(1 - \frac{t}{T}\right)\hat{\mathcal{H}}_D \qquad\qquad (4)$$

where T is the total annealing time.

The most common combinatorial problem solved by either Quantum Annealing or Variational Quantum Algorithms is the so-called Max-Cut problem, which is an NP-complete problem. In a typical Max-Cut problem, the goal is to partition the features of the problem into two (or more) complementary sets (groups), such that the number of edges between the two (or more) partitions is as large as possible. The maximum cut refers to the fact that one can cut the edges that maximally separate the two partitions. The reason behind selecting Max-Cut as the target problem is that a large variety of combinatorial optimisation problems can be formulated as a Max-Cut problem, and quantum algorithms might be able to speed up the optimisation or reach a higher approximation ratio compared to classical algorithms, especially as the number of features in the problem increase.

Kitai *et al.* present an approach of solving Max-Cut problems with VQAs in which a classical Machine Learning model and a VQA are combined to create an algorithm that targets optimisation problems. The Machine Learning model that was used is a Factorization Machine (FM), which is typically used in recommendation systems. A recommendation system creates a trained model based on training data and then suggests new data that have the desired features according to past choices. The VQA that was used by Kitai *et al.* was Quantum Annealing, but it may be assumed the QAOA algorithm would work as well. In this algorithm, the classical Machine Learning is used to generate a model that can be used as input for the Variational Quantum Algorithm; without the pre-trained model based on the available training data, the VQA would not be able to solve the Max-Cut problem. Thus, there are four steps in this algorithm: classically training based on the available data, performing regression to find a target property with the FM, selection of the best suggested regression results with VQA, and evaluation of the VQA suggested results according to a Figure-Of-Merit (FOM).

By contrast, the methods described in this disclosure use a fully quantum approach, in which a quantum machine learning model is trained based on the available data, after which the best results are selected with a (potentially different) quantum machine learning model. Because there is not intermediate classical step, quantum advantage can be fully exploited.

The combination of formulating a model based on training data and finding (an approximation of) an optimal solution of the formulated model in an integrated approach, is also known as extremal learning. The problem of extremal learning itself was only recently proposed in the classical setting Patel *et al.* with classical Neural Networks (NNs). No quantum implementations of extremal learning are currently known.

*Regression*

Regression is a method for predicting a numerical (continuous) quantity. More in particular, regression is a set of statistical processes for estimating relationships between a dependent variable and one or more independent variables. It can be used for prediction and forecasting, and for understanding relationships between dependent and independent variables, for example.

One of the most prominent classical regressors in literature are Support Vector Machines (SVMs), which are considered to be one of the most robust algorithms for predicting purposes. A Support vector machine constructs a hyperplane or set of hyperplanes in a high- or infinite-dimensional space, focusing on achieving good separation by the hyperplane that has the largest distance to the nearest training-data point of any class, since in general the larger the margin, the lower the generalization error of the classifier. Support vector machine are a class of kernel methods. A kernel is an (often only implicitly defined) function that can be trained to express a similarity between two input values. Due to the generalization principle, SVMs have the potential to capture very large feature spaces.

Another classical regressor model is formed by so-called Neural Networks (NNs). Neural Networks are able to capture highly complex relationships between variables when the underlying dependence between these variables is unknown, making them very efficient in various applications. Deep Neural Networks (DNNs) have been applied to various regression problems to obtain a prediction function for unknown inputs.

A specific class of (deep) neural networks are the Generative Adversarial Networks (GANs), which perform generative machine learning, that is, learning to generate realistic data samples. Generative modelling for statistical optimisation in particular can be achieved with a combination of a generative and a discriminative approach. A generative model is a statistical model of the joint probability distribution $P(X, Y)$ of given observable variable $X$ and target variable Y, whereas a discriminative model is a model of the conditional probability $P(Y|X = x)$ of the target Y, given an observation x.

A GAN comprises two deep neural networks that compete with each other in an adversarial learning strategy. More accurately, two functions are being trained which are referred to as the generator, which learns a mapping from a latent space to a data distribution of interest and generates new samples based on the learned distribution, and the discriminator, which tries to distinguish whether a provided sample belongs to the actual data distribution or to the samples generated by the generator. The objective of the generator is to increase the error of the discriminator (i.e., generate sample that the discriminator cannot distinguish from real samples) and the objective of the discriminator is to successfully identify which candidates come from the actual distribution and which have been created by the generator. The main difference between GANs and other generative modelling techniques is that GANs are implicit generative models, which means that they do not explicitly model the likelihood function nor provide means for finding the latent variable corresponding to a given sample.

These models are limited to modelling a relationship between dependent and independent variables. However, finding an extremal value (minimum or maximum) of the model, and/or an input value resulting in the extremal value, can also be very interesting. This is something that has not been addressed so far in the classical or quantum literature, except in the recent (classical) paper of Patel *et al..* In this paper, the authors define a process called extremal learning, that finds the extremal value of a Neural Network after it was trained according to a given dataset. Once the Neural Network is trained by fitting the hyper-parameters to the point that the output can be predicted within the desired accuracy, one can search for the minimum or maximum value of the prediction function. Depending on the specifics of the problem, the solution can be the extremal value itself and/or the input value that extremizes the prediction function (and thus, the Neural Network).

The extremal learning method described by Patel *et al.* comprises two stages. In the first stage, the Neural Network is trained, based on provided training data, by varying a set of hyper-parameters. Once a sufficiently good (or possibly optimal) set of hyper-parameters is found, the hyper-parameters are kept fixed ('frozen'). In the second stage, the input vector becomes the trainable variable. A loss function is defined such that its minimization is equivalent to achieving an extremal value for the prediction function, and the extremal input value can be found using conventional optimisation techniques like gradient descent. Based on this construction, in principle, any kind of machine learning framework can be used to calculate extrema of Neural Networks.

In some aspects, extremal learning has some similarities with GANs; however, the execution is very different. GANs rely on the generator and discriminator adversarially trying to beat each other. The goal of the discriminator is to differentiate between real and artificially produced data, while the goal of the generator is to transform a random noise sample into something close to the true sample. Thus, the generator in a GAN, given a random noise input z, is trained to minimize the loss

$$L = \log(1 - D[G(z)]) \qquad (5)$$

where G(z) is the output of a generator network and D is a discriminator network. Extremal learning may be considered a case wherein only the discriminator exists and its loss function needs to be minimised. Another important distinction between extremal learning and GANs is that in extremal learning, the input vector is being changed instead of creating a generative model.

Based on these classical algorithms, various quantum algorithms have been proposed, such as quantum support vector machines (QSVMs), quantum neural networks (QNNs) and quantum generative adversarial networks (QGANs).

Quantum support vector machines make use of a quantum kernel. As was mentioned earlier, kernel methods such as support vector machines, are commonly used in various machine learning applications (such as classification tasks), due to their high performance. However, as the size of the feature space increases, solving the problem with SVMs becomes increasingly hard since the kernel functions become computationally expensive to estimate. This is where the potential of a quantum SVM lies, since in quantum computing an exponentially large quantum state can be manipulated through controllable entanglement and interference. When the problem has been translated into a quantum state, an enhanced solution can be obtained from the quantum Hilbert space. One can either use a variational classifier based on a variational circuit to operate similarly to a classical SVM, or use a quantum kernel estimator to estimate the kernel function and optimize the classifier directly.

Quantum Neural Networks (QNNs) are machine learning models or algorithms that combine the concepts of traditional Neural Networks and quantum computing. Thus, they are not a direct translation of classical NNs which calculate chains of linear or non-linear computations. Typically, QNNs refer to variational or parametric quantum circuits that use quantum gates and use optimisation techniques that are similar to classical NNs training techniques. Variational or parametric quantum circuits are quantum algorithms that depend on free parameters that can be tuned during training of the QNN. Typically, such quantum algorithms follow a few basic steps:

> i) preparation of a fixed (known) quantum state $|\psi\rangle$, typically using a so-called quantum feature map;
> ii) a quantum circuit $\hat{\mathcal{U}}(\theta)$ that has trainable parameters $\theta$, and
> iii) measurement of a desired observable $\hat{\mathcal{M}}$ at the output on a fixed measurement basis.

The expectation values of the function $f(\boldsymbol{\theta}) = \langle\psi|\hat{\mathcal{U}}^{\dagger}(\boldsymbol{\theta})\,\hat{\mathcal{M}}\,\hat{\mathcal{U}}(\boldsymbol{\theta})|\psi\rangle$ define a scalar cost for a given task and the free parameters $\theta$ are tuned to optimize the cost function. The training process of the $\theta$ parameters typically occurs via classical optimisation algorithms that take as input the measurement values of the quantum circuit. This is an iterative process, since the classical optimizer tries to find the best $\theta$ parameters that will provide such quantum measurements that optimize the cost function.

QGANs are the quantum mechanical equivalent of GANs where the data comprise either quantum states or classical data, and the generator and discriminator are equipped with quantum information processors. The data takes the form of an ensemble of quantum states generated by the system. The generator has access to a quantum information processor and tries to match that ensemble, while the discriminator can make arbitrary quantum measurements. The quantum discriminator and generator perform convex optimisation with the unique fixed point for the quantum adversarial game.

Besides these regression methods that can easily be traced back to their classical counterparts, many other methods have been recently proposed, like the Quantum Circuit Learning, the Quantum circuit Born machines, and the Differentiable Quantum Generative modelling. The following methods have been designed with a quantum problem in mind, instead of enhancing a classical method with quantum aspects.

Quantum Circuit Learning (QCL) is a hybrid quantum/classical algorithm that is designed for machine learning applications with a low-depth quantum circuit. Similarly to the Variational / Parametric Quantum Circuits that were mentioned earlier, in QCL, the input data are encoded into some quantum state and provided to a quantum circuit that has tuneable free parameters. A $\theta$-parametrised unitary operator is applied to the input state to generate an output state, that is described by the quantum measurements. The output state is measured based on some observable and the expectation value is obtained. Then, the defined cost function of the training data and the output is minimized, by iteratively tuning the circuit parameters $\theta$. These circuit parameters are tuned in an iterative process via a classical optimisation protocol, until the desired output is obtained. Typically, gradient-based optimisation techniques are used, with a stopping condition of when the QCL framework can approximate the input-output mapping up to the desired accuracy (as long as the circuit has a sufficient number of qubits). An alternative to the process of minimization of the cost function is performed using a high-depth quantum circuit with Harrow-Hassidim-Lloyd (HHL)-based algorithms, which includes a matrix inversion approach that is similar to the quantum SVM. However, in QCL the cost is minimized by iterative optimisation, successfully circumventing a high-depth circuit. This increases the execution speed and decreases the amount of error mitigation/correction required for a successful computation. Moreover, a potential quantum advantage exists in the QCL approach, since it directly uses an exponential number of functions with respect to the number of qubits to model the training of the known inputs, which is intractable on classical computers.

In addition to QGANs, many quantum generative models have been proposed, such as quantum Boltzmann machines and quantum Born machines. Quantum Boltzmann machines generalize the energy function of classical Boltzmann machines to a quantum Hamiltonian for stronger representational power and faster training. Quantum Born machines directly exploit the inherent probabilistic interpretation of quantum wavefunctions. Quantum Born machines represent a probability distribution using a quantum pure state instead of a thermal distribution like quantum Boltzmann machines. Therefore, Born machines can directly generate samples via projective measurement on the qubits, in contrast to the slow mixing Gibbs sampling approach used by quantum Boltzmann machines. Moreover, computational complexity considerations on quantum sampling problems suggest that a quantum circuit can produce probability distribution that is #P-hard, which is infeasible to simulate efficiently using classical algorithms.

Quantum circuit Born machines (QCBM) are generative models which represent the probability distribution of a classical dataset as quantum pure states. It has been suggested that for the quantum sampling problem, quantum circuits exhibit stronger expressibility compared to classical neural networks, therefore one can efficiently draw samples from the quantum circuits via projective measurements on qubits.

To further scale up the quantum circuit Born machine (QCBM) to larger number of qubits and circuit depth, an appropriate objective function for the generative tasks needs to be devised without explicit reference to the model probability. QCBM belongs to the class of implicit generative models since one does not have access to the wavefunction of an actual quantum circuit. Thus, QCBM can be used as a simulator to generate samples without access to their likelihoods, which is similar to the notable generative adversarial networks (GAN) discussed above. Compared to generative models with explicit likelihoods such as the Boltzmann machines, normalizing flows, and variational autoencoders, the implicit generative models can be more expressive due to less restrictions in their network structures. On the other hand, having no direct access to the output probability also poses challenge to the scalable training of quantum circuits. Moreover, one also needs better learning algorithm than the gradient-free optimisation scheme, especially given the noisy realization of current quantum circuits.

Another approach in terms of generative modelling is the Differentiable Quantum Generative modelling (DQGM), which is an approach for learning probability distributions as differentiable quantum circuits (DQC) that enable efficient quantum generative modelling (QGM) and synthetic data generation. Data is encoded in a latent space with a phase feature map, followed by a variational quantum circuit. Then a map of the trained model to the bit basis using a fixed unitary transformation is obtained. This allows fast sampling from parametrised distributions using a single-shot readout. Importantly, latent space training provides models that are automatically differentiable. This allows for differential constraints, such as those imposed when solving Stochastic Differential Equations, to be formulated in terms of loss functions that include measurable quantities in the phase space representation. Finally, this approach opens a route to multidimensional generative modelling with qubit registers explicitly correlated via a (fixed) entangling layer, as described in co-pending application EP22155513.9.

Through the QNN utilization, the algorithm has the potential to be faster and to provide better solutions to the optimisation problem. The reasoning for such a potential speedup is that the cost function of the QNN is encoded as a superposition state in the Hilbert space of the QNN's parameters. This quantum mechanism exploits the hidden structure of QNN to converge to the optimal parameters faster. Furthermore, due to various techniques that are designed to avoid the barren plateau problem, the variational circuits are able to provide very good candidate solutions to optimisation problems. As compared to the prior work, the design is able to handle both discrete and continuous variables without making significant changes to the design, which is a limitation of the quantum circtui learning method. Furthermore, the Extremiser feature map provides a trainable feature map, which allows the algorithm to be flexible with the data that are provided. In the case of Kitai *et al.*, the authors use a Factorization Machine, which is a classical Machine Learning model, to prepare a trained model based on the training data, which is then forwarded to the Quantum Machine Learning Module. However, this design is limited by the fixed training model created by the Factorization Machine, and it is not evident how one may best map higher-order polynomial unconstrained binary optimisation (PUBO) models to be solved by a QAOA or VQE-like algorithm.

Some embodiments of the current method apply a quantum algorithm based on Quantum Neural Networks (QNNs). Training of quantum neural networks may be based on so-called Quantum Circuit Learning, e.g. as disclosed in US 2020/0394550 A1, which is hereby incorporated by reference. Quantum circuit learning is (just) a means of training parametrised regression models, and does not attempt to find the extremising input.

Quantum circuit learning can be extended to methods for solving differential equations, as described, for instance, in co-pending application PCT/EP2021/081737, which is hereby incorporated by reference.

Known extremal learning and quantum circuit learning methods are restricted to continuous input variables only. By contrast, the present method extends extremal learning to using quantum neural networks for both continuous and discrete input variables.

Quantum kernels are described in more detail in co-pending application EP22160629.6, which is hereby incorporated by reference.

A kernel is, in general, defined as a conjugate-symmetric positive-definite function $k$ mapping two variables $x,x'$ $\in X$, where $X$ is some data space to the complex space, $k: X \times X \to \mathbb{C}$. The data space $X$ is typically the $\mathbb{C}^n$ or a subspace thereof, e.g., the $\mathbb{R}^n$. It has been shown that any kernel can be written as a (standard) inner product (or dot product) in a, usually, higher dimensional feature space; that is, any kernel $k(x,x')$ can be written as $k(x,x') = \varphi(x)^\dagger \varphi(x')$ where $\varphi: X \to \mathcal{F}$ is a mapping from the data space to the feature space. A quantum kernel generally refers to a kernel function that relies on quantum mechanical principles, typically an overlap of two wave functions $\langle \psi(x) | \psi(x') \rangle$, where $|\psi(x')\rangle$ denotes a quantum state encoded by the variable $x$. The same encoding is for both variables $x$ and $x'$. Thus, two examples of quantum kernels are $k(x,x') = \langle \psi(x) | \psi(x') \rangle$, and $k(x,x') = |\langle \psi(x) | \psi(x') \rangle|^2$. The former is an inner product of wave functions and, therefore, a quantum kernel. Quantum kernels may be used to solve a variety of problems, in particular regression problems, such as data regression and the numerical solution of differential equations.

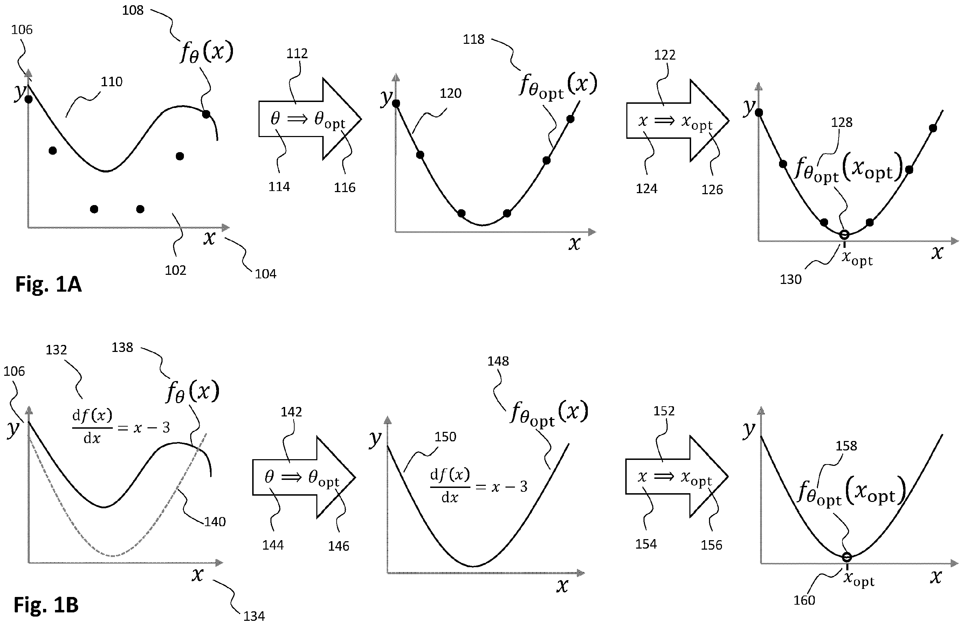

**Fig. 1A** and **1B** illustrate different types of optimisation problems that can be solved using embodiments in this application. **Fig. 1A** shows a typical data regression problem. In general, the goal of a data regression problem is to find a solution function that describes a data set (generally referred to as the training data set), optionally subject to a number of constraints. The solution function is typically limited to a finite domain in the data space; this domain may be referred to as the problem domain. The training data set may comprise training points in the problem domain and associated training values.

In the depicted example, the training data set comprises data points **102,** each defined through its coordinate value on the x-axis **104** and associated y-axis value **106.** The problem is to fit a trial function $f_\theta(x)$ **108,** parametrised by one or more parameters $\theta$, to the training data. The trial function can be, for example, a quantum neural network or a quantum kernel function, and the parameters $\theta$ can be network parameters or kernel coefficients.

Initially, the trial function $f_\theta(x)$ will have a function shape **110** that does not match the training data. The task of an optimiser **112** is to transform the shape of the function **108** by modifying its parameters $\theta$ **114** to $\theta_{\mathbf{opt}}$ **116** until the function $f_{\theta_{opt}}(x)$ **118** obtains an optimal fit to the data **120.** In this disclosure, the optimiser is a classical optimiser. The result is an implicit solution function expressed parametrised by the set of optimal parameters $\theta_{opt}$. Depending on the regression problem, the solution function can be scalar or non-scalar (i.e., higher-dimensional, e.g., vectorial or tensorial).

In a subsequent step, the input parameter $x$ is optimised in order to obtain an input value $\boldsymbol{x}_{opt}$ for which the solution function $f_{\theta_{opt}}(x)$ (or a function thereof) achieves an extremal value (in this example, a minimum).

In general, the function that is being optimised is a function of the solution function. Similarly, the constraints may be provided in a different space than the function to be optimised. For example, the input data could comprise pairs of locations with associated electric fields, leading to a solution function describing the electric field in some spatial domain, while the aim of the optimisation can be to find the location with the smallest divergence of the electric field.

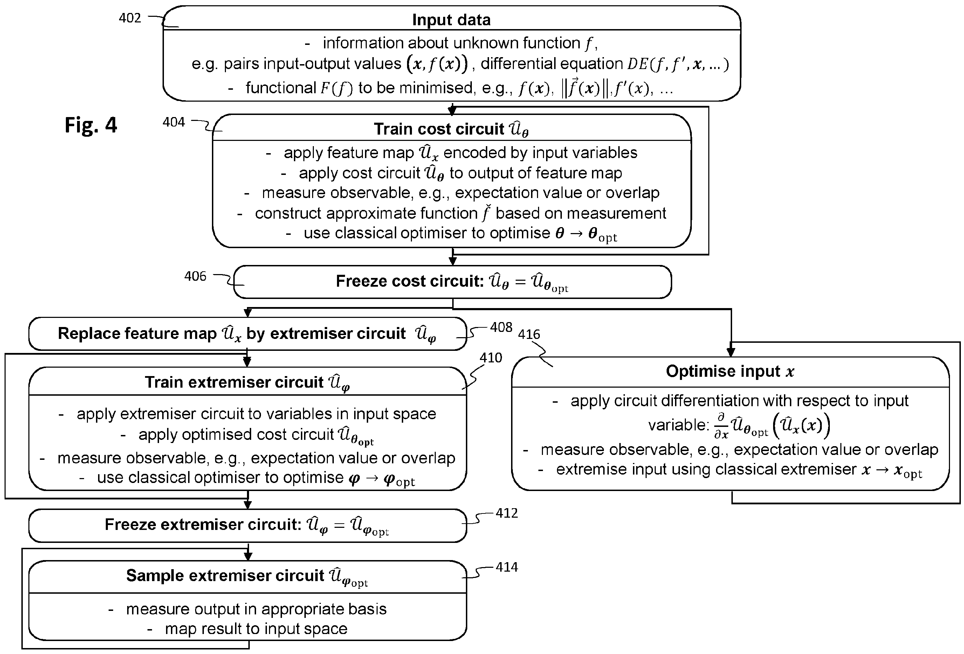

Methods to solve a data regression problem are described below with reference to **Fig. 4A** and **4B.**

**Fig. 1B** shows a typical differential equation regression problem. In general, the goal of a differential equation regression problem is to find a solution function that obeys one or more differential equations, typically subject to a number of constraints such as boundary conditions. The solution function is typically limited to a finite domain in a variable space or in some function space; this domain may be referred to as the problem domain.

In the depicted example, the differential equation **132** is an ordinary linear differential equation, but the method is equally applicable to partial differential equations and non-linear differential equations. In particular, the differential equation may be parametrised. Similar to the data regression case, the problem is to find and optimise a parametrised trial function $f_\theta(x)$ **138,** but in this case, the constraints are imposed by the differential equation and by the associated boundary conditions rather than by a data set.

Initially, the trial function $f_\theta$ will have function shape **140** that does not match the differential equation. The task of the classical optimiser **142** is to transform the shape of the function **138** by modifying its parameters $\theta$ **144** to $\theta_{opt}$ **146** until the function $f_{\theta_{opt}}(x)$ **148** represents a valid solution **140** to the differential equation **132,** subject to the boundary conditions.

In a subsequent step, the input parameter $x$ is optimised in order to obtain an input value $\boldsymbol{x}_{opt}$ for which the solution function $f_{\theta_{opt}}(x)$ (or a function thereof) achieves an extremal value (in this example, a minimum).

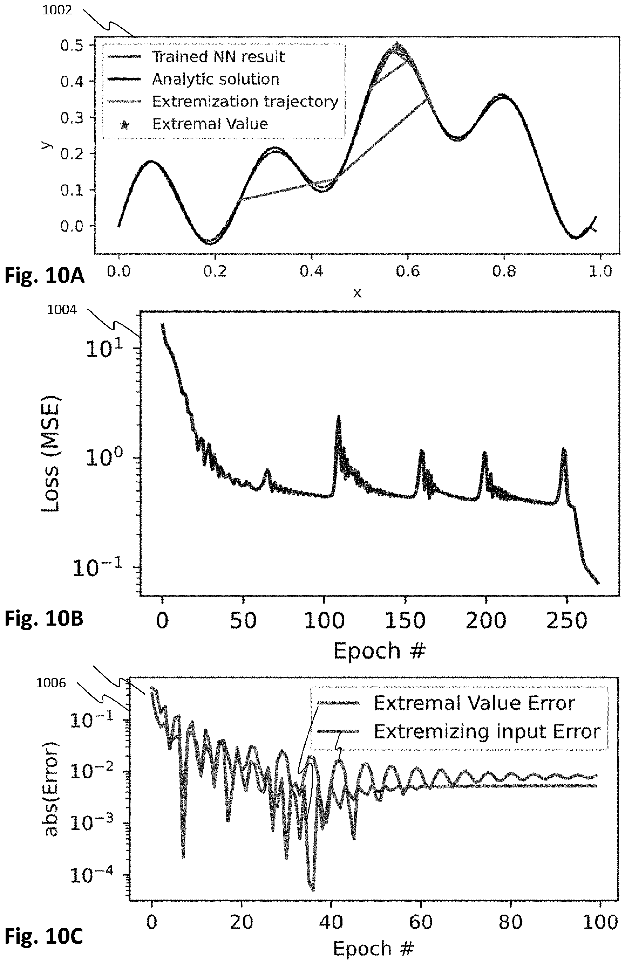

Methods to solve a differential equation regression problem are described below with reference to **Fig. 10.**

Other cases may comprise different types of constraints, combinations of constraints, et cetera.

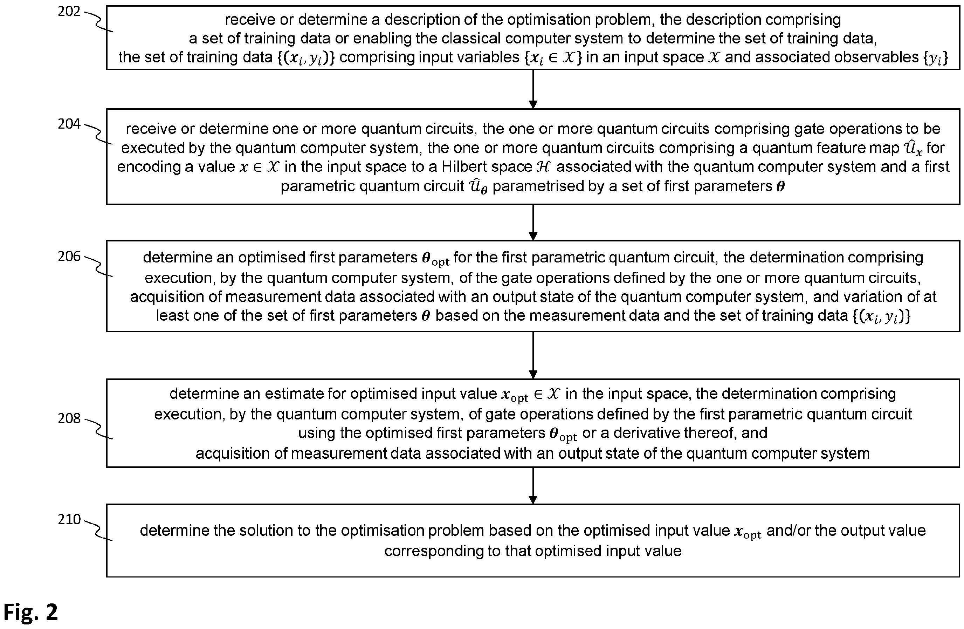

**Fig. 2** schematically depicts a flow diagram of a method determining a solution for an optimisation problem according to an embodiment. The method may be performed using a hybrid computer system, which comprises a quantum computer system and a classical computer system. Since current-generation classical computers are typically much more efficient at general computational task than quantum computers, most steps are typically performed by the classical computer system, unless otherwise noted.

In a first step **202,** the method comprises receiving or determining a description of the optimisation problem, the description comprising a set of training data or enabling the classical computer system to determine the set of training data, the set of training data $\{(\boldsymbol{x}_i, y_i)\}$ comprising input variables $\{\boldsymbol{x}_i \in X\}$ in an input space $X$ and associated observables $\{y_i\}$.

The optimisation problem can be, for example, a combinatorial optimisation problem or a regression problem, e.g., a data regression problem or a differential equation problem. The description of the optimisation problem typically comprises one or more constraints on a function defined on the input space $X$. The constraints can be defined as one or more of: a set of input-output pairs, a set of inequalities, a differential equation, et cetera. Based on the description, a set of training data may be determined, such that the set of training data comprises input values and associated observables on a system described by an input-output relationship defining a function $f: x \rightarrow y$, the input values forming a subset of the input space $X$. Typically, the training data are of the form $\{(\boldsymbol{x}_i, y_i = f(\boldsymbol{x}_i))\}$.

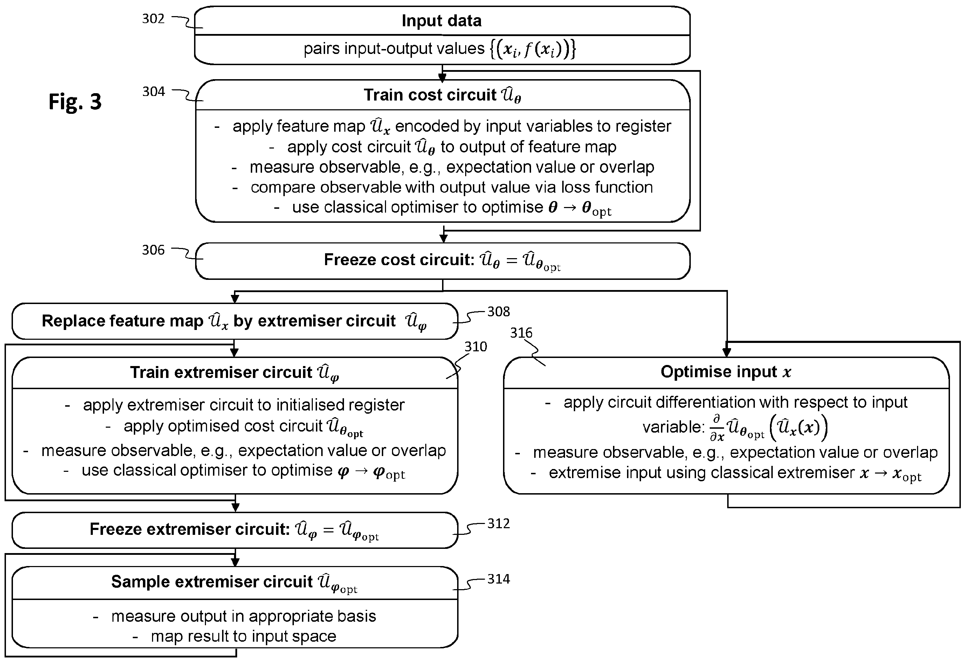

For example, if the constraints are provided as input-output pairs, the training data may comprise all or some subset of the input-output pairs. Optionally, the input and/or output values may be rescaled to a suitable range. As discussed below in more detail with reference to **Figs. 3-5,** the input data can be continuous, discrete, or a mixture thereof, and the input space $\mathcal{X}$ can be fully, partially, or not path-connected.

If the problem description comprises different constraints, e.g. a differential equation $DE\left(x, f(x), \left\{\frac{\partial^n f}{\partial x^n}\right\}, ...\right)$, $x \in \mathcal{X}$ for an unknown function $f(x): \mathcal{X} \rightarrow \mathcal{Y}$, typically expressed in terms of the variable $x$, the function $f(x)$, and one or more derivatives of the function $f(x)$ with respect to $x$, training data may be generated in the input domain, e.g. by pseudo-uniform sampling over the input space $X$. Generation of training data for differential equations is described in more detail in co-pending application PCT/EP2021/081737.

In a step **204,** the method comprises receiving or determining one or more quantum circuits. The one or more quantum circuits comprise or define gate operations to be executed by the quantum computer system. The one or more quantum circuits comprise a quantum feature map (e.g., defined by a unitary operator $\hat{U}_x$) for encoding a value $x \in X$ in the input space $X$ to a Hilbert space $H$ associated with the quantum computer system. The one or more quantum circuits also comprise a first parametric quantum circuit (e.g., defined by a unitary operator $\hat{U}_\theta$) parametrised by a set of first parameters $\theta$.

The one or more quantum circuits may be a single quantum circuit that both encodes a value $x \in X$ in the input space $X$ into the Hilbert space $H$ and is parametrised by a set of first parameters $\theta$. In a typical implementation, the quantum feature map first encodes an input variable into the Hilbert space, and subsequently, the first parametric quantum circuit acts on the quantum state effectuated by the quantum feature map, effectuating an output quantum state. The first parametric quantum circuit can be, for example, a variational quantum circuit such as a quantum neural network, or a quantum kernel circuit.

In a step **206,** the method comprises determining an optimised first parametric quantum circuit (e.g., defined by a unitary operator $\hat{U}_{\theta_{opt}}$). The determination comprises execution, by the quantum computer system, of the gate operations defined by the one or more quantum circuits, acquisition of measurement data associated with an output state of the quantum computer system, and variation of at least one of the set of first parameters $\theta$ based on the measurement data and the set of training data $\{(x_i, y_i)\}$.

In a typical embodiment, one or more measurements are performed on the output state effectuated by the first parametric quantum circuit as described in step **204.** The measurements typically involve an expectation value or an overlap of two wave functions. Several measurements may be required to determine a single output value, e.g. by averaging a series of repeated measurements. Generally, the determination of the optimised first parametric quantum circuit comprises determining a set of optimal first parameter values $\theta_{opt}$. The optimised first parametric circuit $\hat{U}_{\theta_{opt}}$ can then be obtained by implementing the first parametric quantum circuit using the optimised first parameter values $\theta_{opt}$.

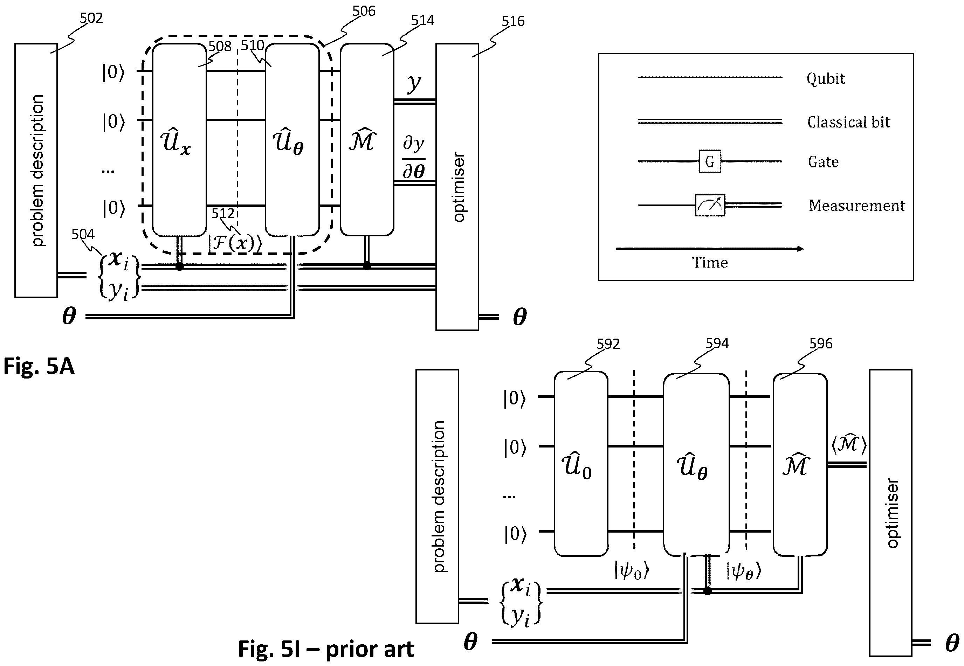

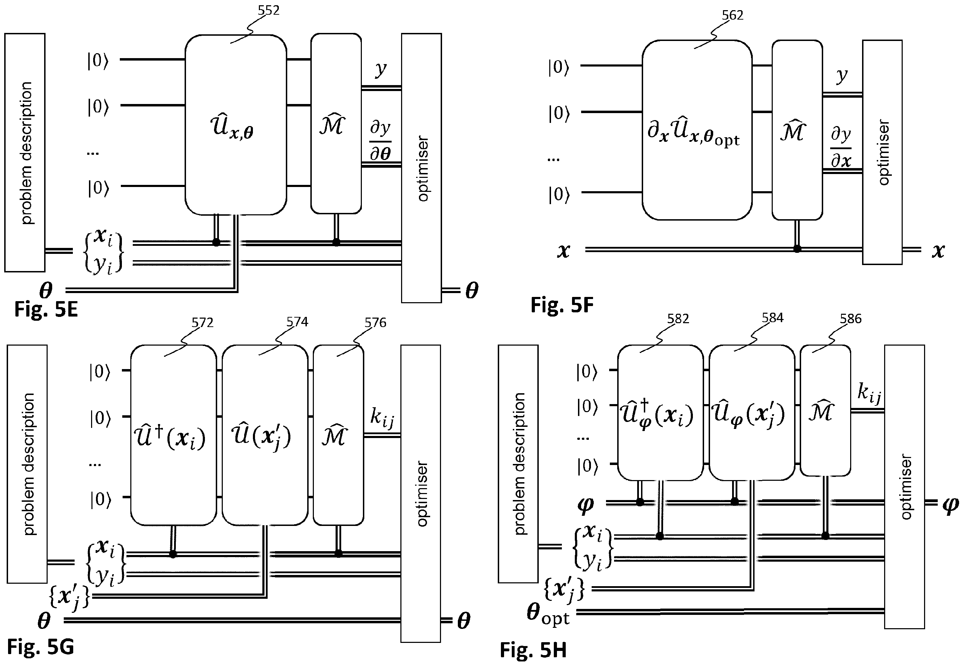

Step **206** may be implemented using a circuit as depicted in **Fig. 5A** or **5E,** for example.

A step **208** comprises determining an (estimate for an) optimised input value $x_{opt} \in X$ in the input space $X$. The determination may comprising execution, by the quantum computer system, of gate operations defined by the optimised first parametric quantum circuit (e.g., as defined by the unitary operator $\hat{U}_{\theta_{opt}}$) or a derivative thereof and acquisition of measurement data associated with an output state of the quantum computer system. The determination of the optimised input value may be based on the description of the optimisation problem, which may, for example, define a quantity to be extremised. For example, the one or more quantum circuits may define an approximation of the unknown function $f(x): X \to y$, but the goal of the optimisation function does not need to be extremising $f(x)$ itself; in general, any function of $f(x)$ may be extremised, e.g., $\partial_x f(x)$ or $f^2(x)$.

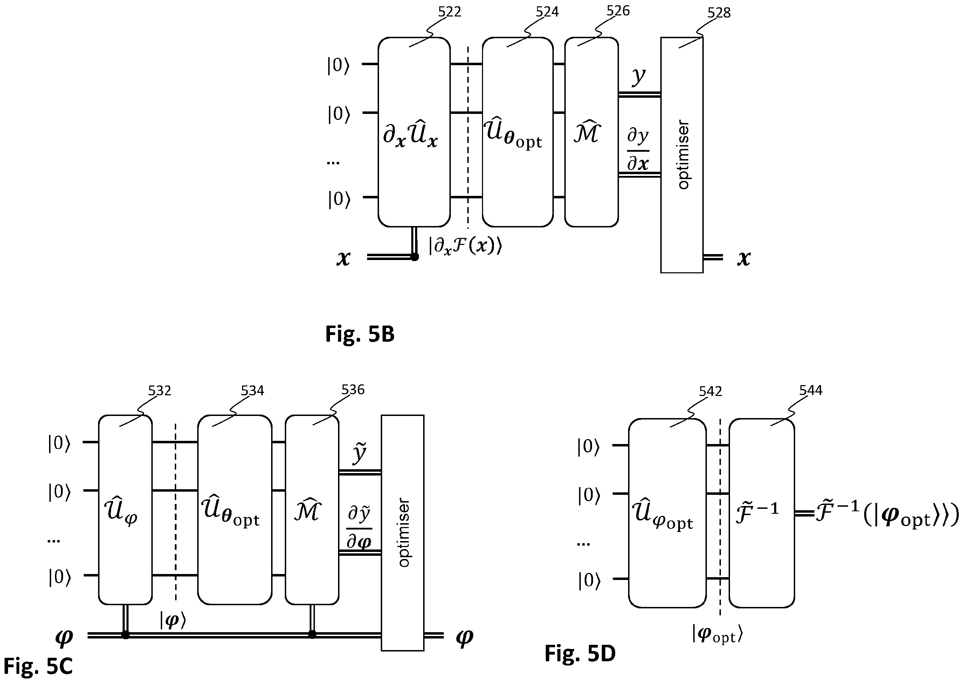

In this step, the optimised first parametric quantum circuit is 'frozen', meaning that its parameters $\theta$ are not further changed but are fixed at their optimised values $\theta_{opt}$. Determination of the optimised input value may comprise analytically differentiating the quantum feature map, e.g., as discussed in more detail below with reference to **Fig. 5B.** Alternatively or additionally, determination of the optimised input value may comprise effectively replacing the quantum feature map with a second parametric quantum circuit, e.g., a variational quantum circuit, and optimising the second parametric quantum circuit, e.g., as described in more detail below with reference to **Fig. 5C.** Determination of the optimised input value may further comprise sampling the optimised second parametric quantum circuit e.g., as described in more detail below with reference to **Fig. 5D.** Several estimates for the optimised input value $x_{opt}$ may be determined.

A step **210** comprises determining the solution to the optimisation problem based on the (estimate for the) optimised input value $x_{opt}$ and/or the output value $f(x_{opt})$ corresponding to that (estimate for the) optimised input value.

Determining the solution may comprises selecting one or more 'most promising' estimates out of a plurality of estimates for the optimised input value. Determining the solution may comprise evaluating the (estimates for the) optimised input value using the one or more quantum circuits using the optimised first parameter values $\theta_{opt}$.

**Fig. 3** schematically depicts a flow chart illustrating an exemplary embodiment. In a first step **302,** input data is received. In this example, the input data is a data set $\{(x_i, f(x_i))\}$ comprising input values (independent variables) $\{x_i\}$ and associated output values (dependent variables) $\{f(x_i)\}$, which are related via an unknown function $f$. The goal of the optimisation problem is to find an optimal input value $x_{opt}$ that extremises the unknown function $f$.

In this example, the input data is used as the training data, but in other examples the input data may be, e.g., pre-processed. In a typical example, the potential values for the optimal input value $x_{opt}$ may be restricted to a certain space based on the values of the independent variables in the training data, for example, $x_{opt}$ may be required to be sufficiently close to one of the $x_i$ based on some suitable method. This may increase the reliability of the outcome.

In a step **304**, a cost circuit $\hat{U}_\theta$ parametrised by a set of variables $\theta$ is trained. A quantum feature map $\hat{U}_x$ is used to encode the input values to a Hilbert space associated with a quantum computing system, e.g., $|x\rangle = \hat{U}_x|0\rangle$. Subsequently, the cost circuit $\hat{U}_\theta$ is applied to the quantum state effectuated by the quantum feature map $\hat{U}_x$, i.e., $\hat{U}_\theta|x\rangle$ is determined. An observable $y_\theta(x_i)$, e.g., an expectation value $y_\theta(x_i) = \langle x_i|\hat{U}_\theta^\dagger \hat{M} \, \hat{U}_\theta|x_i\rangle$ or an overlap $y_\theta(x_i) = \theta_j \langle x_i|x_j\rangle$ is measured on the quantum state effectuated by the cost circuit $\hat{U}_\theta$, and the result is compared to the output values using a loss function $L$. The loss function $L$ can be based on a mean squared error, e.g., $L = \Sigma_i(f(x_i) - y_\theta(x_i))^2$. A classical optimiser may be used to optimise $\theta$ in order to obtain a set of optimised parameter values $\theta_{opt}$. In principle, any suitable optimiser may be used for this step, e.g., Nelder-Mead, Newton's method, BFGS, gradient-descent methods like SGD, ADAM, etc.

In a step **306**, the cost circuit $\hat{U}_\theta$ is frozen using the optimised parameter values $\theta_{opt}$, i.e., $\hat{U}_\theta = \hat{U}_{\theta_{opt}}$. Subsequently, the optimised cost function is used to determine the optimal input value, either using steps **308-314** or using step **316.**

In a step **308**, the quantum feature map $\hat{U}_x$ is effectively replaced by an extremiser circuit $\hat{U}_\varphi$. That is, the extremiser circuit $\hat{U}_\varphi$ is used in this and the following steps to create a quantum state in the Hilbert space upon which the optimised cost circuit $\hat{U}_{\theta_{opt}}$ then acts. Thus, a quantum state $\hat{U}_{\theta_{opt}}\hat{U}_\varphi|0\rangle$ may be effectuated.

In a step **310**, the extremiser circuit $\hat{U}_\varphi$ is trained. The extremiser circuit is applied to the qubit register and subsequently, the optimised cost circuit is applied. The same observable as in step **304** is measured leading to an output value $y_\theta(\varphi)$. A classical optimiser is used to optimise that parameters $\varphi$, e.g., by determining $\min_\varphi y_\theta(\varphi)$. This results in a set of optimised second parameter values $\varphi_{opt}$. In principle, any suitable optimiser may be used for this step, e.g., Nelder-Mead, Newton's method, BFGS, gradient-descent methods like SGD, ADAM, etc.

In a step **312,** the extremiser circuit $\hat{U}_\varphi$ is frozen using the optimised parameter values $\varphi_{opt}$, i.e., $\hat{U}_\varphi = \hat{U}_{\varphi_{opt}}$. In a step **314,** the (frozen) optimised extremiser circuit $\hat{U}_{\varphi_{opt}}$ is sampled. The output of the optimised extremiser circuit $\hat{U}_{\varphi_{opt}}$ is measured in an appropriate bases, and the result is mapped to the input space $X$. The result is an estimate for an optimal input value $x_{opt} \in \mathcal{X}$. In this step, the optimised cost circuit is not applied; i.e., $|\varphi_{opt}\rangle = \hat{U}_{\varphi_{opt}}|0\rangle$ is sampled, and not $\hat{U}_{\theta_{opt}}|\varphi_{opt}\rangle$. If necessary, a corresponding optimised output value $y_{opt}$ may be determined by measuring the same observable as in step **304** on a quantum state effectuated by $\hat{U}_{\theta_{opt}}|x_{opt}\rangle$.

If the input space is continuous and path-connected, step **316** may be performed instead of steps **308-314.** In this case, the feature map is differentiable with respect to the independent variables. Consequently, in step **316,** circuit differentiation may be applied to determine a differentiated feature map. The optimised cost circuit may then be applied to the quantum state effectuated by the differentiated feature map, and a classical extremiser may again be used to determine an optimal input value $x_{opt}$.

The description of the algorithm discussed above with reference to **Fig. 3** can be considered edge cases of a more general description of the algorithm, which will be described with reference to **Fig. 4.**

A first step **402** comprises receiving or determining a description of the optimisation problem. In general, the optimisation problem is related to an unknown function $f$ described by:

$$f: \mathcal{X} \subset \mathbb{R}^n \to \mathbb{R}^{n'}, \qquad x \mapsto f(x) \qquad (6)$$

where the input space $X$ is not necessarily path connected. (For completeness' sake, it is noted that the domain and range may be spaces that are at least locally isomorphic with or embedded in the $\mathbb{R}^n$ and $\mathbb{R}^{n'}$, respectively.) In one limit, $\mathcal{X}$ consist of a collection of discrete points, possibly on mutually orthogonal axes. This is for example the case in binary optimisation problems. In another limit, $\mathcal{X}$ is a fully-connected, continuous space, e.g., spatial dimensions in some physical problem. However, $\mathcal{X}$ can also comprise a combination of discrete and continuous spaces, connected and unconnected continuous spaces, et cetera.

The problem description comprises some information about the unknown function $f$ in the form of a set of conditions

$$\{\mathcal{C}_i\}_{i=1}^M. \qquad (7)$$

The conditions can be given, e.g., as input-output pairs $\{x_i, f(x_i)\}$ (as described above with reference to **Fig. 3),** and/or in the form of more general constraints on the function, including differential equation, boundary conditions, and other types of constraints; for example,

$$\left\{ f((0,0)) > 2, \partial_{xx} f - \frac{1}{c} \partial_{tt} f |_{\text{interior}} = 0, \dots \right\} \qquad (8)$$

To implement this algorithm, conditions in eq. (7) should be enforceable through the construction in eq. (28) and the loss function in eq. (36). These will be detailed below.

The problem description may also comprise a loss function $L_{\text{ext}}$, or information base on which the loss function may be determined. In general, the loss function $L_{\text{ext}}$ is given by:

$$L_{\text{ext}} : (\mathbb{R}^n)^{\mathbb{R}^{n'}} \times \mathbb{R} \to \mathbb{R}, \qquad (f, x) \mapsto L_{\text{ext}}(f, x) \qquad (9)$$

For example, $L_{\text{ext}}$ may be defined simply as the unknown function itself (if $f(x)$ is a scalar, real-valued function):

$$L_{\text{ext}}(f, x) = f(x), \qquad (10)$$

or by a more complicated function of the unknown function $f$, e.g., by:

$$L_{\text{ext}}(f, x) = \|\nabla f|_x\| + \tan\left\|\frac{2x}{\pi}\right\|. \qquad (11)$$

The goal then becomes to find $x_{\text{ext}} \in X$ such that $L_{\text{ext}}(f, x_{\text{ext}})$ is an extremal (in practice, minimal) value of $L_{\text{ext}}(f,x)$ in the domain $X$. In general, the solution to the optimisation problem is a function of $f$ and/or $x_{\text{ext}}$. Preferably, $L_{\text{ext}}$ can be obtained with a construction similar to eq. (28), as such construction allows full utilisation of quantum parallelism in this algorithm.

A step **404** comprises receiving or determining one or more quantum circuits. The one or more quantum circuits comprise a quantum feature map and a first parametric quantum circuit parametrised by a set of parameters $\theta$. The one or more quantum circuits are used to map $x \in X$ to a quantum state

$$|\Psi_M(\boldsymbol{\theta}, x)\rangle. \qquad (12)$$

In general, the quantum feature map $\psi$ maps the input space $X$ to a Hilbert space $H$:

$$\psi : \mathcal{X} \to \mathcal{H}, \qquad x \mapsto |\psi(x)\rangle. \qquad (13)$$

Typically, the input space is mapped to the Hilbert space associated with the quantum computer system. The first parametric circuit may be written as a generic 'black box' model circuit $\hat{u}_M(\theta)$ that is applied to the output state of the quantum feature map, in order to obtain the final state:

$$|\Psi_M(\boldsymbol{\theta},\boldsymbol{x})\rangle := \hat{u}_M(\boldsymbol{\theta})\,|\psi(\boldsymbol{x})\rangle. \qquad (14)$$

If the decomposition of $X$ in terms of path-connected pieces is

$$\mathcal{X} = \bigcup_{i=1}^{m} \mathcal{X}_i, \qquad (15)$$

then the Hilbert space $H$ used for the computation is chosen such that it is the Hilbert space direct sum of m mutually orthogonal subspaces $H_i$; that is,

$$\mathcal{H} = \bigoplus_{i=1}^{m} \mathcal{H}_i. \qquad (16)$$

It can be assumed that there are continuous feature maps

$$\psi_i : \mathcal{X}_i \to \mathcal{H}_i \qquad (17)$$

such that

$$\psi(\boldsymbol{x}) := \psi_i(\boldsymbol{x}) \qquad (18)$$

for all i and $x \in X_i$.

For example, the optimisation problem could relate to a meal composition with 8 different ingredients with fixed available amounts (which can be rescaled to [0,1] without loss of generality), where between 0 and 100% of each ingredient may be added to the meal. In that case, $X$ comprises 8 disjunct intervals [0,1]:

$$\mathcal{X} = \{1, \ldots, 8\} \times [0,1] = \bigcup_{i=1}^{8} \{i\} \times [0,1] =: \bigcup_{i=1}^{8} \mathcal{X}_i \qquad (19)$$

which may be mapped to a Hilbert space of four spin ½ -based qubits:

$$\mathcal{H} = \mathcal{H}_{s_{1/2}} \otimes \mathcal{H}_{s_{1/2}} \otimes \mathcal{H}_{s_{1/2}} \otimes \mathcal{H}_{s_{1/2}} \cong \bigoplus_{i=1}^{8} \left( \mathcal{H}_{s_0} \otimes \mathcal{H}_{s_{1/2}} \right). \qquad (20)$$

This is isomorphic with the sum of 8 products of spin 0 and spin ½ particles. For each interval i (corresponding to each ingredient, in the example), a feature map $\psi_i$ may be defined:

$$\psi_i : \{i\} \times [0,1] \to \mathcal{H}_{s_0} \otimes \mathcal{H}_{s_{1/2}}, \qquad \alpha \mapsto |1\rangle \otimes R_y(\alpha\pi)|0\rangle \qquad (21)$$

where $|1\rangle$ denotes a basis in the spin 0 space and $R_y(\alpha\pi)|0\rangle$ denotes a rotation around the $y$-axis over an angle $\alpha$ applied to a spin- ½ basis vector $|0\rangle$.

$$\psi : \mathcal{X} \to \bigoplus_{i=1}^{8} \left( \mathcal{H}_{s_0} \otimes \mathcal{H}_{s_{1/2}} \right), \qquad (i, \alpha) \mapsto \sum_{j=1}^{8} \delta_{ij} \left( |\mathbb{1}\rangle_j \otimes R_y(\alpha\pi)|0\rangle_j \right). \tag{22}$$

where $\delta_{ij}$ denotes the Kronecker delta.

A step **406** comprises obtaining measurement data on the quantum state $|\psi_M(\theta,x)\rangle$ on which the input variable was mapped by execution of the gate operations defined by the one or more quantum circuits, in particular by execution of the gate operations defined by the feature map and the first parametric quantum circuit.

These measurements may be represented as a function mapping $|\Psi_M\rangle$ to the output space $\mathbb{R}^{n'}$ of the unknown $f$, via a map

$$\mathcal{M} : \mathcal{H} \to \mathbb{R}^{n'}, \tag{23}$$

which can be accomplished via a quantum measurement involving states $|\Psi_M\rangle$. Usually, $M$ involves either the measurement of an expectation value -in the case of variational circuits like quantum neural networks- and/or an overlap between to wave functions -in the case of quantum kernel methods. For example, $M$ can be defined as a measurement of an expectation value of an observable $\hat{M}$, as

$$\mathcal{M}(|\Psi_M\rangle) = \langle \Psi_M | \hat{\mathcal{M}} | \Psi_M \rangle. \tag{24}$$

In a different example, $\hat{M}$ can also be defined as a measurement on an overlap of two wave functions, e.g.,

$$\mathcal{M}(|\Psi_M(\boldsymbol{\theta},\boldsymbol{x})\rangle) = \langle \Psi_M(\boldsymbol{\theta}, \boldsymbol{x}) | \Psi_M(\boldsymbol{\theta}, \boldsymbol{x}')\rangle \tag{25}$$

or

$$\mathcal{M}(|\Psi_M(\boldsymbol{\theta},\boldsymbol{x})\rangle) = | \langle \Psi_M(\boldsymbol{\theta}, \boldsymbol{x}) | \Psi_M(\boldsymbol{\theta}, \boldsymbol{x}')\rangle |^2. \tag{26}$$

The results of $M$ can be used to construct an approximation $\check{f}$ of the unknown function $f$, parametrised by $\theta$ and, optionally, a new set of variables $\alpha$:

$$\check{f}(\boldsymbol{\theta},\boldsymbol{x}) : \mathcal{X} \to \mathbb{R}^{n'}, \qquad \boldsymbol{x} \mapsto \check{f}(\boldsymbol{x}; \boldsymbol{\theta}, \boldsymbol{a}) \tag{27}$$

Here

$$\check{f}(\boldsymbol{x}; \boldsymbol{\theta}, \boldsymbol{a}) := \mathcal{A} \left( \times_{i=1}^{n'} \mathcal{M}\big( |\Psi_M(\boldsymbol{\theta}, \phi_i(\boldsymbol{x}))\rangle, |\Psi_M(\boldsymbol{\theta}, \phi_i'(\boldsymbol{x}))\rangle \big); \boldsymbol{a} \right), \tag{28}$$

where

$$(\phi_i, \phi_i') : \mathcal{X} \to (\mathcal{X})^2, \qquad \boldsymbol{x} \mapsto (\phi_i(\boldsymbol{x}), \phi_i'(\boldsymbol{x})) \tag{29}$$

and

$$\mathcal{A}(\boldsymbol{\alpha}) : \mathbb{R}^{n'} \to \mathbb{R}. \tag{30}$$

Although *A* is not explicitly constrained, it has to be of appropriate structure (considering effect of interference, etc...) especially for the second part of the algorithm to be successful. That is, for every $x \in X_j$, $\phi_i(x) \in X_k$ for some particular *k,* say $\phi_i(j)$. Either $\phi_i(\{1, ..., m\})$ has to be a bijection or $\phi_i(X)$ has to be a constant function. These conditions have to hold for $\phi_i'$ , too.

The function $\check{f}$ could be constructed using the method described in T. Goto *et al*, arXiv:2009.00298, which is hereby incorporated by reference. For example, if *M* involves the measurement of the expectation value, then $\check{f}$ could be defined as:

$$\check{f}(\boldsymbol{x};\boldsymbol{\theta},\boldsymbol{a}) = a_0 + a_1 \langle \Psi_M(\boldsymbol{\theta},\boldsymbol{x}) | \widehat{\mathcal{M}} | \Psi_M(\boldsymbol{\theta},\boldsymbol{x}) \rangle ; \text{or,} \qquad (31)$$

If *M* involves the measurement of a kernel $k(x,x';\theta)$, e.g.,

$$k(x,x';\boldsymbol{\theta}) := |\mathcal{M}(|\Psi_M(\boldsymbol{\theta},\boldsymbol{x})\rangle, |\Psi_M(\boldsymbol{\theta},\boldsymbol{x}')\rangle)|^2, \qquad (32)$$

then $\check{f}$ could be defined as:

$$\check{f}(\boldsymbol{x};\boldsymbol{\theta},\boldsymbol{a}) = a_0 + \sum_{i=1}^{n'} a_i \, k(\boldsymbol{x}, \phi_i'(\boldsymbol{x}); \boldsymbol{\theta}). \qquad (33)$$

This construction of $\check{f}$ could be used to enforce some of the conditions in eq. (7).

For example, using an appropriately constrained universal function approximator (UFA) for $|\Psi_M(\theta,x)\rangle$ and using *A* with the desired symmetries, techniques already developed for PIML and DQC could be used here.

In brief, $f(\boldsymbol{x};\theta)$ could be defined, e.g., as

$$\check{f}(\boldsymbol{x};\boldsymbol{\theta}) = \langle \Psi_M(\boldsymbol{\theta},\boldsymbol{x}) | \widehat{\mathcal{M}} | \Psi_M(\boldsymbol{\theta},\boldsymbol{x}) \rangle ; \qquad (34)$$

or as

$$\check{f}(\boldsymbol{x};\boldsymbol{\theta}) = \theta_0 + \sum_{i=1}^{n'} \theta_i \, k(\boldsymbol{x},\boldsymbol{x}'). \qquad (35)$$

A loss function

$$L := (\mathbb{R}^n)^{\mathbb{R}} \to \mathbb{R}, \qquad f \mapsto L(f) \qquad (36)$$

is constructed beforehand using the conditions in eq. (7) such that as $L(f) \to \min(L)$, the function $f$ satisfies all the conditions in eq. (7) (wherein the conditions already enforced through the construction in eq. (28) can be ignored). That implies, as $L(\check{f}) \to \min(L)$, the function $\check{f}$ satisfies all that is known about $f$, and so $\check{f}$ would be a 'best estimate' of $f$ that can be obtained with the given information.

If the set of constraints is given by input-output pairs $\{x_i, f(x_i)\}$, then the loss function may be of the form

$$L(\boldsymbol{\theta}) = \sum_{j=1}^{N} \left\| \check{f}(\boldsymbol{x}_j; \boldsymbol{\theta}) - f(\boldsymbol{x}_j) \right\|, \qquad (37)$$

where $\|\cdot\|$ is a norm on the target space $\mathbb{R}^{n'}$. A much used example is

$$L(\boldsymbol{\theta}) = \sum_{j=1}^{N} \left( \check{f}(\boldsymbol{x}_j; \boldsymbol{\theta}) - f(\boldsymbol{x}_j) \right)^2. \qquad (38)$$

As another example, if the set of constraints is given by

$$\{\mathcal{C}_i\}_{i=1}^{M} = \left\{ f((0,0)) - 2 = 0, \partial_{xx}f - \frac{1}{c}\partial_{tt}f|_{\text{interior}} = 0 \right\} \qquad (39)$$

then a possible loss function is:

$$L(\boldsymbol{\theta}) = \left\| \check{f}((0,0); \boldsymbol{\theta}) - 2 \right\| + \sum_{\text{interior}} \left\| \partial_{xx}\check{f}(\boldsymbol{x}; \boldsymbol{\theta}) - \frac{1}{c}\partial_{tt}\check{f}(\boldsymbol{x}; \boldsymbol{\theta}) \right\|. \qquad (40)$$

Techniques used for the construction of the loss function in PIML and DQC could be used here.

The primary objective of this step is to minimize $L\,(\check{f}(x;\theta))$ with respect to the set of parameters $\theta$, and thereby obtain a good approximation $\check{f}$ of $f$. Parameters $\theta$ are optimised using a classical optimiser. Various ways to optimise $\theta$ are known in the art. Note that $f(\boldsymbol{x};\theta)$ could be constrained by its construction and it is not necessary that min $(L\,(\check{f}(\cdot)))$ = min(L). The set of optimised parameter values may be denoted $\{\theta_{\text{opt}}\}$.

If the minimization is successful, then

$$\check{f}\left(\boldsymbol{x}; \boldsymbol{\theta}_{\text{opt}}\right) \approx f(\boldsymbol{x}), \qquad (41)$$

and the approximate function $\check{f}$ is assumed to be a good approximation of the unknown function $f$. More in general, an approximation

$$L_{\text{ext}}\left(\check{f}\left(\boldsymbol{\theta}_{\text{opt}}\right), \boldsymbol{x}\right) \approx L_{\text{ext}}(f, \boldsymbol{x}) \qquad (42)$$

can be obtained with a construction similar to eq. (28).

The optimised values $\{\theta_{\text{opt}}\}$ will not be changed in the next steps, and so the first parametric circuit is 'frozen'.

In a step **408,** an optimised (i.e., extremising) input value $\boldsymbol{x}_{\text{opt}}$ or an estimate thereof is determined. In eq. (18), the quantum feature map $\psi(x)$ was defined as $\psi(x) := \psi_f(x)$. Defining

$$\tilde{\mathcal{X}} := \times_{i=1}^{m} (\mathbb{C}, \mathcal{X}_i) \qquad (43)$$

the feature map $\psi$ may be redefined as

$$\psi : \widetilde{X} \to \mathcal{H}, \qquad \times_{i=1}^m (\lambda_i, x_i) \mapsto \sum_{i=1}^m \frac{\lambda_i}{\|\lambda\|} |\psi_i(x_i)\rangle. \tag{44}$$

This gives a weight $\lambda_i$ to a contribution from space $X_i$. This is a generalisation of the definition in eq. (18), where one component had weight 1 and all other components had weight 0. This can be seen by writing $x \in X_j \subset X$ as

$$\left(\times_{i=1}^j (0, x_i)\right) \times (1, x) \times \left(\times_{i=j+1}^m (0, x_i)\right) \in X \tag{45}$$

For example, if the feature map is defined as in eq. (44), the extension may be defined as:

$$\psi : \times_{i=1}^8 (\mathbb{C}, \{1\} \times [0,1]) \to \bigoplus_{i=1}^8 \left(\mathcal{H}_{s_0} \otimes \mathcal{H}_{s_{1/2}}\right),$$

$$\times_{i=1}^8 (\lambda_i, \alpha_i) \mapsto \sum_{i=1}^8 \frac{\lambda_i}{\|\lambda\|} \left(|\mathbb{1}\rangle_i \otimes R_y(\alpha_i \pi)|0\rangle_i\right). \tag{46}$$

Next, the definition of $\phi_i$ and $\phi'_i$ in eq. (29) may be extended to the general case. As in the current example, they are all identical, the prime and subscript may be dropped and all may be called $\phi$. Recalling $\phi(j) = i$ implies $\phi(x) \in X_i$ for every $x \in X_j$

$$\phi : \widetilde{X} \to \times_{\phi(j)=1}^m (\mathbb{C}, X_{\phi(j)}), \qquad \times_{i=1}^m (\lambda_i, x_i) \mapsto \times_{\phi(j)=1}^m \left(\lambda_{\phi(j)}, \phi(x_j)\right), \tag{47}$$

or, if $\phi$ is a constant function, it continues to map every input to the same constant.
This results in a map

$$\psi \circ \phi : \widetilde{X} \to \mathcal{H}, \qquad \widetilde{x} \mapsto |\psi(\phi(\widetilde{x}))\rangle \tag{48}$$

Assuming the decomposition $\widetilde{x} = \times_{i=1}^m (\lambda_i, x_i)$, this can be rewritten as

$$|\psi(\phi(\widetilde{x}))\rangle = |\psi(\times_{\phi(j)=1}^m (\lambda_{\phi(j)}, \phi(x_j)))\rangle = \sum_{\phi(j)=1}^m \frac{\lambda_{\phi(j)}}{\|\lambda\|} |\psi_{\phi(j)}(\phi(x_j))\rangle \tag{49}$$

where $x_j \in X_j$. Recalling $\phi(j) = i$ implies $\phi(x_j) \in X_i$ and $\mathcal{H} = \bigoplus_{i=1}^m \mathcal{H}_i$,

$$|\psi_{\phi(j)}(\phi(x_j))\rangle \in \mathcal{H}_{\phi(j)} \tag{50}$$

so eq. (49) is nothing but the decomposition of a vector in $H$ in terms of its components in mutually orthogonal subspaces $H_j$.
Thus, each $\widetilde{x} \in \widetilde{X}$ can be parametrised by $\{\lambda, \Phi\}$ The parameter $\lambda$ may be considered to denote to which component $X_i$ a value x belongs, and the parameter $\Phi$ may indicate the position of x in the component $X_i$. If $X$ is (fully) path-connected, dim $\lambda = 0$ (and can hence be ignored) and if $X$ is discrete, dim $\Phi = 0$. then the state

$$\left|\psi\left(\phi_i\left(\tilde{x}(\lambda,\Phi)\right)\right)\right\rangle \in \mathcal{H} \qquad (51)$$

can be generated using a quantum circuit. This circuit may be referred to as the 'Extremizer Circuit'.

For example, if

$$\mathcal{X} = \{1,2\} \times [0,1], \qquad \mathcal{H} = \left(\mathcal{H}_{s_0} \otimes \mathcal{H}_{s_{1/2}}\right) \oplus \left(\mathcal{H}_{s_0} \otimes \mathcal{H}_{s_{1/2}}\right), \text{ and } \phi_i = \mathbb{1}, \qquad (52)$$

then

$$\psi : \times_{i=1}^2 \left(\mathbb{C}, \{1\} \times [0,1]\right) \to \bigoplus_{i=1}^{2} \left(\mathcal{H}_{s_0} \otimes \mathcal{H}_{s_{1/2}}\right),$$

$$\left((\cos(\lambda/2), \Phi_1), (\sin(\lambda/2), \Phi_2)\right)$$

$$\mapsto \cos(\lambda/2)\left(|\text{I}\rangle \otimes R_y(\Phi_1\pi)|0\rangle\right) + \sin(\lambda/2)\left(|\text{II}\rangle \otimes R_y(\Phi_2\pi)|0\rangle\right) \qquad (53)$$

where $|\text{I}\rangle$ and $|\text{II}\rangle$ denote the bases of two distinct one-dimensional Hilbert spaces.

This can be implemented with a conventional gate-based circuit (using, e.g., a spin-based system) with a change of basis since

$$\bigoplus_{i=1}^{2} \left(\mathcal{H}_{s_0} \otimes \mathcal{H}_{s_{1/2}}\right) \cong \left(\mathcal{H}_{s_{1/2}} \otimes \mathcal{H}_{s_{1/2}}\right). \qquad (54)$$

Recall that $A(\{M(\cdot)\}_i; \alpha)$ in eq. (28) is defined on all of $(\mathcal{F} \times \mathcal{F})^{n'}$. Consequently, the map $(\mathcal{F} \times \mathcal{F})^{n'} \to \mathbb{R}$ given by

$$\mathcal{A}\left(\times_{i=1}^{n'} \mathcal{M}\left(\hat{U}_\text{M}(\boldsymbol{\theta}_\text{min})|\alpha_i\rangle, \hat{U}_\text{M}(\boldsymbol{\theta}_\text{min})|\alpha_i'\rangle\right); \boldsymbol{a}_\text{min}\right) \qquad (55)$$

is well defined for all $\left(|\alpha_i\rangle, |\alpha_i'\rangle\right) \in (\mathcal{F} \times \mathcal{F})^{n'}$. This function can be evaluated using the trained Model Circuit $\hat{U}_\text{M}(\boldsymbol{\theta}_\text{min})$ described above. In particular, the trained Model Circuit $\hat{U}_\text{M}(\boldsymbol{\theta}_\text{min})$ can be applied to any $\left(|\alpha_i\rangle, |\alpha_i'\rangle\right) \in (\mathcal{H} \times \mathcal{H})^{n'}$ and the same steps used during the training of the Quantum Model can be applied. If

$$\left(|\alpha_i\rangle, |\alpha_i'\rangle\right) = \left(\left|\psi\left(\phi_i(\boldsymbol{x})\right)\right\rangle, \left|\psi\left(\phi_i'(\boldsymbol{x})\right)\right\rangle\right) \qquad (56)$$

for $x \in X$, then eq. (55) yields

$$\check{f}(\boldsymbol{x}; \boldsymbol{\theta}_\text{min}, \boldsymbol{a}_\text{min}) \qquad (57)$$

The Extremizer Circuit in eq. (51) allows to obtain

$$\psi \circ \left( \times_{i=1}^{n'} (\phi_i, \phi_i') \right) : \mathbb{R}^{\dim \lambda} \times \mathbb{R}^{\dim \Phi} \to \mathcal{H}^{2n'} \qquad (58)$$

$$(\lambda, \Phi) \mapsto \times_{i=1}^{n'} \left( \left| \psi \left( \phi_i (\tilde{x}(\lambda, \Phi)) \right) \right\rangle, \left| \psi \left( \phi_i' (\tilde{x}(\lambda, \Phi)) \right) \right\rangle \right) \qquad (59)$$

Combining eq. (55) with eq. (59) results in

$$\tilde{f} : \mathbb{R}^{\dim \lambda} \times \mathbb{R}^{\dim \Phi} \to \mathbb{R} \qquad (60)$$

This $\tilde{f}$ is an extension of the approximation $\check{f}(\theta_{min}, \alpha_{min})$ of $f$ over a path-connected domain, if $\Phi$ parametrises all $x \in X$.

In some embodiments, $\theta$ may be fixed (constant), and only $a$ may be an optimisable parameter. Where applicable, in the rest of this disclosure, $\theta$ may be read as $\{\theta, a\}$ as used in the above equations, and consequently, $\theta_{opt}$ may be read as $\{\theta_{opt}, a_{opt}\}$.

Following the same steps, $L_{ext}$ can be extended over the same domain, using the previously constructed circuit for $L_{ext}$. When $\tilde{x} \in \tilde{X}$, an appropriately constructed $L_{ext}$ will be able to yield the sum weighted by $\lambda$ of the loss from the contributing $x_i \in X_i$ that constitute $\tilde{x}$. To implement this algorithm, it has to be possible to meet this condition.

Hence, it is possible to simultaneously search m points of the domain (from the m distinct components). There is no need to modify the quantum circuit or the subsequent measurement steps that were used in the previous step(s) to obtain the approximation of $f$, it suffices to remove the map $\psi$ that loads the input during the training of the Quantum Model and replace it with the Extremizer Circuit. This allows utilisation of the parallelism of quantum superposition during extremal learning.

Furthermore, if $\Phi$ parametrises all $x \in X$, all of $X$ can be sought as though it were a continuous domain. Note that it is not necessary to construct an interpolation of the disconnected domain $X$ of the function $f$ being optimized; instead, the 'inherent interpolation' through quantum superposition from the circuit trained to construct the Quantum Model is leveraged.

Now, the loss function

$$L_{ext}(\tilde{f}(\lambda, \Phi), \tilde{x}(\lambda, \Phi)) \qquad (61)$$

may be optimised with respect to the continuous variables $(\lambda, \Phi)$. If $X$ is (fully) path-connected, dim $\lambda = 0$ and if $X$ is discrete, dim $\Phi = 0$. Under these edge cases, the steps described with reference to **Fig. 4** reduce to those described with reference to **Fig. 3** using steps **308-314**, respectively step **316**.

It is worth noting that there is no obvious way to map $\tilde{x} \in \tilde{X}$ to an input value. However, since $\mathcal{F} = \bigoplus_{i=1}^{m} \mathcal{F}_i$, where all $\mathcal{F}_i$ are mutually orthogonal, there is always an operator such that its measurement sends a general vector in $\mathcal{F}$ to a vector in one of the $\mathcal{F}_i$.

Let

$$\left| \psi \left( \tilde{x}(\lambda_{ext}, \Phi_{ext}) \right) \right\rangle = \sum_{i=1}^{m} \frac{\lambda_i}{\|\lambda_{ext}\|} |\psi_i(x_i)\rangle. \qquad (62)$$

The coefficient $\frac{\lambda_i}{\|\lambda_{ext}\|}$ is proportional to the probability of obtaining a state in each of the orthogonal subspaces of the Hilbert space after measurement. The expectation is that the construction of $|\psi(\tilde{x}(\lambda, \Phi)))$ makes it most likely for this projection to correspond to the $X_i$ containing the extremal input, provided optimisation was successful.

After the measurement, a wavefunction of the form $|\psi(x_{ext})\rangle$ for some $x_{ext} \in X$ is obtained. This is the same encoding that was initially employed on the input to map it to the Hilbert space. Therefore, it can be mapped back to the input variable by performing measurements on $|\psi(x_{ext})\rangle$.

**Fig. 5A-H** schematically depict quantum circuits according various embodiments. The method can operate slightly differently based on whether the input variable are discrete or continuous variables.

In particular, **Fig. 5A** depicts a quantum model that may be used during optimisation of the first parametric quantum circuit. In the depicted example, the problem description **502** comprises a (classical) training data set $\{(x_i, y_j)\}$ **504** comprising input-output pairs with input values $x_i$ and corresponding output values $y_i$. Other embodiments may have different constraints, e.g., in the form of inequalities, differential equations, and so on.

The quantum model to be trained on the basis of the training data set dataset is provided, e.g. received or determined by the classical computer system. The quantum model comprises one or more quantum circuits **506**. The quantum model is executed on a quantum computer with a register with at least $N$ qubits.

The one or more quantum circuits comprise a quantum feature map $\hat{u}_x$ **508** and a first parametric quantum circuit $\hat{u}_\theta$ **510**. The qubit register is initialised in the zero state $|0\rangle^{\otimes N}$. The quantum feature map is implemented by a unitary operator $\hat{u}_x$ which defines a continuous function $F$ that maps coordinates from input values $x \in X$ to a distinct place in the Hilbert space of the qubit register:

$$\mathcal{F} : \mathcal{X} \to \mathcal{H}_{1/2}^{\otimes N}, \qquad x \mapsto |\mathcal{F}(x)\rangle \tag{63}$$

The quantum feature map $F$ may be physically implemented by means of a unitary operator acting on $|0\rangle^{\otimes N}$ whose parameters depend on x:

$$\hat{u}_x |0\rangle^{\otimes N} := \mathcal{F}(x) \tag{64}$$

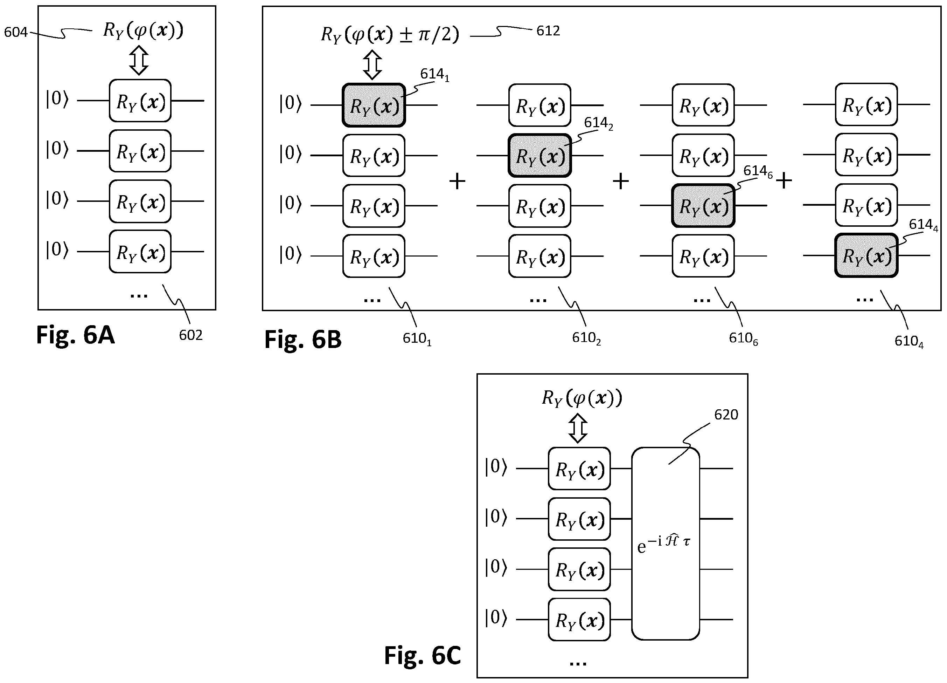

Examples of a feature map $F(x)$ are discussed in more detail below with reference to **Fig. 6A-E.** Generally, the feature map $F$ as used in the description of **Fig. 5A-I** corresponds to the feature map $\psi$ as used in the description of **Fig. 4.**

The first parametric quantum circuit may also be referred to as a cost circuit, e.g., a cost-QNN, is applied to the output of the feature map. The first parametric quantum circuit is implemented by a variational unitary circuit $\hat{u}_\theta$ parametrised by variational parameter $\theta$, which may be analog and/or digital. Examples of cost circuits are discussed in more detail below. In the example depicted in **Fig. 5A,** the first parametric circuit acts on the quantum state resulting from the operations defined by the quantum feature map, but in other embodiments, the order may be different, e.g., reversed or interleafed.

Subsequently, a measurement **514** of the output state in the form of the measurement of an observable $\hat{M}$ is made, and the measurement is translated into an output value:

$$\langle \mathcal{F}(x) | \hat{u}_\theta^\dagger \hat{\mathcal{M}} \hat{u}_\theta | \mathcal{F}(x) \rangle : \mathcal{X} \to \mathbb{R}, \qquad x \mapsto y \tag{65}$$

Training of the first parametric quantum circuit can be similar to training any variational quantum circuit, similar techniques as used for training classical Neural Networks can be used. For each input $x_i$, the corresponding output $\tilde{y}_i$ is recorded, where the output is obtained, e.g., by a measurement as defined in eq. (65). A distance metric between the ('true') training values $y_i$ and the predicted values $\tilde{y}_i$, such as the mean square error (MSE), acts as a loss function $L$. The loss function $L$ is a function of the parameters $\theta$ of the variational quantum circuit $\hat{U}_\theta$ and is real-valued.

$$\theta \mapsto L(\theta; \{(x_i, y_i)\}) \in \mathbb{R} \tag{66}$$

The loss function can be minimized by a classical optimiser **516** using standard optimisation algorithms, usually based on gradient-based techniques. Based on the result for previous iterations of $\theta$, the optimiser may suggest new values, which are used to modify the first parametric circuit. If the training is successful,

$$\tilde{f}(x) := \langle \mathcal{F}(x) | \hat{u}_\theta^\dagger \hat{\mathcal{M}} \hat{u}_\theta | \mathcal{F}(x) \rangle \approx f(x). \tag{67}$$

This way, a set of optimised parameter values $\theta_{opt}$ is determined. Once the model has been trained, the parameters $\theta$ of the trained model are 'frozen', i.e., fixed, at the optimal values $\theta_{opt}$ that were obtained during the training.

The output values of the quantum model may be scaled to be between 0 and 1 using a suitable scaling function, as is common in many classical optimisation algorithms. Similarly to the classical neural networks, quantum neural networks are able to fit the data faster and better when the target values are within a known range. Furthermore, always scaling the output within a known range fixes the range of the target values regardless of the size of the problem, which makes comparison easier. The goal of the training process of the one or more quantum circuits **506** is to learn a mapping of inputs to outputs based on constraints, e.g., examples included in a training dataset. The initial parameters of the model, usually take small random values and are updated via the optimisation algorithm according to the error estimate on the training dataset. Therefore, unscaled input variables can lead to a slow and unstable learning process, while unscaled target (output) variables can lead to exploding gradients resulting in a bad learning process.

In the event that the training samples are incomplete ($\leq 2^N$, where $N$ is the number of qubits), the maximum feature value in training will not necessarily be equal to the true maximum feature value. Therefore, the value of the true maximum output value corresponding to the optimal solution will be out of bounds, since it should be higher than the assumed maximum value. To compensate for this issue, a variable $\alpha$, e.g. $\alpha \in [1.0, 100.0]$ and a constant $\beta$, typically $\beta = 0.5$ may be defined, as a multiplicative and additive factor to the model output, respectively. For example, if the output is in the interval $[-N, N]$ (e.g., total magnetisation of $N$ qubits), then a new expectation value may be defined as

$$\text{expectation value} = \alpha \times \frac{\text{model output}}{2\,N} + \beta \tag{68}$$

As an example, $\alpha$ may initially be chosen as $\alpha = 1.0$, while $\beta$ remains fixed at $\beta = 0.5$. Using $\alpha$, the maximum feature value can be increased so that optimisation can lead to the finding of the best solution. As $\alpha$ increases, the variational circuit has more flexibility to improve optimal solutions; however, a trade-off must be found between a large $\alpha$ value and the probability of suggesting the optimal solution.

**Fig. 5B** depicts a quantum circuit for determining an optimal input value $x_{\text{opt}} \in \mathcal{X}$, based on the optimised first parametric circuit implemented by unitary operator $\hat{U}_{\boldsymbol{\theta}_{\text{opt}}}$, for continuous input data. If the input data is continuous, then the quantum feature map $\mathcal{F}(x)$ implemented by unitary operator $\hat{U}_x$ is also continuous and the approximation $\tilde{f}(x)$ of $f(x)$ given in eq. (67) is continuous. This is not to say that if the input data is continuous, circuit differentiation needs to be applies; depending on the specifics of the optimisation problem, it can be preferable to use different optimisation methods instead, e.g., as detailed below with reference to **Fig. 5C.**

Since the trainable feature map is analytically differentiable by employing circuit differentiation methods such as parameter shift rules, the derivative of the model with respect to the independent variable can be computed:

$$\partial_x \tilde{f}(x) = \partial_x \langle \mathcal{F}(x) | \hat{U}_{\boldsymbol{\theta}_{opt}}^\dagger \hat{\mathcal{M}} \hat{U}_{\boldsymbol{\theta}_{opt}} | \mathcal{F}(x) \rangle$$

$$= \left\langle 0 \left| (\partial_x \hat{U}_x)^\dagger \hat{U}_{\boldsymbol{\theta}_{opt}}^\dagger \hat{\mathcal{M}} \hat{U}_{\boldsymbol{\theta}_{opt}} \hat{U}_x \right| 0 \right\rangle + \left\langle 0 \left| \hat{U}_x^\dagger \hat{U}_{\boldsymbol{\theta}_{opt}}^\dagger \hat{\mathcal{M}} \hat{U}_{\boldsymbol{\theta}_{opt}} \partial_x \hat{U}_x \right| 0 \right\rangle \tag{69}$$

This derivative can be implemented as a combination of a derivative **522** of a unitary operator and the optimised cost circuit; and a measurement **526** may be applied to its output. A (known) classical optimiser **526,** e.g., a gradient ascent/descent-based optimiser, may then be used to determine an input parameter $x_{\text{opt}} \in X$ that extremizes the value of the observable $\hat{M}$ on the circuit output state representing $f(x)$ in eq. (67).

**Fig. 5C** depicts a quantum circuit for determining an optimal input value $x_{\text{opt}} \in \mathcal{X}$, based on the optimised first parametric circuit implemented by unitary operator $\hat{U}_{\boldsymbol{\theta}_{\text{opt}}}$, e.g., for discrete or non-numerical input data. In principle, this method can be used for any input data type, including fully continuous input data. For discrete input data, one possible feature map $F$ (implemented as circuit **508** in **Fig. 5A)** is a simple digital encoding, where a binary representation of input x is mapped to binary bitstrings. After initializing the qubit register in all-zeros, the injection $F$ transforms that state to a product state of zeros and ones (bitstrings), typically by applying an X-gate to each qubit on indices where a 1 is present in the binary representation of the input x.

$$\mathcal{F} : X \to \{0, 1\}^{\otimes N} \to \{|0\rangle, |1\rangle\}^{\otimes N} \subset \mathcal{H}_{1/2}^{\otimes N} \tag{70}$$

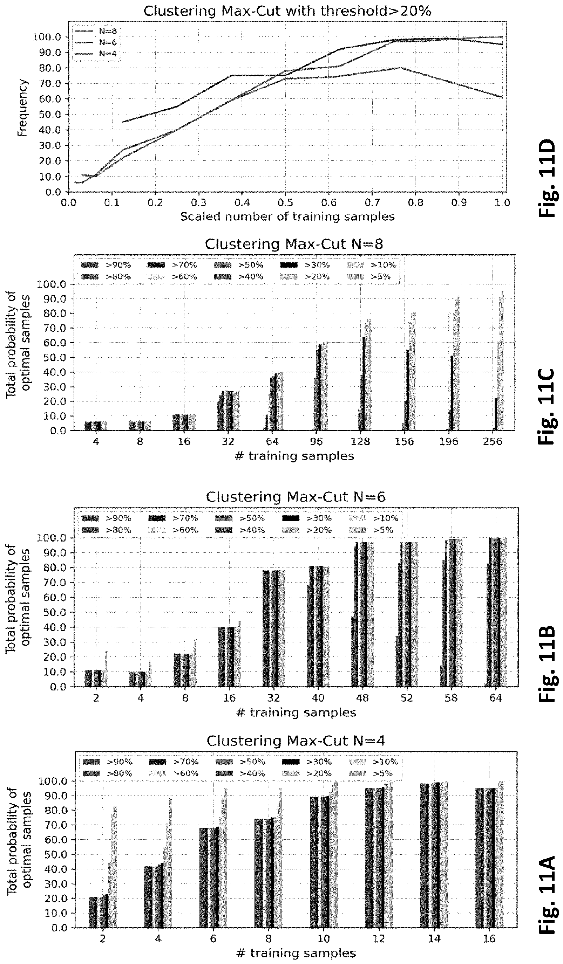

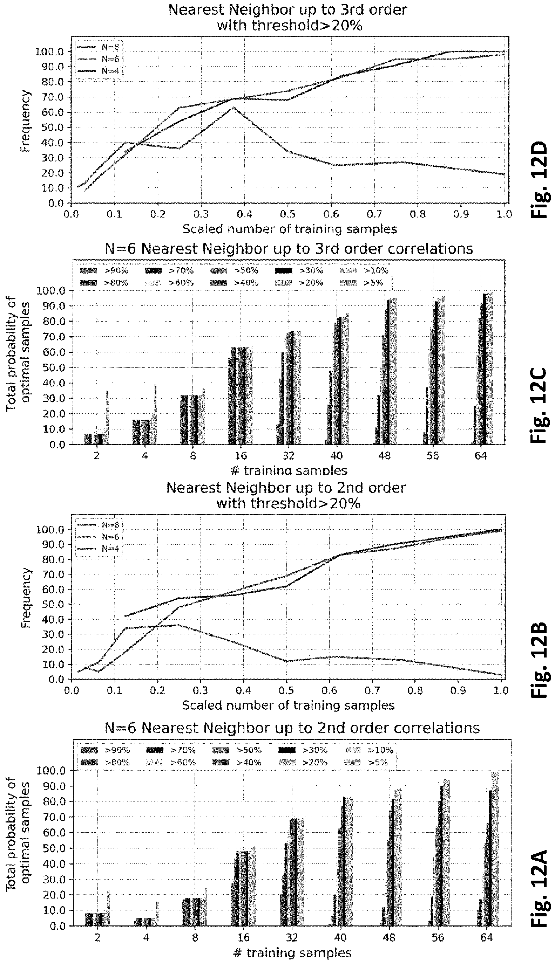

Again, the goal is to find $x_{\text{opt}} \in X$ such that $f(x_{\text{opt}})$ is an extremum of $f$, where the function $f$ is an unknown function. In some embodiments, e.g. the embodiment shown in **Fig. 11** and **12,** $X$ is a discrete space and, therefore, not path-connected. Therefore, the approximation $\tilde{f}$ of $f$ (as defined in eq. (67)) is not continuous in x, and hence, conventional optimisers using gradient-based techniques cannot be used to find $x_{\text{opt}}$. However, quantum machine learning can advantageously be used to search for $x_{\text{opt}}$.

To this end, the quantum circuit implementing the feature map $F$ is removed from the one or more circuits making up the quantum model used when optimising the parameters of the first parametric quantum circuit (i.e., when training the cost model), as discussed above with reference to **Fig. 5A**. Then, a second parametric quantum circuit is inserted that is connected to the input of the first parametric quantum circuit. In this example, the second parametric quantum circuit is a variational quantum circuit **532** which is implemented as a unitary operator $\hat{u}_{\varphi}$ parametrised with parameters $\varphi$. This new unitary circuit may be referred to as the Extremiser feature map, with variational parameters $\varphi$. The variational circuit can be an analog or a digital circuit. In this example, the same initial state $|0\rangle^{\otimes N}$ used as input for the quantum feature map $F$ is used as input to the Extremiser feature map, but in principle, any initial state can be used. However, the Extremiser feature map should map to the same Hilbert space as the quantum feature map $F$. A variational input state $|\varphi\rangle$ may be defined as

$$\hat{u}_{\boldsymbol{\varphi}}|0\rangle^{\otimes N} := |\boldsymbol{\varphi}\rangle \in \mathcal{H}_{1/2}^{\otimes N} \qquad (71)$$

During Extremiser feature map training, the parameters $\theta$ of the cost model **534** remain frozen with the optimal values $\theta_{\text{opt}}$ obtained during training of the cost model as described with reference to **Fig. 5A.** In the depicted example, the output of the circuit can be obtained from the measurement **536** of the expectation value of the observable $\hat{M}$:

$$\boldsymbol{\varphi} \mapsto \tilde{y} := \langle \boldsymbol{\varphi}| \, \hat{u}_{\boldsymbol{\theta}_{\text{opt}}}^{\dagger} \, \widehat{\mathcal{M}} \, \hat{u}_{\boldsymbol{\theta}_{\text{opt}}} \, |\boldsymbol{\varphi}\rangle \in \mathbb{R}. \qquad (72)$$

This function can be extremised (maximised or minimised) by variationally optimising parameters $\varphi$. The optimisation of $\varphi$ can be accomplished, for example, using gradient ascent or descent, using analytical circuit differentiation rules to compute $\partial_{\varphi}\tilde{y}$.

The Extremiser feature map can be thought of as a trainable feature map, which is trained with respect to $\varphi$. The goal of this training is to learn an intermediate wavefunction that has maximum contribution from states (bitstrings, if digital encoding is being used) that result in a high (low) value of the model to be maximized (minimized). This can be sought of finding the point in the Hilbert space which results in an extreme value of the optimised cost circuit.

**Fig. 5D** depicts a quantum circuit for determining an optimal input value $x_{\text{opt}} \in \mathcal{X}$, based on the optimised first parametric circuit implemented by unitary operator $\hat{u}_{\boldsymbol{\theta}_{\text{opt}}}$ and the optimised second parametric circuit **542** implemented by unitary operator $\hat{u}_{\boldsymbol{\varphi}_{\text{opt}}}$. This step may also be used in cases with discrete or non-numerical input data. Once the quantum model has converged to an optimal value $\varphi_{\text{opt}}$ of $\varphi$, as described with reference to **Fig. 5C,** the cost model $\hat{u}_{\varphi_{\text{opt}}}$ is removed from the one or more quantum circuits. In contrast to $x_{\text{opt}}$ as determined in **Fig. 5B,** $\varphi_{\text{opt}}$ cannot be directly associated with an input since the input is discrete, and hence $F^{-1}(|\varphi_{\text{opt}}\rangle)$ is, in general, not defined. Instead, the output of the Extremiser feature map circuit **542** using the optimised second parameter values $\varphi_{\text{opt}}$ is sampled using a circuit $\tilde{F}^{-1}$ **544** to obtain an estimate for $x_{\text{opt}}$. This way, an input value may be obtained that maps to a point in the Hilbert space that is close to $|\varphi_{\text{opt}}\rangle$, and which is hence likely to be associated with a model output that is close to an extreme output.

If digital encoding is being used, this sampling for $x_{\text{opt}}$ may be done by making a measurement in the $\hat{\sigma}_Z^{\otimes N}$ basis. This collapses the wavefunction to the space $\{|0\rangle, |1\rangle^{\otimes N}\}$, and gives the map

$$\tilde{\mathcal{F}}^{-1} : \mathcal{H}_{1/2}^{\otimes N} \to \{|0\rangle, |1\rangle\}^{\otimes N} \to \{0,1\}^{\otimes N} \to \mathcal{X}' \supseteq \mathcal{X}, \qquad |\boldsymbol{\varphi}\rangle \mapsto \tilde{\mathcal{F}}^{-1}(|\boldsymbol{\varphi}\rangle) \ni \mathcal{X}' \supseteq \mathcal{X} \quad (73)$$

respecting

$$\tilde{\mathcal{F}}^{-1} \, \mathcal{F} = \mathbb{1}$$

(and also

$$\mathcal{F}\,\tilde{\mathcal{F}}^{-1} = \mathbb{1}\,\lceil$$

if $\mathcal{X}' = \mathcal{X}$ ), where $\mathbb{1}$ denotes the identity. The previous steps of the algorithm enhance the probability that the measured bitstring $\tilde{\mathcal{F}}$ ($|\varphi_{opt}\rangle$) is mapped to $x_{opt}$.

For many applications, it is sufficient if the unfeasibly large combinatorial input space is reduced to a much smaller and more manageable number of candidates which have a relatively large probability of giving an outcome that is close to optimal. Which number is manageable depends on the application, and can range, for example, from dozens to hundreds. If necessary, the (approximate) function values can be obtained by providing the sampled values as input to the optimised quantum model as resulting from the steps as described with reference to **Fig. 5A.**

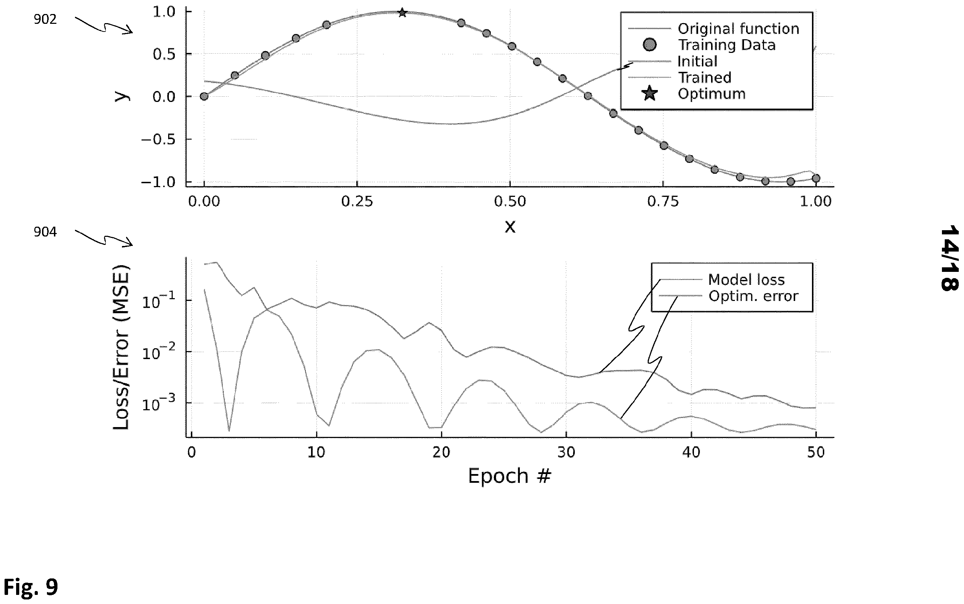

The variational circuits $\hat{u}_\theta$ **510** and $\hat{u}_\varphi$. **532** may be selected with depth $N^2$, so that they are more expressive. As discussed below with reference to **Figs. 9-12,** circuits with depth $N$ can suffice to obtain good results. However, depth $N^2$ generally provides increased performance in the sense of an improved accuracy of finding the optimal solution. In contrast, the more the depth of the variational circuit is increased, the more options are provided, which, in turn, can lead to sub-optimal performance for some optimisation problems.

**Fig. 5E** depicts a quantum model that may be used during optimisation of the first parametric quantum circuit. When the input data is continuous, the feature map circuit and the first parametric quantum circuit can be combined into a single quantum circuit **532** implemented by a unitary operator $\hat{u}_{x,\theta}$. Otherwise, the quantum model functions as described above with reference to **Fig. 5A.**

In other examples, different configurations may be used. For example, the order of the feature map $\hat{U}_x$ and the first parametric circuit $\hat{U}_\theta$ can be inverted, or one or both may comprise several circuits, which can optionally be applied in any suitable order, e.g., alternatingly.

**Fig. 5F** depicts a quantum circuit for determining an optimal input value $x_{opt} \in \mathcal{X}$ , based on the optimised first parametric circuit implemented by unitary operator $\hat{\mathcal{U}}_{x,\theta_{opt}}$ as shown in **Fig. 5E.** If the quantum model is differentiable, the optimal input value may be determined by analytically differentiating the single unitary operator with respect to the input variables, resulting in a differentiated optimised circuit **562,** here implemented by $\partial_x \hat{\mathcal{U}}_{x,\theta_{opt}}$ . Subsequently, known optimisation methods may be used to determine the optimal input value.

**Fig. 5G** depicts a quantum model that may be used during optimisation of the first parametric quantum circuit. In this example, the first parametric circuit is a quantum kernel circuit. A feature map **572** implemented by a unitary operator $\hat{U}$ is applied to an input variable $x_i$ and the same feature map **574** is applied to a kernel point $x_j$. A measurement $\hat{M}$ **576** is applied to determine a kernel value $k_{ij}$, which is typically based on an overlap, e.g., $k_{ij} = \langle x_i | x_j \rangle$ or $k_{ij} = |\langle x_i | x_j \rangle|^2$. This is repeated for a plurality of kernel points. The approximate function $\tilde{f}(x)$ may be defined, e.g., as $\tilde{f}(x) = \theta_0 + \Sigma_j \theta_i$ $k(x.x_j)$ where $\theta = \{\theta_j\}_{j=0}^{jmax}$ . The parameters $\theta$ may be optimised by minimising a loss function $L$, e.g. $L = \Sigma_i(y_i - \tilde{f}(x_i))$, or by solving a suitable chosen system of equations. Further details about optimising a quantum kernel function are presented in co-pending application EP22160629.6, which is hereby incorporated by reference.

Once optimised parameters $\theta_{opt}$ have been determined, the optimal input value may be found as discussed above, e.g., by differentiation as described with reference to **Fig. 5B** or by using an extremiser quantum circuit and subsequent sampling as described with reference to **Figs. 5C** and **5D.**

**Fig. 5H** depicts a quantum model that may be used during optimisation of the first parametric quantum circuit. In this example, the quantum kernel is variational quantum kernel, wherein the quantum feature map **582,584** is a variational quantum feature map parametrised by a set of parameters $\varphi$.

In each step, the algorithm maps the input to the output by means of only quantum gates and a final quantum measurement, without intermediate conversion to classical data. Hence, it can leverage quantum effects such as superposition for a computational advantage. In particular, the input to the (optimised) cost circuit **510,524,534** is a quantum state. This sets the described method apart from methods in which the determination of cost model and the optimisation are performed separately. In other words, known methods create a cost model that has a classical input, and hence, the quantum advantage of efficiently searching the input space to determine an extremising value is lost in such methods.

For specific datasets, quantum neural networks have been shown to have fast convergence rates and low generalization error, due to quantum parallelism, which depending on the task might overwhelm the classical neural networks performance for the same problem. Additionally, they exhibit a larger model capacity compared to neural networks for various tasks.

The choice of the observable (or cost function) $\widehat{\mathcal{M}}$ is important in any optimisation problem setting. In the examples shown in **Figs. 11** and **12,** a suitable choice is total magnetization, i.e., the sum of magnetization on all qubits $\sum_i \hat{\sigma}_Z^i$ . This way, the large expressibility in the Ansatz can be retained. In problems formulated as an Ising-model, magnetization reflects the average value of the spin (state of the qubit), and thus total magnetization provides information about the state of the system. If the studied problem has a diagonal Hamiltonian (as is the case in many combinatorial optimisation problems, such as Max-Cut), total magnetization is a simple and easy to measure metric (as the calculation of the expectation value involves only measurements in one basis, namely the Z-basis, on all qubits). Total magnetization provides, furthermore, a metric that affects all qubits, avoiding the inefficiency of circuit light cones.

A goal of the QEL algorithms is to find $\boldsymbol{x}_{\text{opt}} \in X$ such that $\boldsymbol{x}_{\text{opt}}$ is an extremal value of a general unknown function $f: X \to \mathbb{R}$ , given only a partial set $\{(x_i, f(x_i))\}$. The goal of QAOA, in contrast, is to find $\boldsymbol{x}_{\text{opt}} \in \{0,1\}^{\otimes N}$ such that $f(\boldsymbol{x}_{\text{opt}})$ is as close as possible to the maximum of $f$, where $f(x) = \sum_{i=1}^{M} C_i(x)$ and each 'clause' $C_i:\{0,1\}^{\otimes N} \to \{0,1\}$ is given.

In the following, the QAOA algorithm will be described using notation similar to the notation used for the QEL algorithm in order to make direct comparison easy. **Fig. 51** shows the QAOA algorithm in the same style and notation as **Fig. 5A** and **Table 1** provides a dictionary for comparison with the notation often used in other works on the subject.

The QEL algorithm assumes an unknown function that maps a discrete or continuous independent variable (input) $x \in X$ to an associated dependent variable (output) $y = f(x) \in \mathbb{R}$ . A finite set of such pairs $\{(x_i, y_i)\}$ is known and is used as training data for the algorithm. As stated, the goal of the algorithm is to find $\boldsymbol{x}_{\text{opt}} \in X$ such that $f(\boldsymbol{x}_{\text{opt}})$ is an extremal value of $f(x)$.

The feature map **592** in QAOA is a simple fixed circuit applying the Hadamard gate on each input qubit to convert the input wavefunction into $|\psi_0\rangle$, an equal superposition of all (possible) input bitstrings. Then a unitary operator $\hat{U}_\theta$ **594,** depending on 2p angles (where $p$ refers to the parameter $p$ as commonly used in this context) and the problem definition, is applied to the input wavefunction to arrive at the final wavefunction $|\psi_\theta\rangle = \hat{U}_\theta |\psi_0\rangle$. By contrast, in the QEL algorithm, the parametrised circuit does, in principle, not depend on the problem definition.

The expectation value of an operator $\hat{M}$ **594,** which is (again) designed according to the problem definition, is calculated with respect to the final wavefunction $|\psi_\theta\rangle$ and the obtained value is used by a classical optimizer. Again, in the QEL algorithm, the operator does, in principle, not depend on the problem definition. The goal of the classical optimizer is to update $\theta$ for the next epoch such that the expectation value of $\widehat{\mathcal{M}}$ is maximized over multiple iterations.

Once the expectation value of $\widehat{\mathcal{M}}$ satisfies some pre-determined criterion for maximization, $\hat{M}$ is disconnected from the circuit and $|\psi_\theta\rangle$ is measured in the Z-basis to obtain the optimal bitstring (or approximation thereof).

**Table 1**

| Present disclosure | Farhi and Gutman |
|---|---|
| Problem definition | Objective function C |
| $|\psi_0\rangle$ | $|s\rangle$ |
| $\hat{\mathcal{U}}_\theta$ | $\hat{\mathcal{U}}(B,\beta_p)\hat{\mathcal{U}}(C,\gamma_p)...\hat{\mathcal{U}}(B,\beta_1)\hat{\mathcal{U}}(C,\gamma_1)$ |
| $|\psi_f\rangle$ | $|\gamma,\beta\rangle$ |
| $\widehat{\mathcal{M}}$ | $C$ |
| $\langle \widehat{\mathcal{M}} \rangle$ | $\langle\gamma,\beta|C|\gamma,\beta\rangle$ |
| $\theta = \{\theta_1, ..., \theta_{2p}\}$ | $\{\gamma_1,..., \gamma_p\} \cup \{\beta_1, ..., \beta_p\}$ |

**Fig. 6A-6E** depict quantum circuits according various embodiments. In particular, **Fig. 6A** shows a basic form of a quantum feature map, which is here illustrated as an example of a 'product' type feature map. In this example, single qubit rotations **604** (here chosen as $R_Y(\phi(x))$) act on each qubit individually and are parametrised by a function $\phi$ of variable x. The function $\phi$ is preferably a non-linear function. For a non-linear feature map encoding, the non-linear function $\phi(x)$ may be used as an angle of rotation. The application **602** of one rotation operation to each qubit in a register may be referred to as a single layer of rotation operations. A product feature map can be further generalized to several product layers, and different functions $\{\phi\}$; for example, several feature maps may be concatenated to represent a multivariable function.

**Fig. 6B** illustrates an example of a derivative quantum circuit for the product feature map of **Fig. 6A.** Differentiation over variable *x* follows the chain rule of differentiation, including qubit operations **612** with shifted phases $R_Y(\phi(x) \pm \pi/2)$. Here, the expectation value of the derivative is written as a sum of separate expectations with shifted phases, repeated for each x-dependent rotation **610$_{1-4}$**.

**Fig. 6C** depicts an example of a generalized product feature map, where the layer of rotations is followed by the unitary evolution generated by Hamiltonian $\hat{H}$ **620**. For complicated multiqubit Hamiltonians, the encoded state may comprise exponentially many unique x-dependent amplitudes. The time interval $\tau$ can be set variationally, or annealed from zero to a finite value during the optimisation procedure.

Preferably, the product feature map has a non-linear dependence on the encoded variable x. In the simplest case, this may correspond to a single layer of rotations as shown in **Fig. 6A.** Such product feature map may be described by the following expression:

$$\hat{U}_\phi(x) = \bigotimes_{j=1}^{N'} R_{a,j}\big(\varphi(x)\big), \qquad (74)$$

where $N' \leq N$ is a number of qubits that is used by the quantum computer for the encoding and the symbol $\otimes_j$ denotes the tensor product. Further, $R_{a,j}(\phi) = \exp\left(-i\frac{\phi}{2}P_{a,j}\right)$ is a Pauli rotation operator for Pauli matrices $\hat{P}_{a,j} = \hat{X}_j, \hat{Y}_j$ or $\hat{Z}_j,$ ($a = X, Y, Z$, respectively) acting at qubit *j* for phase $\phi$. This type of feature map circuit is also described in co-pending application PCT/EP2021/081737, which is hereby incorporated by reference.

The next step is to assign a non-linear function for rotation. In an embodiment, the non-linear function may be selected as $\phi(x) = \arcsin(x)$ and $\alpha = Y$, such that only real amplitudes are generated. The unitary operator of eq. (74) may then be rewritten as (for $N' = N$):

$$\hat{U}_\phi(x) = \bigotimes_{j=1}^{N} \exp\left(-i\frac{\arcsin(x)}{2}\hat{Y}_j\right), \qquad (75)$$

leading to amplitudes that depend on the encoded variables as sin(arcsin($x$) /2) and cos(arcsin(x) /2). Acting on the initial state 10), this feature map may encode the variable as an N-th degree polynomial formed by $\{1, x, \sqrt{1 - x^2}\}$ and products thereof. The redundancy from many qubits thus forms a basis set for function fitting.

The product feature map can be generalized to several layers of rotations $\ell = 1, 2, ..., L,$ various non-linear functions $\varphi_\ell$ and specific subsets of qubits $\mathbb{N}_\ell$ in each layer, and may then be written as:

$$\hat{U}_\phi(x) = \prod_{\ell=1}^{L} \bigotimes_{j \in \mathbb{N}_\ell} R^{(\ell)}{}_{a,j}\big(\phi_\ell(x)\big). \qquad (76)$$

Below, an example of how the quantum feature map can be differentiated is provided, e.g., the example in eq. (74) wherein $\alpha = Y$ rotations and full layer are considered. The derivative for the unitary operator generated by any involutory matrix (length-1 Pauli string in this case) can be written as:

$$\frac{d}{dx}\hat{U}_\phi(x) = \frac{1}{2}\left(\frac{d}{dx}\phi(x)\right)\sum_{j'=1}^{N}\bigotimes_{j=1}^{N'}(-i\hat{Y}_{j'}\delta_{j,j'})R_{Y,j}\big(\phi(x)\big)$$

$$= \frac{1}{2}\left(\frac{d}{dx}\phi(x)\right)\sum_{j'=1}^{N}\bigotimes_{j=1}^{N'} R_{Y,j}\big(\phi(x) + \pi\,\delta_{j,j'}\big), \qquad (77)$$

where Euler's formula can be used to rewrite the derivative into the form of a sum of unitary operators, where x-dependent rotations are shifted one-by-one. Next, the formula may be generalized to the expectation value of any observable $\langle \hat{C} \rangle$ for the encoded state, following the step of standard parameter shift rule. This reads:

$$\frac{\mathrm{d}}{\mathrm{d}x}\left\langle 0 \left| \hat{U}_\phi^\dagger(x)\, \hat{C}\, \hat{U}_\phi(x) \right| 0 \right\rangle = \frac{1}{4}\left(\frac{\mathrm{d}}{\mathrm{d}x}\phi(x)\right)\left(\langle \hat{C} \rangle^+ - \langle \hat{C} \rangle^-\right) \tag{78}$$

where $\langle \hat{C} \rangle^+$ and $\langle \hat{C} \rangle^-$ are the sum of shifted unitary operators:

$$\langle \hat{C} \rangle^\pm = \sum_{j'=1}^{N} \bigotimes_{j=1}^{N'} R_{Y,j}\left(\phi(x) \pm \frac{\pi}{2}\delta_{j,j'}\right) \hat{C}\, R_{Y,j}\left(\phi(x) \pm \frac{\pi}{2}\delta_{j,j'}\right) \tag{79}$$

The corresponding derivative quantum circuits (DQC) are shown in **Fig. 6B,** where differentiation of the cost function for feature map is performed using the chain rule (highlighted rotations **614$_{1-4}$**). A similar strategy can be applied for generic multilayer feature maps and a different choice of non-linear map $\phi(x)$.

Finally, in the cases where the generator of the feature map (encoding Hamiltonian $\hat{H}$ **620)** is not an involutory matrix, they may be rewritten as a sum of unitary operators, and measure the derivative as a sum of overlap using the SWAP test.

In another embodiment, a non-linear quantum feature map may be used which may be referred to as the Chebyshev feature map. Belonging to the product feature map family, this feature map drastically changes the basis set for function representation. As a building block, a single qubit rotation $R_{Y,j}(\phi(x))$ may be used, but with non-linearity introduced as $\phi(x) = 2\,n\,\arccos(x)$, $n = 0,1,2,..$, such that the encoding circuit reads:

$$\hat{U}_\phi(x) = \bigotimes_{j=1}^{N} R_{Y,j}(2n[j]\arccos(x)). \tag{80}$$

Here it is considered that the coefficient $n[j]$ may in general depend on the qubit position. The seemingly small change of factor two multiplication goes a surprisingly long way. Namely, expansion of the rotation using Euler's formula yields:

$$R_{Y,j}(\phi(x)) = \exp\left(-i\,\frac{2\,n\arccos(x)}{2}\hat{Y}_j\right) = \cos(n\arccos(x))\,\mathbb{1}_j - i\,\sin(n\arccos(x))\,\hat{Y}_j$$
$$= T_n(x)\,\mathbb{1}_j + U_n(x)\,\hat{X}_j\,\hat{Z}_j. \tag{81}$$

The resulting decomposition of eq. (81) corresponds to the unitary operation with matrix elements defined through degree-n Chebyshev polynomials of first and second kind, denoted as $T_n(x)$ and $U_n(x)$. Formally, Chebyshev polynomials represent a solution of Chebyshev differential equation:

$$(1 - x^2)\frac{\mathrm{d}^2 y}{\mathrm{d}x^2} - x\frac{\mathrm{d}y}{\mathrm{d}x} + n^2 y = 0, n = 0, 1, 2, 6, \dots \tag{82}$$

wherein

$$y(x) = A\cos(n\arccos(x)) + B\sin(n\arccos(x)) \equiv A\,T_n(x) + B\,U_n(x), |x| < 1, \tag{83}$$

and wherein A, B are some constants. Chebyshev polynomial of the first kind for low degrees can be written explicitly

as $T_0(x)$ = 1, $T_1(x)$ = x, $T_2(x)$ = $2x^2$ - 1, $T_6(x)$ = $4x^6$ - 6x, and higher degrees can be deduced using the recursion relation

$$T_{n+1}(x) = 2\, x\, T_n(x) - T_{n-1}(x).$$

(84)

Similarly, second-kind Chebyshev polynomials can be written as $U_0(x)$ = 1, $U_1(x)$ = 2x, and $U_{n+1}(x)$ = 2 x $U_n(x)$ - $U_{n-1}(x)$. The crucial properties of Chebyshev polynomials are their chaining properties, nesting properties, and simple differentiation rules. The chaining properties for polynomials of the first and second kind read as 2 $T_m(x)$ $T_n(x)$ = $T_{m+n}(x)$ + $T_{|m-n|}(x)$ and $U_m(x)U_n(x) = \sum_{k=0}^{n} U_{m-n+2k}(x)$ , respectively. Derivatives can be obtained as d$T_n(x)$/dx = n $U_{n-1}(x)$. Nesting corresponds to the relation $T_n(T_m(x))$ = $T_{nm}(x)$. Finally, polynomials of different kinds can be converted as $U_n(x) = 2 \sum_j^n T_j(x)$ when j is even, and $U_n(x) = 2 \sum_j^n [T_j(x) - 1]$ when j is odd. Finally, it is noted that Chebyshev polynomials may represent oscillating functions when defined in the x = (-1,1) region, and their derivatives diverge at the boundaries of this interval.

The power of the representation described can be inferred from approximation theory. This theory states that any smooth function can be approximated as $f(x)$ = $\sum_{n=0}^{\infty} A_n T_n(x)$ , $|x| \leq 1$. Chebyshev polynomials form an optimal set of basis functions in the sense of the uniform $L_\infty$ norm. This is why they are at the foundation of spectral algorithms for solving ODEs, and also give an edge in quantum simulation.

As examples of encodings for quantum kernels, two types of Chebyshev quantum feature maps are presented. The first version corresponds to a sparse Chebyshev feature map defined as:

$$\hat{U}_\phi(x) = \bigotimes_{j=1}^{N} R_{Y,j}(2 \arccos(x)).$$

(85)

where the encoded degree is homogeneous and is equal to one. Here the chaining properties $T_n(x)$ and $U_n(x)$ should be remembered, noting that once states with Chebyshev polynomials as pre-factors are created, the basis set will grow further by concatenating elements. In the following, the sparse distinction is dropped and eq. (85) will be simply referred to as the Chebyshev feature map.

The second version corresponds to a Chebyshev tower feature map, which may be defined as:

$$\hat{U}_\phi(x) = \bigotimes_{j=1}^{N} R_{Y,j}(2\, j \arccos(x)),$$

(86)

where the encoded degree grows with the number of qubits, creating a tower-like structure of polynomials with increasing n = j. Again, as polynomials chain together and morph between two kinds and their degrees, the basis set is largely enriched. This is the choice that is exploited when large expressibility is needed without increasing system size and number of rotations. Eq. (86) allows the representation of generic functions, and can be improved further by using layers of rotations as in eq. (76). The results discussed below with reference to **Fig. 9-11** have been obtained using a (simulated) Chebyshev tower feature map to encode the input variables.

Product feature maps may induce non-linear mappings between variable(s) x and quantum states described by tensor products of separate single-qubit wavefunctions. These states are limited to the subspace of product states. To utilize the power of the entire Hilbert space of the system, approaching the amplitude encoding case, independently distinct amplitudes need to be populated, including the subspace of entangled states. To make the described feature maps even more expressive, it is suggested to enhance the product feature maps (and specifically the layered Chebyshev map) with additional entangling layers represented by Hamiltonian evolution. Namely, after the set of single qubit rotations another unitary operator **620** exp(-i $\hat{\mathcal{H}}$ τ) may be considered which acts for time τ and is generated by the Hamiltonian $\hat{\mathcal{H}}$ . The sketch of the circuit is shown in **Fig. 6C.** By choosing $\hat{\mathcal{H}}$ as a complex many-body Hamiltonian, it is ensured that exponentially many amplitudes are generated. It is known that the quantum simulation of dynamics leads to a volume-like increase of entanglement.

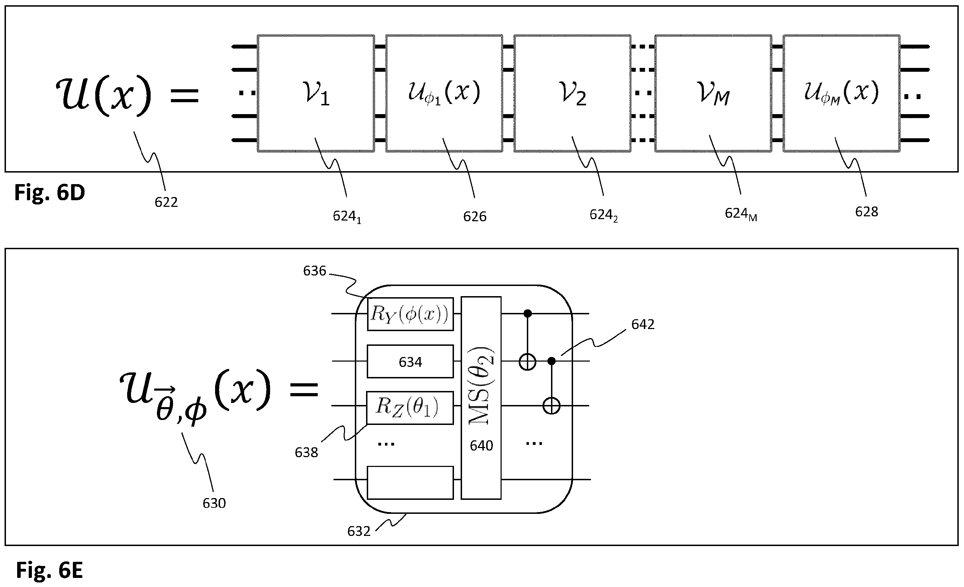

**Fig. 6D** depicts a quantum kernel feature map with a layered structure. In the depicted example, the quantum kernel feature map **622** is defined by a unitary operator $\widehat{\mathcal{U}}$ (x) which comprises a (preferably alternating) sequence of static circuits

$$\mathcal{V}_{1-M}$$

**624$_{1\text{-M}}$** and circuits $\widehat{\mathcal{U}}_{\phi_j}(x)$ **626,628** parametrised by x via a (non-linear) function $\phi_j$. This effectively means x-data is 're-uploaded' at multiple layers, increasing expressivity of the feature map $\widehat{\mathcal{U}}$ (x). Layers **626,628** can be either static (comprising gates that are not changed) or variational (comprising gates which have parameters, such as rotation gates, which can be tuned). This concept of variational quantum kernels is further detailed in **Fig. 6E**, where the quantum kernel feature map $\widehat{\mathcal{U}}$ (x) is parametrised by the type of non-linear function $\phi$ but also by a set of variational parameters, $\vec{\theta}$.

The suitability of a quantum feature map may depend on the regression problem being solved. However, it is not always a priori evident which quantum feature maps would be suitable choices for a given regression problem. Therefore, it makes sense to be able to 'tune' or modify the quantum kernel feature map structure, and potentially even make the quantum kernel feature map 'trainable' in the sense that its parameters be treated on the same footing as other parameters in quantum machine learning such as kernel training, e.g. as presented in co-pending applications EP21190216.8, EP22155513.9 and PCT/EP2021/081737, which are hereby incorporated by reference.

An example of such parametric feature map is depicted in **Fig. 6E**, where a trainable quantum kernel feature map $\widehat{\mathcal{U}}_{\vec{\theta},\phi}(x)$ **630** is expressed as a single unitary operator **632** comprising several subcomponents, such as single-qubit rotations $R_j$ parametrised by a function $\phi$ of x **636**, or parametrised by a FM parameter $\theta$ **638**, or a static gate **634** or **642**. Furthermore, multi-qubit gate operations or analog blocks, such as a block **640**, can be used which may be dependent on either x or $\theta$.

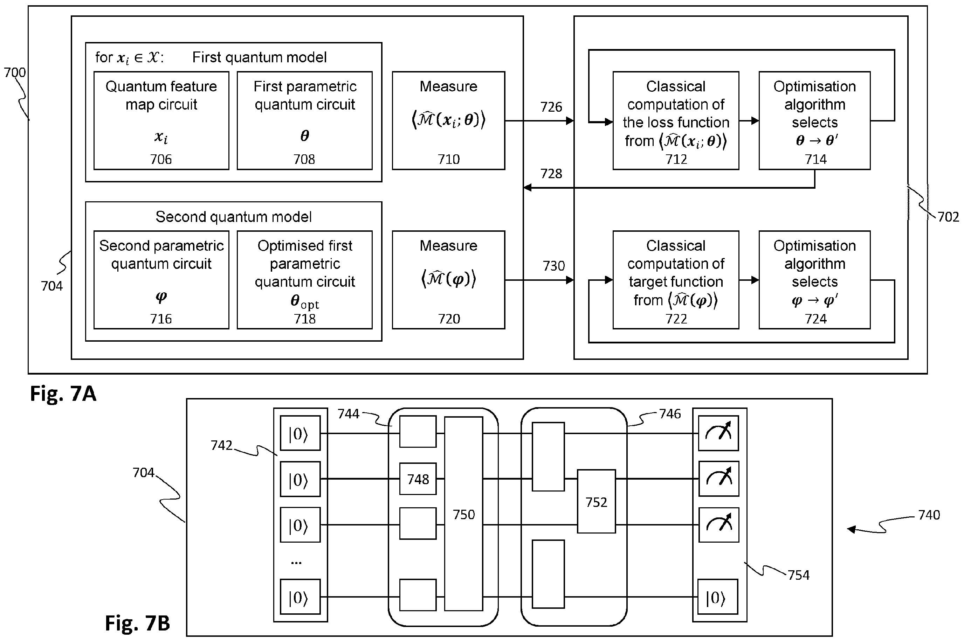

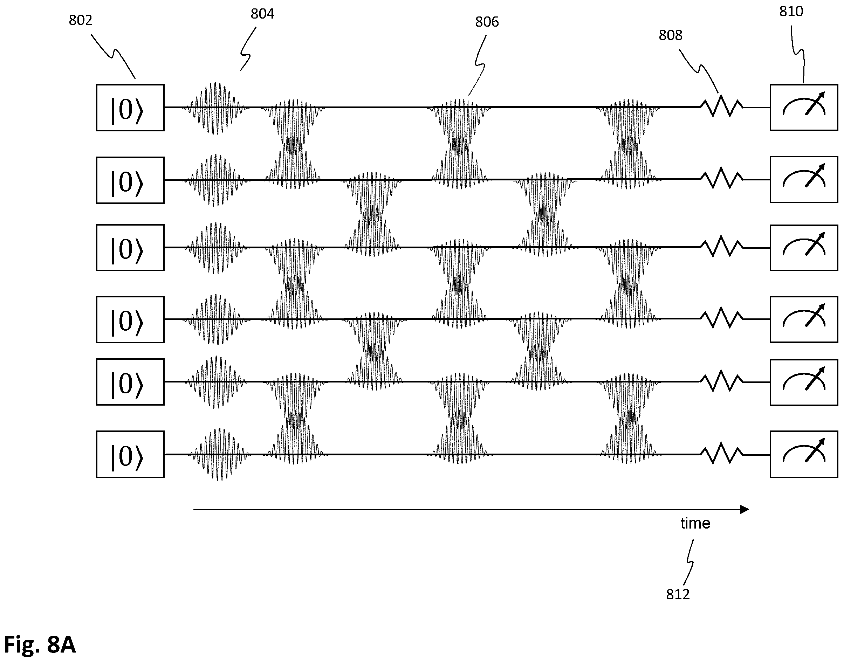

**Fig. 7A** and **7B** schematically depict a method for solving a regression problem using a quantum kernel according to an embodiment. In particular, **Fig. 7A** shows a high-level schematic of the interplay in a hybrid computer system **700** between a classical computer **702** and a quantum computer **704**, while **Fig. 7B** depicts a schematic of the quantum computer **704**. The quantum computer executes gate sequences called 'quantum circuits' **7406**, for example those described above with reference to **Fig. 5A-H**. These quantum circuits typically comprise a qubit initialization step **742**, followed by sequences **744,746** of digital **748,752** and/or analog gates **750**. These gates can be, for example, unitary operations on a quantum state or measurement operations **754**. Examples of hardware-level schematics to implement these quantum circuits are discussed in more detail below with reference to **Fig. 8A-E.**

In the methods described in this disclosure, these quantum circuits can be used to evaluate a parametric quantum circuit, e.g., a quantum neural network, or a quantum kernel. In the depicted example, gate sequences **706** are used to encode an input parameter $x_i \in \mathcal{X}$ into a Hilbert space associated with the quantum computer. For example, for a quantum computer with N spin-½ qubits, this can be $\mathcal{H} = \mathcal{H}_{s_{1/2}}^{\otimes N}$. Gate sequences **706** may be referred to as a quantum feature map circuit. These quantum feature maps can comprise unitary operations (dependent on input parameter $x_i$) such as those discussed above with reference to **Fig. 6A-E**. Additionally, e.g., subsequently, gate sequences **708** are applied which are parametrised by parameters $\theta$. In the first step, the parameters $\theta$ may be initialised with properly chosen initial values, e.g., random angles. Then, a measurement is made of the resulting quantum state, resulting in, e.g., an expectation value $\langle \widehat{\mathcal{M}} (x_i; \theta) \rangle$, typically based on a cost function. Several rounds of applying gate sequences **706,708** and measurement **710** may be required to determine a single expectation value with sufficient accuracy. These steps may be repeated for all input values $x_i$ in a set of training data. The result is output data **726.**

The output data **726** are used by the classical computer **702** to compute **712** a loss function. A classical optimisation algorithm may be used to suggest **714** a new value for parameter $\theta$.

Additionally, if the input space comprises a continuous subspace, derivative quantum circuits, e.g., derivative quantum feature maps, may be determined and their expectation value $d\langle \widehat{\mathcal{M}} (x_i, \theta) \rangle / dx$ is estimated, at point $x_i$. Repeating the procedure for all $x_i \in \mathcal{X}$, function values and derivative values may be collected. The goal of the loss function is to assign a "score" to how well the potential solution (parametrized by the variational angles $\theta$) satisfies the training data, matching output data **726** with the training data to minimize the loss. In order to minimize the loss function, the gradient of the loss function may be computed with respect to variational parameters $\theta$. Using, e.g., the gradient descent procedure (or in principle any other classical optimization procedure **714**), the variational angles may be updated from iteration $n_j$ = 1 into the next one $n_j$ + 1, e.g.: $\theta^{(nj)} \leftarrow \theta^{(nj+1)} - \alpha \nabla_\theta \mathcal{L}$ (with $\alpha$ being here a 'learning' rate and $\mathcal{L}$ the loss function). The above-described steps **706-714** may be repeated until an exit condition is reached. The exit conditions may be chosen as:

1) the maximal number of iterations $n_{\text{iter}}$ reached;
2) loss function value is smaller than a pre-specified value; and
3) loss gradient is smaller than a pre-specified value.

Once the exit condition is reached, the optimised parameters $\theta_{\text{opt}}$ may be determined, which may be used to construct the optimised first parametric quantum circuit **718**.

Then, using the quantum computer **704**, gate sequences **716** parametrised by parameters $\varphi$ may be used to encode a position in the Hilbert space associated with the quantum computer. In the first step, properly chosen initial values may be used, e.g., random angles. Then, the gate sequences **718** encoding the optimised first parametric quantum circuit **718** are applied, and measurements **720** are obtained. The resulting output data **730** are used by the classical computer **702** to compute **722** a target function value. A classical optimisation algorithm then suggests new parameter values $\varphi'$ to adjust gate sequences **716** in order to extremise the target function, until an exit condition is reached. Steps **716-724** are analogous to steps **706-714**, except that different parameters are being optimised and a different function may be evaluated.

When a quantum kernel is used to model the unknown function, the method may comprise evaluating quantum kernels and/or derivatives thereof, i.e., determining a kernel value $\kappa\left(x_i, x_j'\right)$ and/or a kernel derivative value $\nabla_m^n \kappa\left(x_i, x_j'\right)$ (where $\nabla_m^n \kappa(x, y) = \frac{\partial^{m+n} \kappa(x,y)}{\partial x^m \partial y^n}$), given two input parameters $x_i$ (e.g., a function input) and $x_j'$ (e.g., a kernel point). This is done by performing gate sequences **744,746**, which may be referred to as quantum kernel circuits, or quantum kernel feature maps, for each point $x_i$ in the training data set and each kernel point $x_j'$. Subsequently, the kernel value may be measured as a wavefunction overlap (or function thereof). Additionally or alternatively, derivatives of the kernel function can be computed on the quantum computer using similar gate sequences resulting in a measurement of a kernel derivative value. The measurement of a kernel value typically involves repeated measurements on the same circuit, the quantity of interest being an average of the repeated measurements.

Data representing the measurements are transferred to the classical computer **702**. Typically, the data are transferred only once all calculations on the quantum computer are finished. Then, an optimisation step is performed, based on the data received from the quantum computer representing the kernel values and/or its derivatives. The optimisation step may comprise minimising a loss function and/or solving a linear optimisation problem. The optimisation step is performed on the classical computer using a classical algorithm, e.g., in a loop or using linear algebraic methods, with respect to classical parameters $\theta$ of the optimisation problem, and, where necessary, reusing the same kernel values and/or kernel derivative values in each optimisation step.

**Fig. 8A** is a hardware-level schematic of the actions effectuating the logical operations shown in circuit diagrams such as **Fig. 5A-H** and **Fig. 7**. Unitary operators, e.g. those to encode the quantum kernel feature map and derivatives thereof, can be decomposed into a sequence of logical gate operations. These logical gate operations are transformations in a quantum Hilbert space over the qubits encoding an input parameter. In order to transform the internal states of these qubits, a classical control stack is used to send pulse information to a pulse controller that affects one or more qubits. The controller may send a sequence of such pulses in time and for each qubit independently. An initialization pulse is used to initialize the qubits into the $|0\rangle$ state **802**. Then, for example a series of single-qubit pulses is sent to the qubit array in **804**, which may apply a single-layer feature map. Additionally, two-qubit pulse sequences can be used to effectively entangle multiple qubits with a feature map **806**. The duration, type, strength and shape of these pulses determine the effectuated quantum logical operations. **808** indicates a 'break' in the depicted timeline, which means the sequence of gates may be repeated in a similar fashion in the direction of the time axis **812**. At the end of the pulse sequences, one or more of the qubits are measured **810**.

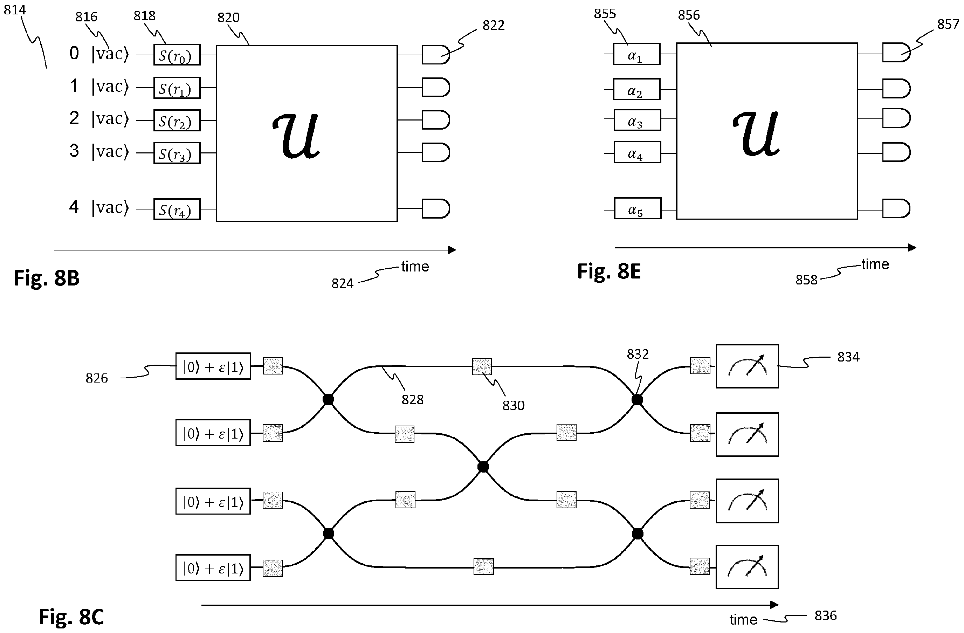

**Fig. 8B** is a hardware-level schematic of the actions effectuating the logical operations shown in circuit diagrams such as **Fig. 5A-H** and **Fig. 7**, specified for a photonic/optical quantum processor. Unitary operators, e.g. those used to encode the quantum kernel feature map and derivatives thereof, can be decomposed into a sequence of optical gate operations. These optical gate operations are transformations in the quantum Hilbert space over the optical modes. In order to transform the internal states of these modes, a classical control stack is used to send pulse information to a pulse controller that affects one or more modes. The controller may formulate the programmable unitary transformations in a parametrised way.

Initially the modes **814** are all in the vacuum state **816**, which are then squeezed to produce single-mode squeezed vacuum states **818**. The duration, type, strength and shape of controlled-optical gate transformations determine the effectuated quantum logical operations **820**. At the end of the optical paths, one or more modes are measured with photon-number resolving, Fock basis measurement **822**, tomography or threshold detectors.

**Fig. 8C** is a hardware-level schematic of the actions effectuating the logical operations shown in circuit diagrams such as **Fig. 5A-H** and **Fig. 7**, specified for a Gaussian boson sampling device. Unitary operators, e.g. those used to encode the quantum kernel feature map and derivatives thereof, can be decomposed into a sequence of optical gate operations. These optical gate operations are transformations in the quantum Hilbert space over the optical modes. In order to transform the internal states of these modes, a classical control stack is used to send information to optical switches and delay lines. The controller may formulate the programmable unitary transformations in a parametrised way.

Initially the modes **826** are all in a weak coherent state, which is mostly a vacuum state with a chance of one or two photons and negligibly so for higher counts. Subsequently, the photons travel through optical waveguides **828** through delay lines **830** and two-mode couplers **832** which can be tuned with a classical control stack, and which determines the effectuated quantum logical operations.

At the end of the optical paths, one or more modes are measured with photon-number resolving **834**, or threshold detectors.

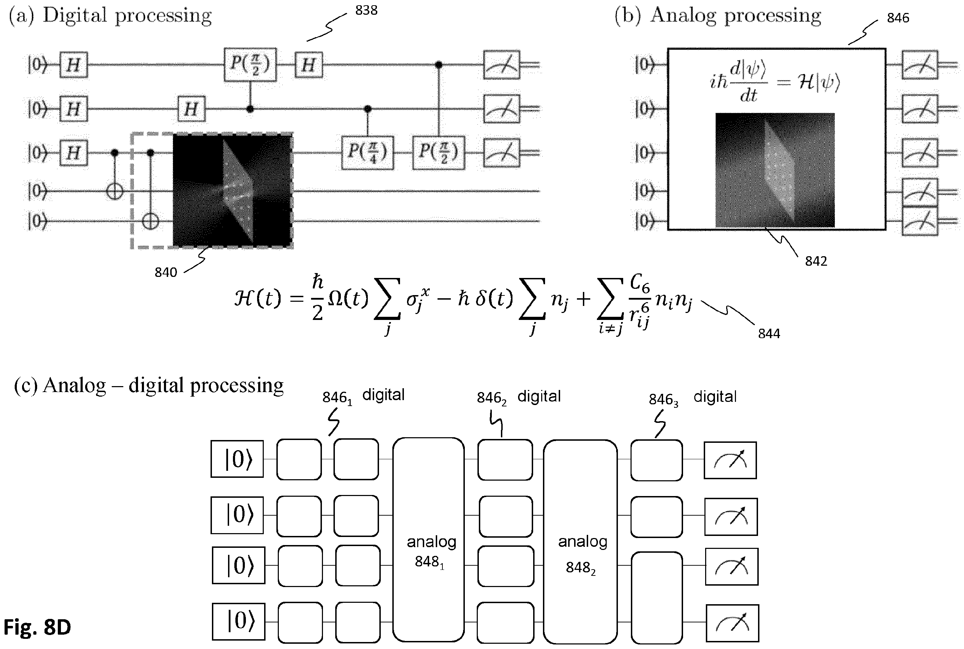

**Fig. 8D** is a hardware-level schematic of the actions effectuating the logical operations shown in circuit diagrams such as **Fig. 5A-H** and **Fig. 7**, which may be executed on a neutral-atom-based quantum computer. On this type of hardware, unitary operators, e.g. those used to encode the quantum feature map and derivatives thereof, can be decomposed in two different kinds of operations: digital or analog. Both of these operations are transformations in the quantum Hilbert space over atomic states.

Schematic (a) of **Fig. 8D** depicts a digital quantum circuit **838**, wherein local laser pulses may be used to individually address neutral atoms to effectuate transitions between atomic states which effectively implement sets of standardized or 'digital' rotations on computational states. These digital gates may include any single-qubit rotations, and a controlled-pauli-Z operation with arbitrary number of control qubits. Additionally, such digital gate operations may also include 2-qubit operations.

Schematic (b) of **Fig. 8D** depicts an analog mode **846** of operation, wherein a global laser light pulse may be applied to groups of, or all, atoms at the same time, with certain properties like detuning, Rabi frequencies and Rydberg interactions to cause multi-qubit entanglement thereby effectively driving the evolution of a Hamiltonian **844** of the atomic array in an analog way. The combined quantum wavefunction evolves according to Schrödinger's equation, and particular,

unitary operators $\hat{\mathcal{U}} = \mathrm{e}^{-\mathrm{i}\hat{\mathcal{H}}t}$, where $\hat{\mathcal{H}}$ denotes the Hamiltonian and t the time, can be designed by pulse-shaping the parametrised coefficients of the Hamiltonian in time. This way, a parametric analog unitary block can be applied, which entangles the atoms and can act as a variational ansatz, or a feature map, or other entanglement operation.

The digital and analog modes can be combined or alternated, to yield a combination of the effects of each. Schematic (c) of **Fig. 8D** depicts an example of such digital-analog quantum circuit, including blocks **846$_{1-3}$** of digital qubit operations (single or multi-qubit) and analog blocks **848$_{1-3}$.**

It can been proven that any computation can be decomposed into a finite set of digital gates, including always at least one multi-qubit digital gate (universality of digital gate sets). This includes being able to simulate general analog Hamiltonian evolutions, by using Trotterization or other simulation methods. However, the cost of Trotterization is expensive, and decomposing multi-qubit Hamiltonian evolution into digital gates is costly in terms of number of operations needed.

Digital-analog circuits define circuits which are decomposed into both explicitly-digital and explicitly-analog operations. While under the hood, both are implemented as evolutions over controlled system Hamiltonians, the digital ones form a small set of pre-compiled operations, typically but not exclusively on single-qubits, while analog ones are used to evolve the system over its natural Hamiltonian, for example in order to achieve complex entangling dynamics.

It can be shown that complex multi-qubit analog operations can be reproduced/simulated only with a relatively large number of digital gates, thus posing an advantage for devices that achieve good control of both digital and analog operations, such as neutral atom quantum computer. Entanglement can spread more quickly in terms of wall-clock runtime of a single analog block compared to a sequence of digital gates, especially when considering also the finite connectivity of purely digital devices.

Further, digital-analog quantum circuits for a neutral quantum processor that are based on Rydberg type of Hamiltonians can be differentiated analytically so that they can be used in variational and/or quantum machine learning schemes, including the differential quantum circuit (DQC) schemes as described in this application.

In order to transform the internal states of these modes, a classical control stack is used to send information to optical components and lasers. The controller may formulate the programmable unitary transformations in a parametrised way.

At the end of the unitary transformations, the states of one or more atoms may be read out by applying measurement laser pulses, and then observing the brightness using a camera to spot which atomic qubit is turned 'on' or 'off', 1 or 0. This bit information across the array is then processed further according to the embodiments.

**Fig. 8E** is a hardware-level schematic of the actions effectuating the logical operations shown in **Fig. 5A-H**, specified for a photonic/optical quantum processor. The quantum model can be decomposed into a sequence of optical gate operations. These optical gate operations are transformations in the quantum Hilbert space of the photons. In order to transform the internal states of these photons, a classical control stack is used to send information to a universal multiport interferometer. The controller may formulate the programmable unitary transformations in a parameterized way .

Initially the photons **855** are in Fock states, weak coherent states or coherent states. The duration, type, strength and shape of controlled-optical gate transformations determine the effectuated quantum logical operations **856.**

At the end of the optical paths, the modes are measured with photon-number resolving, Fock basis measurement **857**, tomography or threshold detectors.

**Fig. 9-11** depict various examples of application of an algorithm according to an embodiment to both the discrete and continuous variable cases.

**Fig. 9** depicts an example of application of a method according to an embodiment to a continuous-variable case. In this example, the method is used for continuous-variable modelling and optimisation, which concerns the task of fitting a model to a dataset comprising continuous coordinates $x_i$ and continuous values $f_i$. In the depicted example, the method is applied to a simple continuous function,

$$f(x) = \sin(5x), \tag{87}$$

with the aim of maximizing it in the domain [0,1]. As a training dataset, only values away from the maximum are provided, to avoid potential biases during the modelling and optimization process.

The model is implemented as a quantum neural network circuit with $N = 3$ qubits in the register. The model is started in the zero state $|\varnothing\rangle$. A feature map with $\hat{R}_y(2j \arccos(x))$ is applied, where $j$ is the qubit index starting from 1 and $\hat{R}_y$ is a single-qubit Pauli-Y rotation. Other implementations may use different feature maps, e.g. as discussed with reference to **Fig. 6C.** Next, a hardware-efficient variational Ansatz, which is a variational Ansatz of depth typically equal to the number of qubits (in this example 3), is used, and the total magnetization $\hat{\mathcal{C}} = \sum_j \hat{\sigma}_Z^j$ is measured such that the quantum model is $f(x) = \langle \hat{\mathcal{C}} \rangle$. Other implementations could use, e.g., a quantum-kernel-based approach.

In a first step, the variational Ansatz is optimised using an ADAM optimizer. The optimisation shows oscillations that originate from circling around the optimum value of the model function, due to momentum in the ADAM optimizer.

In particular, graph **902** is a plot showing the original function $y = f(x)$ as a function of $x$, the training data selected from this function (represented with circles), the initial QNN model, the trained QNN model, and the optimum value of the model (represented with a star), which closely resembles the true optimum. Graph **904** is a plot showing the model loss (as mean square error) as a function of epoch number in the ADAM optimization. The model was trained with a learning rate of 0.5 and 50 epochs. Furthermore, the extremiser circuit's mean square error ("Optim. error") as a function of optimization iteration number.

**Fig. 10** depicts an example of application of a method according to an embodiment to a differential equation. This example shows how a differential equation can be solved by the generalization of the given methods as described in more detail below. After solving the differential equation, an extremal value of the function within the input variable's domain is determined.

As an example, the following 1D ordinary differential equation (ODE) may be considered:

$$\partial f / _{\partial x} = -\sin(10x) + 3\cos(25x) - 2x + 5/4, \qquad f(0) = 0. \tag{88}$$

The solution can be computed analytically in a straightforward manner, and gives rise to a non-trivial oscillatory behaviour as shown in **Fig. 10B.**

As a universal function approximator (UFA), a 6-qubit QNN is used with a Chebyshev Tower feature map (discussed above with reference to **Fig. 6**). The universal function approximator is trained on 50 points spread uniformly over the domain $x \in \{0,1\}$. A good agreement between the trained solution and the analytical solution is obtained, in a loss optimisation trajectory of less than 300 epochs.

In **Fig. 10A**, graph **1002** shows the analytical solution to the above eq. (88), its approximate solution found using a differentiable quantum circuit (DQC) using a trained quantum neural network (labelled NN), and overlaid the extremization trajectory of an initial guess starting at $x = 0.25$. The differential quantum circuit may be implemented and trained as described in co-pending application PCT/EP2021/081737, for example. In **Fig. 10B**, graph **1004** shows the model training loss trajectory with 250 ADAM epochs at a learning rate of 0.1 and 20 L-BFGS epochs at a learning rate of 0.05.

Next, the value of the trained model is maximised with respect to the continuous input x, leading to a good agreement between exact values and extremiser suggestions of less than 1 % errors. In **Fig. 10C**, graph **1006** depicts the absolute deviation between the extremizer's suggestions versus exact extremal value and extremizing inputs, respectively, versus extremizer epoch number; a learning rate of 0.2 was chosen for 100 epochs using ADAM.

While this example showed the solving of a simple ODE in 1D, the method can be used for any general (set of) PDE(s) or even SDEs, as well as extremizing solutions found by means of model discovery.

Furthermore, the examples discussed with reference to **Fig. 9** and **Fig. 10** concerned the specific extremization case of maximizing a 1D function. More complex target 'constraints' may be considered as well, such as maximizing the sum of two or more functions, the product of two or more functions, or minimizing some other design constraint which is a function of the model itself, for example. Such generalizations have been discussed in more detail with reference to **Fig. 4.**

**Fig. 11A-C** show examples how the extremal learning algorithm can be applied also to cases where (at least some) input variables are discrete-valued, where derivatives cannot be computed in a straightforward manner.

**Fig. 11A-C** depicts examples of application to a discrete-variable case. A well-studied problem in the field of combinatorial optimisation is the Maximum Cut (Max-Cut) problem, since many other combinatorial problems can be reduced to the Max-Cut problem. Furthermore, this problem is considered as a potential application to reach quantum advantage in the near term, and thus has been explored thoroughly. Besides the potential quantum speedup, Max-Cut provides two other advantages: i) the quantum algorithm may be tested with a classical dataset, and ii) the implementation is relatively straightforward, due to the simple correlations involved (only pairwise correlations, no bias for any point being in a particular cluster).

Max-Cut is an NP-hard graph partitioning problem that groups a graph into a plurality of partitions/clusters (typically two, but it can be more than two) by cutting a maximum number of edges in the graph (in an unweighted graph) or a set of edges with a highest summed weight (in a weighted graph). It is assumed that the application under investigation can be formulated as an undirected graph $G = (V,E)$, with edges $E$ connecting vertices $V$ of the graph. A weight $w_{ij}$ between vertices $i$ and $j$ is a positive real number associated with the edge between vertices $i$ and $j$. When there is no edge between two vertices, the corresponding weight may be assumed equal to 0. Cutting a set of edges $\delta(S_1) \subset E$ will separate the vertices of the graph into two disjoint sets $S_1$ and $S_2$. The cost of the cut $w(\delta(S_1))$ is calculated as the sum of all weights of edges connecting vertices in $S_1$ with vertices in $S_2$:

$$w\left(\delta(S_1)\right) = \sum_{i \in S_1, j \in S_2} w_{ij} \tag{89}$$

As the name suggests, the goal is to find the maximum cost amongst all possible cuts, which provides the solution to the optimisation problem. The most common approach when solving Max-Cut is to construct a physical system with as many qubits as the vertices of the graph. Then, one can formulate the problem as a QUBO problem that can easily be mapped into an Ising problem.

As was explained above, Quadratic Unconstraint Binary Optimisation (QUBO) is the problem of minimizing a quadratic polynomial over binary variables; the generalised form is referred to as Polynomial Unconstraint Binary Optimisation (PUBO). Although the following example refers to QUBO, the steps may be generalised to PUBO models. The quadratic polynomial is of the form

$$E(X_1, X_2, \ldots, X_N) = \sum_{i=1}^{N} \sum_{j=1}^{i} Q_{ij} * x_i * X_j \tag{90}$$

with $x_i \in \{0,1\}$ and $Q_{ij} \in R$, where the matrix $Q_{ij}$ is an upper diagonal matrix with diagonal terms being the linear coefficients and nonzero off-diagonal terms being the quadratic coefficients.

Any classical QUBO problem can be mapped to a quantum (Ising) Hamiltonian with $\hat{\sigma}_Z$ as the diagonal terms) and $\hat{\sigma}_Z * \hat{\sigma}_Z$ as the off-diagonal terms. Here, the computational basis is assumed to be the Z basis, as is common. This follows from the following considerations.

First, the classical variables $x_i$ are replaced with $\left(1 - \hat{\sigma}_Z^i\right)/2$. Then, the double summation can be written as $\sum_{i=1}^{N} \sum_{j=1}^{i} Q_{ij} * \left(1 - \hat{\sigma}_Z^i\right) * \left(1 - \hat{\sigma}_Z^j\right)/4$. Therefore, the Hamiltonian will have $\hat{\sigma}_Z$ and $\hat{\sigma}_Z * \hat{\sigma}_Z$ terms, which can be explicitly written in terms of $Q_{ij}$ (QUBO) parameters.

The diagonal terms ($\hat{\sigma}_Z$) are inferring a bias on the indexed vertex and since there is no preference for any qubit to be in a given cluster, these terms can be avoided in the Hamiltonian. Therefore, the $Q_{ij}$ can be constructed in such a way that the diagonal terms will be cancelled. In general, QUBO is a generic formulation that allows for biases like that, however for the Max-Cut problem that is designed based on the pairwise distance of the vertices only the $\hat{\sigma}_Z * \hat{\sigma}_Z$ interactions between vertices are of importance.

The encoding of the Max-Cut problem can be given by a cost Hamiltonian $\hat{\mathcal{H}}_C$ :

$$\hat{\mathcal{H}}_C = -\frac{1}{2} \sum_{i,j} C_{ij} \left(1 - \hat{\sigma}_Z^i \hat{\sigma}_Z^j\right) \qquad (91)$$

where $\hat{\sigma}_Z^i$ denotes the Pauli z-matrix of spin $i$ with eigenvalues $z_i \in \{-1, 1\}$ and $C_{ij}$ denotes a cost matrix. In the basis that diagonalizes all $\hat{\sigma}_Z^i$ (commonly referred to as the computational basis), the Hamiltonian is a function of the variables $z_i$. The eigenvalue $z_i = +1$ (-1) of the $\hat{\sigma}_Z^i$ operator indicates that vertex $i$ belongs to subset $S_1$ ($S_2$).

For this example, $N/2$ pairs of coordinates $(x,y)$ belonging to cluster $S_1$ and another $N/2$ pairs of coordinates belonging to cluster $S_2$ were randomly generated, where $N$ denotes the number of qubits of the used quantum system. By construction, the two clusters are separated by a distance variable, that can be set arbitrarily. The larger the distance variable, the more separated the clusters, and the easier the Max-Cut problem is solved. Therefore, based on this construction of clearly separated clusters, the optimal solution is known before the optimisation algorithm is applied, which allows to assess the performance of the algorithm.

In these examples, the first parametric quantum circuit or cost circuit is implemented as a variational circuit, more in particular as a quantum neural network, referred to as the Cost-QNN. The second parametric quantum circuit or extremiser circuit is similarly implemented as a quantum neural network, referred to as the Extremiser-QNN. The training to obtain a trained model via the Cost-QNN is similar to that in the continuous case, e.g., as described with reference to **Fig. 5A**, using a classical optimiser to optimise the network parameters $\theta$. Although the original optimisation problem was formulated as a Max-Cut problem, the Cost-QNN does not comprise any assumptions based on the nature of the optimisation problem, but only maps input/output relationships. Thus, the same Cost-QNN may be used to model a wide variety of optimisation problems.

Then, the optimised parameters $\theta_{opt}$ of the Cost-QNN are frozen and its feature map is removed. Subsequently, the Extremiser-QNN (or Extremiser Feature Map) parametrised with parameters $\varphi$ is inserted in place of the removed feature map the new model is trained, similar to what was described with reference to **Fig. 5C.** At every iteration, the expectation value of the total magnetization $\hat{C} = \sum_j \hat{\sigma}_Z^j$ is measured. The parameters of the Extremiser-QNN are suggested by a classical optimiser. Finally, when the training has finished and the optimal parameters $\varphi_{opt}$ have been determined, the Cost-QNN is removed and the remaining model (i.e., the bare Extremiser-QNN) is sampled. By measuring the output of the Extremiser-QNN, the result can be mapped to the optimal input variable that is the solution to the optimization problem.

System sizes with 4, 6, and 8 qubits were investigated to study problems with 4, 6, and 8 coordinate pairs, respectively. Furthermore, various sizes of training datasets were used to train the QEL algorithm. The numerical simulations involve training the Cost-QNN and Extremiser feature map until convergence based on the provided dataset. Typically, 50 training epochs sufficed for the Cost-QNN and 150 training epochs sufficed for the Extremiser feature map. The simulation for each training dataset was repeated 100 times with a new randomly selected group of samples every time (different sampling seed). The classical optimisation part that finds the best $\theta$ and $X$ parameters was done with the BFGS and LBFGS algorithm, respectively.

**Fig. 11A-C** depict results of numerical simulations for systems with $N$ = 4, 6, and 8 qubits respectively, with a distance between the two clusters being chosen equal to 5. The total probability to sample any of the optimal bitstrings is provided for each training dataset size on the y-axis and the amount of training samples used on the x-axis. In addition, it is indicated when the total probability exceeds a specific threshold, as shown in the legend.

When the number of training samples is increased, the algorithm is able to find the optimal solutions, although the total probability of the optimal solutions is decreased. The reason for the decreased probability of the optimal solutions is that the algorithm is enhancing the probability of all known to training samples, so that it does not over-enhance the probability of the optimal ones, in order not to overfit. On the other hand, it can be observed that when a small amount of training samples is provided, the QEL algorithm is able to suggest at least one of the optimal solutions in most cases.

**Fig. 11D** represents the performance of the algorithm once again for the Max-Cut problem with two clusters separated by distance 5; however, here the performance of different problem sizes ($N$ = 4,6,8) is compared for one of the thresholds shown in **Fig. 11A-C**, namely 20%. To make a fair comparison, the x-axis has been scaled accordingly, so that problems of different sizes can be compared based on the percentage of the training dataset over the $2^N$ possible samples. Even for small training datasets, the QEL algorithm is able to suggest optimal solutions with a probability higher than 20 % with high frequency. On the other hand, when the size of the training dataset approaches $2^N$, the frequency of suggesting optimal solutions with a probability greater than 20 % increases significantly. The explanation of this phenomenon is that when most of the possible samples are used during training, the algorithm has a better understanding of what the probability of each sample should be, and therefore the probability of the optimal solutions are enhanced. In the case of a small training dataset, the algorithm predicts the probabilities of unknown samples less reliably, and therefore only enhances the ones that are regarded as the optimal solutions when the model is sufficiently trained.

In order to enhance the performance of the algorithm, the model output may be scaled so that the algorithm is able to predict optimal solutions with large probabilities, even when the optimal solutions are not included in the training dataset. Thus, at least one of the optimal solutions may be suggested, also in cases when a small number of training samples is used (compared to the total number of possible samples). As mentioned above with reference to **Fig. 5A**, a variable $\alpha \geq 1$, e.g. $\alpha \in [1.0, 100.0]$ and a constant $\beta = 0.5$ may be defined to scale the model output. This allows the algorithm to understand the true range of the $2^N$ costs.

It is found, using the same Max-Cut formulation and the same problem sizes $N$ = 4, 6, 8, that the total probability of the optimal bitstrings increases as $\alpha$ increases. By construction, it is known that there are two optimal solutions regardless of the problem size in such a Max-Cut formulated problem. Therefore, for each $\alpha$ value, it is tracked whether the two optimal solutions correspond to the suggested highest two probabilities for solutions by the algorithm. As $\alpha$ is increased, the total probability of the optimal solutions increases, and the algorithm is able to find at least one of the two optimal solutions. In the case of Max-Cut, the two optimal solutions are complementary and have the same target value, but in this example, the algorithm is not programmed to search for symmetrical solutions. Therefore, finding only one of the two optimal solutions is sufficient. In this investigation, the number of samples is deliberately kept small to test the performance of the algorithm in the extreme case of very few training samples available. The number of samples used is 2/16, 2/64, and 4/256 for $N$ = 4,6,8, respectively.

As explained above, Max-Cut problems only include constant and pairwise correlation terms. However, the algorithm can also be applied to more general problems, including higher-order terms (up to a fixed order). In these examples, the solution does not involve clustering vertices into complementary groups. Therefore, the problem is not classified as Max-Cut anymore, rather it is an artificially created optimisation problem, where one attempts to find the maximum cost solution.

In an example, a problem with $N$ points is considered, where $N$ is the number of qubits of the system. The problem definition comprises nearest-neighbour interactions up to a fixed order. The cost of each sample is computed in a similar way to the Max-Cut formulation, but in this example, the weight of each correlation is randomly generated, thus creating an energy landscape much different from Max-Cut. In such a formulation, there are no symmetries in the energy landscape and the optimal solutions will vary depending on the construction.

**Fig. 12A-D** depict further examples of application of a method according to an embodiment to a discrete-variable case. In these examples, nearest-neighbour correlations up to 2nd order and up to 3rd order are considered. Second-order nearest-neighbour correlations enhance the Max-Cut formulation by including linear terms as well. The example with nearest-neighbour correlations up to 3rd order provides a trend of how the algorithm will perform when higher-order correlations are included. However, when higher-order correlations between the qubits exist, the problem becomes much harder to solve; thus, fine-tuning the parameters of the QEL algorithm might be required. In the depicted examples, the QEL parameters were kept the same in all of the simulations, regardless of the highest-order included.

Similarly to the Max-Cut analysis discussed above with reference to (in particular) **Fig. 11B**, **Fig. 12A** shows that when the training dataset size is increased, the algorithm can find the optimal solutions with high probability. Furthermore, even when a small training dataset size is provided, the algorithm is able to suggest the optimal solutions. Comparing this formulation to Max-Cut (without higher orders), however, showcases that the performance of the QEL algorithm is slightly worse when all correlations (up to 2nd order) are included. Although the algorithm is still successful in suggesting the optimal solutions with high probability, the addition of the first-order correlations slightly decreases the performance.

**Fig. 12B** shows the percentage of instances for each problem size that provide a total probability of the optimal solutions higher than the set threshold (20 %). It can be observed that as the number of training samples increases and approaches the $2^N$ samples, the algorithm is able to predict all possible samples with an adequate probability instead of only predicting a few samples with high probability. This leads to the total probability of the optimal solutions decreasing. However, that does not mean that the algorithm is unable to suggest at least one optimal solution. Comparing **Fig. 12B** with **Fig. 11D**, it can be seen that as the size of the problem increases, the algorithm will suggest the optimal solutions with a lower probability in the nearest neighbour with the inclusion of up to second-order correlations. This can be attributed to the fact that the Max-Cut problem is easier to solve that the more general problem including all nearest neighbour correlations.

Once again, in order to increase the QEL algorithm's performance, especially when small datasets are used to train the model, the model output may be scaled using the variable $\alpha$. For the case of the nearest-neighbour problem with correlations up to the second order. As was the case in the Max-Cut $\alpha$ investigation, increasing the range of the model output leads the algorithm to suggest at least one of the optimal solutions, even when the training dataset size is extremely small. However, it may be noted (once more) that this process was easier in the Max-Cut formulation.

Finally, the nearest-neighbour high-order correlation problem is enhanced by including $3^{rd}$-order correlations as well. In **Fig. 12C**, a similar analysis is shown as for the other discrete variable cases as depicted in **Figs. 11B** and **12A.**

Although the problem is now much harder to solve, the QEL algorithm is still capable of suggesting the optimal solutions. Its performance is clearly reduced compared to the other two formulations, but, as presented in the corresponding figures, it is still capable of suggesting the optimal solutions with adequate probability (> 5 %). Thus, a limited amount of sampling may provide an optimal solution. Furthermore, scaling of the model output provides the same benefits as with the other two formulations.

As shown in **Fig. 9-12D**, the algorithm is able to find the input of a 'hidden' (i.e., not explicitly known) function that extremizes the output of that function, given only sparse training data of input-output relations of that function. In particular, no data about the problem structure need be applied, so that the method is very widely applicable.

The algorithm is a flexible and efficient framework that can accept as input both discrete and continuous variables and extremize the underlying functional relationship or a function thereof, e.g., its derivative. This provides an advantage over other currently known algorithms.

Although the method itself is a hybrid method, each step uses only quantum modules (e.g., QNNs), with no intermediate reduction to classical data. This offers a clear advantage over known methods. This allows to take advantage of the quantum parallelism of quantum mechanics. Such a formulation can lead to sufficiently large speedups, depending on the application, and can offer a quantum advantage over its classical counterparts.

Moreover, by utilizing only expectation value measurements as opposed to tomography, the method is more resilient to noise affecting the quantum system during computation. This leads to better performance, especially during the current NISQ era.

Another benefit of the design of the QEL algorithm is that it does not rely on a pre-trained model, which is the typical case for combinatorial optimisation. As a result, the current method is more flexible with respect to the input data. For example, the method can handle both 'classical' data (as shown in the discrete-variables case discussed above with reference to **Figs. 11A-12B**) and 'quantum' data (as shown in the continuous-variables case discussed above with reference to **Figs. 9,10**).

As indicated by the results of the numerical simulations, the algorithm is able to suggest the optimal solutions to the optimisation problem with high probability, even in the case where an extremely small training dataset size is provided. The shown examples used essentially the same settings in all of the experimentation regardless of any parameters (problem size, training dataset size, etc.); however, the method may be further improved by tailoring the model parameters based on the problem definition. For example, a scaling factor $\alpha$ for the model output can be introduced and modified in order to increase the performance of the QEL algorithm. This yielded the desired increase in performance. Other parameters may be added and/or adjusted in a similar method.

In the examples discussed above, the quantum execution was simulated with perfect wavefunction simulators, which only allow simulation up to a certain size. However, this does not constitute a limitation of the algorithm; this rather showcases the limitations of classical simulators. There is no inherent size limitation for the algorithmic size.

As the hardware becomes more mature (less error prone, faster, more qubits, etc.), the algorithm can be directly implemented into it, due to the straightforward implementation of all required modules (feature map, QNN). Based on the same reasoning, there is no obvious limitation in applying the algorithm in any type of hardware at the moment.

A further example is provided below. This example from the field of product design is provided to clarify the utility of quantum extremal learning even in cases where discrete variables are not involved, inherited from its incorporation of differentiable quantum circuits.

If a driving power source has a fixed amplitude, there is a particular driving frequency called the resonant frequency at which the steady-state amplitude of a driven RLC oscillator is maximum. The commercial applications of electronic RLC oscillators are plentiful, ranging from television receivers to induction heaters.

It is easy to see why it may be desirable to know the resonant frequency of the RLC circuit (for instance, to maximize efficiency). Consider an application where a device desires to always drive an internal RLC oscillator at resonant frequency. Being an RLC oscillator, it is known to be governed by the equation:

$$L \frac{\partial^2}{\partial t^2} I(t) + R \frac{\partial}{\partial t} I(t) + \frac{1}{C} I(t) = \omega V_0 \cos(\omega t). \qquad (92)$$

It is assumed that one has full control over the driving power source and that the output $I$ and the internal temperature $T$ of the device can be measured. As the device operates and generates heat, however, it slowly alters the values $R$, $L$ and $C$ of the circuit components and changes the resonant frequency. The internal temperature of the device cannot be directly controlled, nor can the actual (transient) values of the circuit components be measured. Assuming the value of the device components $R$, $L$ and $C$ only depends on the internal temperature of the device, this is an ideal problem to demonstrate the utility of extremal learning.

In this case, the unknown function is $I(t)$. The present methods can leverage differentiable quantum circuits to solve eq. (92) governing the RLC circuit (assume, for the moment, it is not easily solvable analytically). The goal is not, however, to optimize the unknown function $I$ as a function of time $t$ but driving frequency $\omega$. Of course, this is also possible within the framework by treating both time $t$ and the parameter driving frequency $\omega$ in eq. (92) as variables and solving for $I(t; \omega)$. In this case, the 'data' regarding the unknown function (or, in terms of the generalized framework discussed above with reference to **Fig. 4**, the 'condition' in eq. (7)) is simply the differential equation in eq. (92). Once the model is learned, it can be extremized to find the resonant frequency.

There is still more to this problem. Eq. (92) alone does not take into account the variation of the resonant frequency as a function of the internal temperature of the device. The methods described in this disclosure allow to incorporate this information too, by adding the output of the circuit at various temperatures and frequencies as additional data points. With sufficient data points and a circuit with sufficient expressivity, it is possible to model $I(t; \omega)$ and then extremize it to find the resonant frequency at any temperature $T$.

Notice the role of the different independent variables/parameters in this example:

- The variable $t$ is related to the unknown function $I$ through a differential equation. The differential equation is the 'data' used to learn the dependence on this variable.
- The relation between parameter $T$ and the unknown function $I$ is unknown and is learned from experimental data, as opposed to being dictated by an equation. The parameter $T$ can be measured, but not directly controlled. The dependence on this variable is learned from experimental data.
- The parameter $\omega$ is related to the unknown function $I$ through a differential equation, but it is a parameter in the equation, not a differentiating variable. The parameter $\omega$ can be adjusted and the goal is to find the value of $\omega$ that extremizes the amplitude of $I(t)$ at a given temperature $T$.

The present method is flexible enough to tackle the problem even in a case like this where information about the system is available in mixed form. Moreover, one or several of the parameters could be discrete.

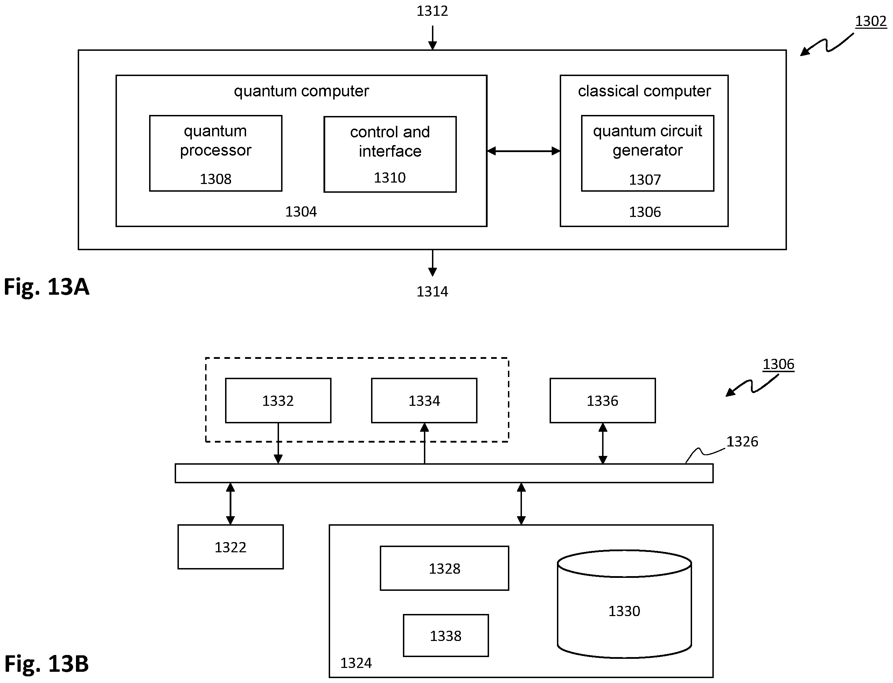

**Fig. 13A** depicts a system for determining a solution for an optimisation problem using quantum computation according to an embodiment. The system **1302** may include a quantum computer system **1304** comprising one or more quantum processors **1308**, e.g. a gate-based qubit quantum processor, and a controller system **1310** comprising input output (I/O) devices which form an interface between the quantum processor and the outside world, e.g. the one or more classical processors of a classical computer **1306**. For example, the controller system may include a system for generating control signals for controlling the quantum processing elements. The control signals may include for example a sequence of pulses, e.g. microwave pulses, voltage pulses and/or optical pulses, which are used to manipulate qubits. Further, the controller may include output device, e.g. readout circuits, for readout of the qubits and the control signals for readout of the quantum processing elements, e.g. a readout pulse for reading a qubit. In some embodiments, at least a part such readout circuit may be located or integrated with the chip that includes the qubits.

The system may further comprise a (purely classical information) input **1312** and an (purely classical information) output **1314.** The data processor systems may be configured to solve an optimization problem using the quantum computer. Input data may include information about the optimisation problem one wishes to solve. This information may include training data such as input-output pairs, a differential equation, boundary conditions, initial values, regularization values, etc. The input data may be used by the system to construct quantum circuits, in particular quantum feature maps and/or parametrized quantum circuits, and to classically calculate values, e.g. sequences of pulses, which may be used to initialize and control qubit operations according to the quantum circuit. To that end, the classical computer may include a quantum circuit generator **1307.** The input data may be used by the system to classically calculate values, e.g. parameter settings, which may be used to initialize the quantum circuit that is implemented on the quantum processor. Similarly, output data may include loss function values, sampling results, correlator operator expectation values, optimisation convergence results, optimized quantum circuit parameters and hyperparameters, and other classical data.

Each of the one or more quantum processors may comprise a set of controllable quantum processing elements, e.g. a set of controllable two-level systems referred to as qubits. The two levels are $|0\rangle$ and $|1\rangle$ and the wave function of a $N$-qubit quantum processor may be regarded as a complex-valued superposition of $2^N$ of these (distinct) basis states. The embodiments in this application however are not limited to qubits but may include any multi-level quantum processing elements, e.g. qutrits, that is suitable for performing quantum computation. Examples of such quantum processors include noisy intermediate-scale quantum (NISQ) computing devices and fault tolerant quantum computing (FTQC) devices.

The quantum processor may be configured to execute a quantum algorithm in accordance with the gate operations of a quantum circuit. The quantum processor may be implemented as a gate-based qubit quantum device, which allows initialization of the qubits into an initial state, interactions between the qubits by sequentially applying quantum gates between different qubits and subsequent measurement of the qubits' states. To that end, the input devices may be configured to configure the quantum processor in an initial state and to control gates that realize interactions between the qubits. Similarly, the output devices may include readout circuitry for readout of the qubits which may be used to determine a measure of the energy associated with the expectation value of the Hamiltonian of the system taken over the prepared state.

Furthermore, the one or more quantum processors may comprise a set of continuous variable systems, such as optical or photonic quantum computers. Furthermore, the quantum processor may comprise a Gaussian Boson Sampling device as described above with reference to **Fig. 8C** or any of the other hardware described above with reference to **Fig. 8A-E.**

In some embodiments, the first data processor system may be implemented as a software program for simulating a quantum computer system **1304** comprising a quantum processor system **1308**. Hence, in that case, the software program may be a classical software program that runs a classical computer **1306** so that quantum algorithms can be developed, executed and tested on a classical computer without requiring access to a hardware implementation of the quantum processor system.

**Fig. 13B** is a block diagram illustrating an exemplary classical data processing system described in this disclosure, for example classical computer **1306**. Classical data processing system **1320** may include at least one processor **1322** coupled to memory elements **1324** through a system bus **1326**. As such, the data processing system may store program code within memory elements **1324**. Further, processor **1322** may execute the program code accessed from memory elements **1324** via system bus **1326**. In one aspect, data processing system may be implemented as a computer that is suitable for storing and/or executing program code. It should be appreciated, however, that data processing system **1320** may be implemented in the form of any system including a processor and memory that is capable of performing the functions described within this specification.

Memory elements **1324** may include one or more physical memory devices such as, for example, local memory **1328** and one or more bulk storage devices **1330**. Local memory may refer to random access memory or other non-persistent memory device(s) generally used during actual execution of the program code. A bulk storage device may be implemented as a hard drive or other persistent data storage device. The classical data processing system **1320** may also include one or more cache memories (not shown) that provide temporary storage of at least some program code in order to reduce the number of times program code must be retrieved from bulk storage device **1330** during execution.

Input/output (I/O) devices depicted as key device **1332** and output device **1334** optionally can be coupled to the data processing system. Examples of key device may include, but are not limited to, for example, a keyboard, a pointing device such as a mouse, or the like. Examples of output device may include, but are not limited to, for example, a monitor or display, speakers, or the like. Key device and/or output device may be coupled to data processing system either directly or through intervening I/O controllers. A network adapter **1336** may also be coupled to data processing system to enable it to become coupled to other systems, computer systems, remote network devices, and/or remote storage devices through intervening private or public networks. The network adapter may comprise a data receiver for receiving data that is transmitted by said systems, devices and/or networks to said data and a data transmitter for transmitting data to said systems, devices and/or networks. Operation modems, cable operation modems, and Ethernet cards are examples of different types of network adapter that may be used with classical data processing system **1320.**

As pictured in **FIG. 13B**, memory elements **1324** may store an application **1338**. It should be appreciated that classical data processing system **1320** may further execute an operating system (not shown) that can facilitate execution of the application. Application, being implemented in the form of executable program code, can be executed by classical data processing system **1320**, e.g., by processor **1322**. Responsive to executing application, data processing system may be configured to perform one or more operations to be described herein in further detail.

In one aspect, for example, classical data processing system **1320** may represent a client data processing system. In that case, application **1338** may represent a client application that, when executed, configures classical data processing system **1320** to perform the various functions described herein with reference to a "client". Examples of a client can include, but are not limited to, a personal computer, a portable computer, a mobile phone, or the like.

In another aspect, data processing system may represent a server. For example, data processing system may represent an (HTTP) server in which case application **1338**, when executed, may configure data processing system to perform (HTTP) server operations. In another aspect, data processing system may represent a module, unit or function as referred to in this specification.

The terminology used herein is for the purpose of describing particular embodiments only and is not intended to be limiting of the disclosure. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present disclosure has been presented for purposes of illustration and description, but is not intended to be exhaustive or limited to the embodiments in the form disclosed. Many modifications and variations will be apparent to those of ordinary skill in the art without departing from the scope and spirit of the invention. The embodiments were chosen and described in order to best explain the principles and the practical application, and to enable others of ordinary skill in the art to understand the various embodiments with various modifications as are suited to the particular use contemplated.

## Claims

1. Method for determining a solution for an optimisation problem using a hybrid computer system, the hybrid computer system comprising a quantum computer system and a classical computer system, the method comprising:

   receiving or determining, by the classical computer system, a description of the optimisation problem, the description comprising a set of training data or enabling the classical computer system to determine the set of training data, the set of training data comprising input variables in an input space and associated observables; receiving or determining, by the classical computer system, one or more quantum circuits, the one or more quantum circuits defining gate operations to be executed by the quantum computer system, the one or more quantum circuits comprising a quantum feature map for encoding a value in the input space to a Hilbert space associated with the quantum computer system and a first parametric quantum circuit parametrised by a set of first parameters;
   determining, by the classical computer system, optimised first parameters for the first parametric quantum circuit, the determination comprising execution, by the quantum computer system, of the gate operations defined by the one or more quantum circuits, acquisition of measurement data associated with an output state of the quantum computer system, and variation of at least one of the set of first parameters based on the measurement data and the set of training data;
   determining, using the quantum computer system, an optimised input value in the input space, the determination comprising execution, by the quantum computer system, of gate operations defined by the first parametric quantum circuit using the optimised first parameters or a derivative thereof, and acquisition of measurement data associated with an output state of the quantum computer system; and
   determining, by the classical computer system, the solution to the optimisation problem based on the optimised input value and/or an output value corresponding to that optimised input value.

2. The method as claimed in claim 1, wherein the input space comprises a continuous subspace, wherein optionally the quantum feature map is differentiable with respect to the input variable, and wherein determining the optimised input value preferably comprises differentiating the one or more quantum circuits with respect to the input variable and executing, by the quantum computer system, gate operations defined by the differentiated one or more quantum circuits.

3. The method as claimed in claim 1 or 2, wherein the input space comprises a discrete subspace, and wherein optionally determining the optimised input value comprises:

   receiving or determining, by the classical computer system, a second parametric quantum circuit parametrised by a set of second parameters;

determining, by the classical computer system, optimised second parameters for the second parametric quantum circuit, the determination comprising execution, by the quantum computer system, of the gate operations defined by the first and second parametric quantum circuits using the optimised first parameter values, acquisition of measurement data associated with an output state of the quantum computer system, and variation of at least one of the set of second parameters based on the measurement data and a loss function; and
determining, by the classical computer system, the optimised input value based on the second parametric quantum circuit using the optimised second parameters.

4. The method as claimed in any one of the preceding claims, wherein the first parametric quantum circuit comprises a variational circuit, e.g. a quantum neural network, and wherein determining optimised first parameters for the first parametric quantum circuit comprises optimising the variational circuit, e.g. training the quantum neural network; and/or,
wherein the first parametric quantum circuit comprises a quantum kernel circuit and wherein determining optimised first parameters for the first parametric quantum circuit comprises optimising kernel coefficients associated with the quantum kernel circuit.

5. The method as claimed in any one of the preceding claims, wherein the optimisation problem comprises a differential equation, and wherein the one or more quantum circuits, when parametrised by the optimised first parameter values, represent a solution to the differential equation.

6. The method as claimed in any one of the preceding claims, wherein determining the optimised first parameter values comprises determining a respective output value for each of plurality of input values, the determination comprising the steps of:

- translating, by the classical computer system, the one or more quantum circuits into first control signals for controlling quantum elements of the quantum computer system, optionally the first control signals including a sequence of pulses;
- determining, by the classical computer system, second control signals for readout of the quantum elements to obtain the measurement data, optionally the second control signals including a read-out pulse;
- controlling, by the classical computer system, the quantum computer system based on the first and second control signals;
- receiving, by the classical computer system, in response to the execution of the one or more quantum circuits, the measurement data; and
- processing, by the classical computer system, the measurement data into the respective output value.

7. Method according to any one of the preceding claims, wherein the quantum computer system includes a gate-based qubit device, a digital/analog quantum device, a neutral-atom-based quantum device, an optical-qubit device and/or a gaussian-boson-sampling device.

8. A hybrid computer system determining a solution for an optimisation problem, the hybrid computer system comprising a quantum computer system and a classical computer system, wherein the system is configured to perform executable operations, the executable operations comprising the steps of:

receiving or determining, by the classical computer system, a description of the optimisation problem, the description comprising a set of training data or enabling the classical computer system to determine the set of training data, the set of training data comprising input variables in an input space and associated observables;
receiving or determining, by the classical computer system, one or more quantum circuits, the one or more quantum circuits defining gate operations to be executed by the quantum computer system, the one or more quantum circuits comprising a quantum feature map for encoding a value in the input space to a Hilbert space associated with the quantum computer system and a first parametric quantum circuit parametrised by a set of first parameters;
determining, by the classical computer system, optimised first parameters for the first parametric quantum circuit, the determination comprising execution, by the quantum computer system, of the gate operations defined by the one or more quantum circuits, acquisition of measurement data associated with an output state of the quantum computer system, and variation of at least one of the set of first parameters based on the measurement data and the set of training data;
determining, using the quantum computer system, an optimised input value in the input space, the determination comprising execution, by the quantum computer system, of gate operations defined by the first parametric

**EP 4 273 760 A1**

quantum circuit using the optimised first parameters or a derivative thereof, and acquisition of measurement data associated with an output state of the quantum computer system; and
determining, by the classical computer system, the solution to the optimisation problem based on the optimised input value and/or an output value corresponding to that optimised input value.

9. The system as claimed in claim 8, wherein the executable operations further comprise any of the methods steps according to claims 2-7.

10. A computer program product comprising software code portions configured for, when run in the memory of a computer, executing the method steps according to any one of claims 1-7.

11. A non-transitory computer-readable storage medium storing at least one software code portion, the software code portion, when executed or processed by a computer, is configured to perform the method as claimed in any one of claims 1-7.

**Fig. 1A**

$f_\theta(x)$  108
110
106
102
104
$y$  $x$

$\theta \Rightarrow \theta_{\text{opt}}$  112 114 116

$f_{\theta_{\text{opt}}}(x)$  118 120
$y$  $x$

$x \Rightarrow x_{\text{opt}}$  122 124 126

$f_{\theta_{\text{opt}}}(x_{\text{opt}})$  128 130  $x_{\text{opt}}$
$y$  $x$

**Fig. 1B**

$f_\theta(x)$  138 132
$\dfrac{df(x)}{dx} = x - 3$
106 140 134
$y$  $x$

$\theta \Rightarrow \theta_{\text{opt}}$  142 144 146

$f_{\theta_{\text{opt}}}(x)$  148
$\dfrac{df(x)}{dx} = x - 3$  150
$y$  $x$

$x \Rightarrow x_{\text{opt}}$  152 154 156

$f_{\theta_{\text{opt}}}(x_{\text{opt}})$  158 160  $x_{\text{opt}}$
$y$  $x$

202 — receive or determine a description of the optimisation problem, the description comprising
a set of training data or enabling the classical computer system to determine the set of training data,
the set of training data $\{(x_i, y_i)\}$ comprising input variables $\{x_i \in \mathcal{X}\}$ in an input space $\mathcal{X}$ and associated observables $\{y_i\}$

204 — receive or determine one or more quantum circuits, the one or more quantum circuits comprising gate operations to be
executed by the quantum computer system, the one or more quantum circuits comprising a quantum feature map $\hat{U}_x$ for
encoding a value $x \in \mathcal{X}$ in the input space to a Hilbert space $\mathcal{H}$ associated with the quantum computer system and a first
parametric quantum circuit $\hat{U}_\theta$ parametrised by a set of first parameters $\theta$

206 — determine an optimised first parameters $\theta_{\mathrm{opt}}$ for the first parametric quantum circuit, the determination comprising
execution, by the quantum computer system, of the gate operations defined by the one or more quantum circuits,
acquisition of measurement data associated with an output state of the quantum computer system, and variation of at
least one of the set of first parameters $\theta$ based on the measurement data and the set of training data $\{(x_i, y_i)\}$

208 — determine an estimate for optimised input value $x_{\mathrm{opt}} \in \mathcal{X}$ in the input space, the determination comprising
execution, by the quantum computer system, of gate operations defined by the first parametric quantum circuit
using the optimised first parameters $\theta_{\mathrm{opt}}$ or a derivative thereof, and
acquisition of measurement data associated with an output state of the quantum computer system

210 — determine the solution to the optimisation problem based on the optimised input value $x_{\mathrm{opt}}$ and/or the output value
corresponding to that optimised input value

**Fig. 2**

**Fig. 3**

302 — **Input data**

pairs input-output values $\{(x_i, f(x_i))\}$

304 — **Train cost circuit** $\hat{\mathcal{U}}_\theta$

- apply feature map $\hat{\mathcal{U}}_x$ encoded by input variables to register
  - apply cost circuit $\hat{\mathcal{U}}_\theta$ to output of feature map
- measure observable, e.g., expectation value or overlap
- compare observable with output value via loss function
  - use classical optimiser to optimise $\theta \rightarrow \theta_{\text{opt}}$

306 — **Freeze cost circuit:** $\hat{\mathcal{U}}_\theta = \hat{\mathcal{U}}_{\theta_{\text{opt}}}$

308 — **Replace feature map** $\hat{\mathcal{U}}_x$ **by extremiser circuit** $\hat{\mathcal{U}}_\varphi$

310 — **Train extremiser circuit** $\hat{\mathcal{U}}_\varphi$

- apply extremiser circuit to initialised register
  - apply optimised cost circuit $\hat{\mathcal{U}}_{\theta_{\text{opt}}}$
- measure observable, e.g., expectation value or overlap
  - use classical optimiser to optimise $\varphi \rightarrow \varphi_{\text{opt}}$

316 — **Optimise input** $x$

- apply circuit differentiation with respect to input
  variable: $\frac{\partial}{\partial x}\hat{\mathcal{U}}_{\theta_{\text{opt}}}\left(\hat{\mathcal{U}}_x(x)\right)$
- measure observable, e.g., expectation value or overlap
  - extremise input using classical extremiser $x \rightarrow x_{\text{opt}}$

312 — **Freeze extremiser circuit:** $\hat{\mathcal{U}}_\varphi = \hat{\mathcal{U}}_{\varphi_{\text{opt}}}$

314 — **Sample extremiser circuit** $\hat{\mathcal{U}}_{\varphi_{\text{opt}}}$

- measure output in appropriate basis
  - map result to input space

**Fig. 4**

402 — **Input data**
- information about unknown function $f$,
e.g. pairs input-output values $(x, f(x))$, differential equation $DE(f, f', x, ...)$
- functional $F(f)$ to be minimised, e.g., $f(x)$, $\|\vec{f}(x)\|, f'(x), ...$

404 — **Train cost circuit $\hat{U}_\theta$**
- apply feature map $\hat{U}_x$ encoded by input variables
- apply cost circuit $\hat{U}_\theta$ to output of feature map
- measure observable, e.g., expectation value or overlap
- construct approximate function $\check{f}$ based on measurement
- use classical optimiser to optimise $\theta \to \theta_{\text{opt}}$

406 — **Freeze cost circuit:** $\hat{U}_\theta = \hat{U}_{\theta_{\text{opt}}}$

408 — **Replace feature map $\hat{U}_x$ by extremiser circuit $\hat{U}_\varphi$**

416

410 — **Train extremiser circuit $\hat{U}_\varphi$**
- apply extremiser circuit to variables in input space
- apply optimised cost circuit $\hat{U}_{\theta_{\text{opt}}}$
- measure observable, e.g., expectation value or overlap
- use classical optimiser to optimise $\varphi \to \varphi_{\text{opt}}$

**Optimise input $x$**
- apply circuit differentiation with respect to input
variable: $\frac{\partial}{\partial x} \hat{U}_{\theta_{\text{opt}}} \left( \hat{U}_x(x) \right)$
- measure observable, e.g., expectation value or overlap
- extremise input using classical extremiser $x \to x_{\text{opt}}$

412 — **Freeze extremiser circuit:** $\hat{U}_\varphi = \hat{U}_{\varphi_{\text{opt}}}$

414 — **Sample extremiser circuit $\hat{U}_{\varphi_{\text{opt}}}$**
- measure output in appropriate basis
- map result to input space

Fig. 5A

Fig. 5I – prior art

**Fig. 5B**

**Fig. 5C**

**Fig. 5D**

Fig. 5E

Fig. 5F

Fig. 5G

Fig. 5H

**Fig. 6A**

$R_Y(\varphi(x))$

604

$|0\rangle$ — $R_Y(x)$

$|0\rangle$ — $R_Y(x)$

$|0\rangle$ — $R_Y(x)$

$|0\rangle$ — $R_Y(x)$

...

602

**Fig. 6B**

$R_Y(\varphi(x) \pm \pi/2)$ — 612

$614_1$

$614_2$

$614_6$

$614_4$

$610_1$ $610_2$ $610_6$ $610_4$

**Fig. 6C**

$R_Y(\varphi(x))$

620

$|0\rangle$ — $R_Y(x)$

$|0\rangle$ — $R_Y(x)$

$|0\rangle$ — $R_Y(x)$

$|0\rangle$ — $R_Y(x)$

$e^{-i\hat{\mathcal{H}}\tau}$

...

EP 4 273 760 A1

$$\mathcal{U}(x) = \quad \boxed{\mathcal{V}_1} \quad \boxed{\mathcal{U}_{\phi_1}(x)} \quad \boxed{\mathcal{V}_2} \quad \boxed{\mathcal{V}_M} \quad \boxed{\mathcal{U}_{\phi_M}(x)}$$

**Fig. 6D**

622     $624_1$    626    $624_2$    $624_M$    628

$$\mathcal{U}_{\vec{\theta},\phi}(x) = \quad \begin{array}{c} R_Y(\phi(x)) \\ 634 \\ R_Z(\theta_1) \\ \cdots \end{array} \quad MS(\theta_2)$$

636  642  638  640  630  632

**Fig. 6E**

Fig. 7A

700

702

704

for $x_i \in \mathcal{X}$: First quantum model

Quantum feature map circuit
$x_i$
706

First parametric quantum circuit
$\boldsymbol{\theta}$
708

Measure $\langle \widehat{\mathcal{M}}(x_i; \boldsymbol{\theta}) \rangle$
710

726

Classical computation of the loss function from $\langle \widehat{\mathcal{M}}(x_i; \boldsymbol{\theta}) \rangle$
712

Optimisation algorithm selects $\boldsymbol{\theta} \rightarrow \boldsymbol{\theta}'$
714

728

Second quantum model

Second parametric quantum circuit
$\boldsymbol{\varphi}$
716

Optimised first parametric quantum circuit
$\boldsymbol{\theta}_{\text{opt}}$
718

Measure $\langle \widehat{\mathcal{M}}(\boldsymbol{\varphi}) \rangle$
720

730

Classical computation of target function from $\langle \widehat{\mathcal{M}}(\boldsymbol{\varphi}) \rangle$
722

Optimisation algorithm selects $\boldsymbol{\varphi} \rightarrow \boldsymbol{\varphi}'$
724

Fig. 7B

740

704

742 $|0\rangle$ $|0\rangle$ $|0\rangle$ ... $|0\rangle$

744

748

750

752

746

754

$|0\rangle$

56

**Fig. 8A**

EP 4 273 760 A1

**Fig. 8B**

**Fig. 8E**

**Fig. 8C**

EP 4 273 760 A1

(b) Analog processing

$$i\hbar\frac{d|\psi\rangle}{dt} = \mathcal{H}|\psi\rangle$$

846

842

(a) Digital processing

838

$H$  $P(\frac{\pi}{2})$  $H$  $P(\frac{\pi}{2})$  $H$

$H$  $P(\frac{\pi}{4})$

$P(\frac{\pi}{2})$

840

$$\mathcal{H}(t) = \frac{\hbar}{2}\Omega(t)\sum_j \sigma_j^x - \hbar\,\delta(t)\sum_j n_j + \sum_{i\neq j}\frac{C_6}{r_{ij}^6}n_i n_j$$

844

(c) Analog – digital processing

$846_1$ digital    $846_2$ digital    $846_3$ digital

analog $848_1$

analog $848_2$

$|0\rangle$

Fig. 8D

Fig. 9

...

Fig. 10A

Fig. 10B

Fig. 10C

Fig. 11D

Fig. 11C

Fig. 11B

Fig. 11A

Fig. 12D

Fig. 12C

Fig. 12B

Fig. 12A

EP 4 273 760 A1

1312

1302

quantum computer

| quantum processor 1308 | control and interface 1310 |

classical computer

quantum circuit generator 1307

1306

1304

**Fig. 13A**

1314

1306

| 1332 | 1334 |

1336

1326

1322

| 1328 | |
| 1338 | 1330 |

1324

**Fig. 13B**

Europäisches
Patentamt

European
Patent Office

Office européen
des brevets

# EUROPEAN SEARCH REPORT

**Application Number**

EP 22 17 5562

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | OLEKSANDR KYRIIENKO ET AL: "Solving nonlinear differential equations with differentiable quantum circuits", ARXIV.ORG, CORNELL UNIVERSITY LIBRARY, 201 OLIN LIBRARY CORNELL UNIVERSITY ITHACA, NY 14853, 18 May 2021 (2021-05-18), XP081951791, DOI: 10.1103/PHYSREVA.103.052416 * abstract * * page 1 – page 9 * * page 11 – page 17 * ----- | 1–11 | INV. G06N10/60 |
| A | DIMITRIOS GIANNAKIS ET AL: "Embedding classical dynamics in a quantum computer", ARXIV.ORG, CORNELL UNIVERSITY LIBRARY, 201 OLIN LIBRARY CORNELL UNIVERSITY ITHACA, NY 14853, 15 November 2021 (2021-11-15), XP091086941, * the whole document * ----- | 1–11 | |
| A | Lin Yen Ting ET AL: "Koopman von Neumann mechanics and the Koopman representation: A perspective on solving nonlinear dynamical systems with quantum computers", , 7 February 2022 (2022-02-07), XP055980596, Retrieved from the Internet: URL:https://arxiv.org/pdf/2202.02188.pdf [retrieved on 2022-11-11] * the whole document * ----- | 1–11 | **TECHNICAL FIELDS SEARCHED (IPC)** G06N |

The present search report has been drawn up for all claims

| Place of search | Date of completion of the search | Examiner |
|---|---|---|
| The Hague | 14 November 2022 | Tsakonas, Athanasios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20200394550 A1
- EP 22155513
- EP 2021081737 W
- EP 22160629
- EP 21190216

### Non-patent literature cited in the description

- **PATEL et al.** Extremal learning: extremizing the output of a neural network in regression problems. *arXiv:2102.03626v1*
- **KITAI et al.** Designing metamaterials with quantum annealing and factorization machines. *Physical Review Research,* 2020, vol. 2, 013319